# EUROPEAN PATENT APPLICATION

(11) **EP 4 057 211 A1**
(43) Date of publication of application: **14.09.2022**
(21) Application number: 20884742.6
(22) Date of filing: 02.11.2020
(51) Int. Cl.: G06Q 50/20, G06F 3/01, G06F 3/0481, G09B 15/00, G10G 1/00, G10H 1/00, G10L 25/51

(54) **INFORMATION PROCESSING DEVICE, INFORMATION PROCESSING METHOD, AND PROGRAM**

(30) Priority: 07.11.2019 JP 2019202726; 29.07.2020 JP 2020128670
(71) Applicant: Sony Group Corporation, Tokyo 108-0075 (JP)
(72) Inventor: FURUYA, Shinichi, Tokyo 141-0022 (JP); OKU, Takanori, Tokyo 141-0022 (JP); NISHIOKA, Hayato, Tokyo 141-0022 (JP); HIRANO, Masato, Tokyo 141-0022 (JP); UEMATSU, Yukako, Tokyo 108-0075 (JP); SAKATA, Junichirou, Tokyo 108-0075 (JP)
(74) Representative: MFG Patentanwälte Meyer-Wildhagen Meggle-Freund Gerhard PartG mbB
(86) International application number: PCT/JP2020/041129
(87) International publication number: WO 2021/090817

(57) **Abstract**

Provided is an information processing device including an acquisition unit that acquires subjective evaluation information from a second user about each performance performed by at least part of a body of a first user moving, a learning unit that performs machine learning on a relationship between the each performance and the corresponding subjective evaluation information and generates relationship information between the each performance and the corresponding subjective evaluation information, and a presentation unit that presents feedback information to the second user based on the relationship information.

## Description

### Field

The present disclosure relates to an information processing device, an information processing method, and a program.

### Background

In recent years, various sensors such as a motion sensor and a biological information sensor that can be easily used have been developed. Therefore, attempts have been made to sense various types of information in performance such as playing the piano, and feedback the results to assist acquisition of the performance. For example, the following Patent Literature 1 discloses a device that senses motions of a plurality of persons and performs feedback based on obtained sensing data.

### Citation List

### Patent Literature

Patent Literature 1: JP 2011-87794 A

### Summary

### Technical Problem

The present disclosure proposes an information processing device, an information processing method, and a program capable of assisting effective acquisition of the performance.

### Solution to Problem

According to the present disclosure, an information processing device includes: an acquisition unit that acquires subjective evaluation information from a second user about each performance performed by at least part of a body of a first user moving; a learning unit that performs machine learning on a relationship between the each performance and the corresponding subjective evaluation information and generates relationship information between the each performance and the corresponding subjective evaluation information; and a presentation unit that presents feedback information to the second user based on the relationship information.

Moreover, according to the present disclosure, an information processing method executed by a computer includes: acquiring subjective evaluation information from a second user about each performance performed by at least part of a body of a first user moving; performing machine learning on a relationship between the each performance and the corresponding subjective evaluation information and generating relationship information between the each performance and the corresponding subjective evaluation information; and presenting feedback information to the second user based on the relationship information.

Furthermore, according to the present disclosure, a program causes a computer to implement: a function of acquiring subjective evaluation information from a second user about each performance performed by at least part of a body of a first user moving; a function of performing machine learning on a relationship between the each performance and the corresponding subjective evaluation information and generating relationship information between the each performance and the corresponding subjective evaluation information; and a function of presenting feedback information to the second user based on the relationship information.

### Brief Description of Drawings

FIG. 1 is a diagram illustrating a configuration for realizing proficiency assist according to an embodiment of the present disclosure.
FIG. 2 is an explanatory diagram illustrating a configuration example of an information processing platform 1 according to the embodiment.
FIG. 3 is a block diagram illustrating a configuration of a sensor device 10 according to the embodiment.
FIG. 4 is a block diagram illustrating a configuration of a server 30 according to the embodiment.
FIG. 5 is an explanatory diagram (part 1) for explaining a subjective evaluation information according to the embodiment.
FIG. 6 is an explanatory diagram (part 2) for explaining a subjective evaluation information according to the embodiment.
FIG. 7 is an explanatory diagram for explaining a learning unit 346 according to the embodiment.
FIG. 8 is an explanatory diagram for explaining a calculation unit 347 according to the embodiment.
FIG. 9 is an explanatory diagram for explaining the learning unit 346 according to the embodiment.
FIG. 10 is an explanatory diagram for explaining a comparison unit 350 according to the embodiment.
FIG. 11 is a block diagram illustrating a configuration of a presentation device 70 according to the embodiment.
FIG. 12 is a sequence diagram illustrating an example of an information processing method according to the embodiment.
FIG. 13 is a flowchart in step S200 according to the embodiment.
FIG. 14 is an explanatory diagram (part 1) for explaining an example of a display screen in the presentation device 70 of the first example according to an embodiment of the present disclosure.
FIG. 15 is an explanatory diagram (part 2) for explaining an example of a display screen in the presentation device 70 of the first example according to the embodiment of the present disclosure.
FIG. 16 is an explanatory diagram (part 3) for explaining an example of a display screen in the presentation device 70 of the first example according to the embodiment of the present disclosure.
FIG. 17 is an explanatory diagram (part 4) for explaining an example of a display screen in the presentation device 70 of the first example according to the embodiment of the present disclosure.
FIG. 18 is a diagram illustrating an example of a page configuration of the entire mobile application according to the embodiment.
FIG. 19 is a diagram illustrating an example of a screen for recommending a practice method (performing method) according to the embodiment.
FIG. 20 is a diagram illustrating an example of a screen for explaining details of a skill according to the embodiment.
FIG. 21 is a diagram illustrating an example of a screen for visualizing a performance state according to the embodiment.
FIG. 22 is a diagram illustrating an example of a measurement result of a physical function according to the embodiment.
FIG. 23 is a diagram (part 1) illustrating an example of a time-series change confirmation screen according to the embodiment.
FIG. 24 is a diagram (part 2) illustrating an example of a time-series change confirmation screen according to the embodiment.
FIG. 25 is a diagram illustrating an example of a screen indicating a time-series change according to the embodiment.
FIG. 26 is a diagram illustrating an example of a page configuration of the entire measurement result of the physical function according to the embodiment.
FIG. 27 is a diagram illustrating an example of a performance data management screen according to the embodiment.
FIG. 28 is a diagram illustrating an example of a performance visualization screen according to the embodiment.
FIG. 29 is a diagram illustrating a flow of presentation of primary information and a performance according to the embodiment.
FIG. 30 is a diagram illustrating an example of a calculation method of primary information and a performance according to the embodiment.
FIG. 31 is a diagram illustrating an example of a list screen of primary information according to the embodiment.
FIG. 32 is a diagram illustrating an example of primary information according to the embodiment.
FIG. 33 is a diagram illustrating an example of a screen indicating selection of sorting of primary information according to the embodiment.
FIG. 34 is a diagram illustrating an example of a screen displaying details of primary information and a performance according to the embodiment.
FIG. 35 is a diagram illustrating an example of visualization of primary information and a performance according to the embodiment.
FIG. 36 is a diagram illustrating an example of viewpoint switching of a moving image according to the embodiment.
FIG. 37 is a diagram illustrating an example of visualization of a performance according to the embodiment.
FIG. 38 is a diagram illustrating an example of recommendation of a practice method (performance method) according to the embodiment.
FIG. 39 is a diagram illustrating an example of a diary screen of a practice diary according to the embodiment.
FIG. 40 is a diagram illustrating an example of a diary screen for the instructor according to the embodiment.
FIG. 41 is a diagram illustrating an example of a diary screen in a case of recording practice time according to the embodiment.
FIG. 42 is a diagram (part 1) illustrating an example of presentation of practice time for each category according to the embodiment.
FIG. 43 is a diagram (part 2) illustrating an example of presentation of practice time for each category according to the embodiment.
FIG. 44 is an explanatory diagram (part 1) for explaining an example of feedback in the second example according to an embodiment of the present disclosure.
FIG. 45 is an explanatory diagram (part 2) for explaining an example of feedback in the second example according to the embodiment of the present disclosure.
FIG. 46 is an explanatory diagram (part 1) for explaining an example of a display screen in a presentation device 70 of the third example according to an embodiment of the present disclosure.
FIG. 47 is an explanatory diagram (part 2) for explaining an example of a display screen in the presentation device 70 of the third example according to the embodiment of the present disclosure.
FIG. 48 is an explanatory diagram (part 3) for explaining an example of a display screen in the presentation device 70 of the third example according to the embodiment of the present disclosure.
FIG. 49 is an explanatory diagram (part 4) for explaining an example of a display screen in the presentation device 70 of the third example according to the embodiment of the present disclosure.
FIG. 50 is an explanatory diagram (part 5) for explaining an example of a display screen in the presentation device 70 of the third example according to the embodiment of the present disclosure.
FIG. 51 is an explanatory diagram (part 6) for explaining an example of a display screen in a presentation device 70 of the third example according to the embodiment of the present disclosure.
FIG. 52 is an explanatory diagram (part 7) for explaining an example of a display screen in the presentation device 70 of the third example according to the embodiment of the present disclosure.
FIG. 53 is an explanatory diagram (part 8) for explaining an example of a display screen in the presentation device 70 of the third example according to the embodiment of the present disclosure.
FIG. 54 is a diagram illustrating an example of a piano using the piano permanent type application according to the embodiment.
FIG. 55 is a view illustrating an example of a performance mode according to the embodiment.
FIG. 56 is a diagram illustrating an example of a measurement mode according to the embodiment.
FIG. 57 is a diagram illustrating an example of visualization in real time according to the embodiment.
FIG. 58 is a diagram illustrating an example in which movements of a touch and a pedal are visualized in real time according to the embodiment.
FIG. 59 is a diagram (part 1) illustrating an example of management of the performance data according to the embodiment.
FIG. 60 is a diagram (part 2) illustrating an example of management of the performance data according to the embodiment.
FIG. 61 is a diagram (part 3) illustrating an example of management of the performance data according to the embodiment.
FIG. 62 is a diagram (part 1) illustrating an example of the performance and feature amount comparison according to the embodiment.
FIG. 63 is a diagram (part 2) illustrating an example of the performance and feature amount comparison according to the embodiment.
FIG. 64 is a diagram illustrating an example of a search for performance data according to the embodiment.
FIG. 65 is a view illustrating an example of a measurement screen in a measurement mode according to the embodiment.
FIG. 66 is a view illustrating an example of an overall image of a piano permanent type sensor system according to the embodiment.
FIG. 67 is a diagram illustrating an example of various sensors of the piano permanent type sensor system according to the embodiment.
FIG. 68 is a diagram illustrating an example of a pedal sensor of the piano permanent type sensor system according to the embodiment.
FIG. 69 is a diagram illustrating an example of details of a pedal sensor according to the embodiment.
FIG. 70 is a diagram (part 1) illustrating an example of an IMU sensor according to the embodiment.
FIG. 71 is a diagram (part 2) illustrating an example of the IMU sensor according to the embodiment.
FIG. 72 is a diagram illustrating an example of a gravity center sensor of the piano permanent type sensor system according to the embodiment.
FIG. 73 is a diagram illustrating a flow of calculation of a change in the center of gravity according to the embodiment.
FIG. 74 is an explanatory diagram illustrating an example of a hardware configuration of an information processing device 900 according to the embodiment.

### Description of Embodiments

Hereinafter, preferred embodiments of the present disclosure will be described in detail with reference to the accompanying drawings. Note that, in the present specification and drawings, redundant description of a component having substantially the same functional configuration is omitted by providing the same reference sign.

Further, in the present specification and drawings, a plurality of components having substantially the same or similar functional configurations may be distinguished by adding different numbers after the same reference numerals. However, when it is not necessary to distinguish each of the plurality of components having substantially the same or similar functional configurations, only the same reference numerals are given. In addition, similar components of different embodiments may be distinguished by adding different alphabets after the same reference numerals. However, when there is no particular need to distinguish between similar components, only the same reference signs are given.

The description will be given in the following order.
1. History until creation of embodiments according to present disclosure
   1.1. Overview of the present disclosure (performance and skill)
2. Embodiments of the present disclosure
   2.1. Overview of information processing platform 1 according to embodiment of the present disclosure
   2.2. Configuration of sensor device 10 according to embodiment of the present disclosure
   2.3. Configuration of server 30 according to embodiment of the present disclosure
   2.4. Configuration of presentation device 70 according to embodiment of the present disclosure
   2.5. Information processing method according to embodiment of the present disclosure
3. Examples according to embodiment of the present disclosure
   3.1. First example
   3.2. Second example
   3.3. Third example
   3.4. Piano permanent type application
   3.5. Piano permanent type sensor system
   3.6. Other application examples
4. Summary
5. Hardware configuration
6. Supplement

### <<1. History until creation of embodiments according to present disclosure>>

First, before describing the embodiments of the present disclosure, the background from which the present inventors created the embodiments of the present disclosure will be described.

In recent years, attempts have been actively made to help a player to learn playing the piano by measuring each motion element and muscle activity of the player playing the piano using the above-described various sensors and feeding back a measurement result to the player. For example, a difference between the measurement result of the motion element during the performance of a trainee and the measurement result (role model) of the motion element during the performance of a player as a role model is fed back. Then, as the difference is fed back, the trainee recognizes the difference between the motion element in the performance of the trainee and the role model, and consciously performs the performance so as to approach the performance of the model, thereby improving the trainee.

In the acquisition of the performance related to artistic expression such as playing the piano, a person who expresses himself/herself (trainee) not only searches for a real performance of so called good performance, but also searches for faithfully and freely expressing an image that he/she has in mind as a performance. In other words, there is a case where a person who expresses himself/herself searches for an ideal expression for the person based on his/her sensibility or aesthetic sense, and desires to learn the expression (In detail, a performance skill of reproducing the expression). Therefore, for example, the person who expresses himself/herself repeats performance while changing the performance method, and searches for and learns an ideal expression while confirming the obtained performance sound and his/her sensibility evoked by the performance sound. When such expression search and acquisition are insufficient, where a mechanical performance with poor expressive power or an improvised performance with different expressions even in a case where the same music is performed may be performed. Therefore, it is important for the person who expresses himself/herself to search for and acquire the expression. Specifically, pursuing expression of a desired image is one of reinforcement learning, which is reward-based learning in terms of brain science, because learning progresses based on the sensibility and aesthetic sense of the person who expresses himself/herself (trainee), and has a favorable influence on fixation of the performance skills and the like.

In the related art, in a device that performs learning assistance by performing feedback using the above-described sensor only feeds back a difference between a role model of a performer who is good at performance and a measurement result of a motion element during the performance of a trainee. Therefore, according to the above device, the trainee can improve his/her performance skill by referring to the feedback and repeating practice, but the trainee may not necessarily learn the expression that he/she wants. In addition, when the trainee can appropriately select a performance similar to the expression desired by the trainee as a model even in the case of using the above apparatus, the possibility that the trainee can learn the expression desired by the trainee is increased. However, since the trainee does not always clearly recognize what kind of sensibility is evoked for what kind of performance, it is difficult to appropriately select a model for expression desired by the trainee.

Therefore, in view of such a situation, the present inventors have created embodiments of the present disclosure described below. In the embodiments of the present disclosure, the past performance selected according to the subjective evaluation by the trainee (second user) about the performance of the past player (first user) is used as a model, and the model is compared with the performance of the trainee to perform feedback to the trainee. The subjective evaluation is, for example, information about sensibility of the user (trainee) such as favorite, passionate, and gentle. Specifically, in the present embodiment, the subjective evaluation information indicating the subjective evaluation is given in advance to the performance preferred by the trainee, the performance of the player who the trainee desires to regard as a role model, or the like, so that the past performance according to the subjective evaluation information newly designated by the trainee can be selected as a model.

More specifically, in the present embodiment, the relationship between the past performance and the subjective evaluation information about it from the trainee is learned in advance, and the past performance according to the subjective evaluation information newly designated by the trainee can be selected as a model based on the data obtained by the learning. As a result, according to the present embodiment, it is possible to feed back to the trainee the difference (deviation) between the measurement result (role model) of the motion element during the past performance selected by the designated subjective evaluation information and the measurement result of the motion element during the performance of the trainee. Therefore, the trainee can effectively learn the expression desired by the trainee. In addition, in the present embodiment, machine learning for learning in advance the relationship between the past performance and the subjective evaluation information about it from the trainee is performed, so that it is possible to accurately grasp what kind of sensibility the trainee tends to recall for what kind of performance. Therefore, according to the present embodiment, it is possible to appropriately select a model for expression desired by the trainee.

Note that, in the embodiments of the present disclosure described below, in the playing that is an example of the performance, for example, a plurality of motion elements that is behaviors of joints and muscles of fingers and arms during playing the piano, or changes (pressure, sound, etc.) caused by the motion elements are sensed by one or a plurality of sensors. Furthermore, in the present embodiment, a multivariate analysis is performed on a plurality of pieces of sensing data (such as time-series data of each motion element) obtained in this manner. Then, the motion element characterizing each performance (playing) can be extracted as quantitative information by the multivariate analysis.

Furthermore, in the present embodiment, for playing as an example of the performance, sensing data related to a large number of players is collected, and the collected sensing data is machine-learned, whereby the relationship between the state of the performance such as an accurate performance and the like, and each motion element can be scientifically generalized. In addition, in the present embodiment, the collected sensing data, the motion element characterizing the performance state, and the coordination or non-coordination (feature amount) of the motion element can be stored in a database (DB).

Furthermore, in the present embodiment, it is also possible to collect in the same manner as described above sensing data from the trainee who receives training, compare the feature amount of the collected sensing data with the feature amount of the sensing data as a model for the trainee, and perform feedback to the trainee based on the comparison result. Specifically, in the present embodiment, in order to make the performance of the trainee similar to the performance as a model, a motion element that is considered to have a high necessity of correction or a high priority of correction is subjected to comparison, and a deviation (difference) or a specific content to be corrected (a body part, a motion amount, or the like) is fed back to the trainee. Note that the necessity of correction and the priority can be determined by the relationship with the performance state, the magnitude of the deviation, and the like. In addition, in the present embodiment, a model can be selected according to attribute information (gender, age, etc.) or the like of the trainee, and by performing such selection, tailor-made feedback according to the attribute or the like of the trainee can be performed.

Hereinafter, details of such an embodiment according to the present disclosure will be sequentially described. Note that, in the following description, as an example of the performance, a case will be described in which the embodiment is applied to instruction (skill acquisition) of a method of playing the piano, which is a listening performance. However, the embodiment of the present disclosure is not limited to being applied to instruction of a method of playing a musical instrument such as a piano. For example, the embodiment can also be applied to a watching performance for a stage play or the like. Furthermore, for example, the embodiment can also be applied to methods of playing other musical instruments, skill acquisition of sports and traditional craft, rehabilitation of motion dysfunction, simulation of endoscopic surgery, and the like.

That is, the performance is performed by at least part of the body of the user moving, and is represented by the motion pattern, the motion speed, the motion accuracy, the amount of motion of the motion element of the user, and the sound, video, and the like as the result caused by the performance.

Furthermore, in the following description, unless otherwise noted, the user means any of a trainee who receives an instruction on how to play the piano, a player whose sensing data is collected in constructing the DB according to the present embodiment, and an operator who uses the information processing platform according to the present embodiment.

In addition, the state of playing the piano means a performance speed (tempo, rhythm) of a player in performance, performance accuracy (accuracy of rhythm or volume of each sound), a volume of a sound generated by the performance (a peak of a sound waveform), a sound echo (an integral value of a sound waveform), a tone color (spectrum), a volume difference or a time difference (so-called "balance" in chord) between sounds in a chord (a plurality of sounds), a difference (range) between a maximum value and a minimum value of each sound parameter, a granularity (resolution) of a parameter of each sound, and the like. Furthermore, since there are parameters (for example, the speed and accuracy of playing) having a trade-off relationship between the plurality of parameters described above, the state of playing the piano may be a ratio of each parameter.

Furthermore, in a case where the embodiments of the present disclosure are applied not only to playing the piano but also to other motions, the state of the performance may be a motion pattern, a motion speed, motion accuracy, an amount of motion (motion power, impulse, workload, etc.) of a motion element performed by the user, a state of a result caused by the performance, or the like. Note that the above-described subjective evaluation information may be included in one of the states of the performance.

Furthermore, in the embodiment described below, the feature amount may be, for example, a degree of coordination representing coordination or non-coordination of featured motion elements, but is not limited thereto. For example, it is assumed that the feature amount includes the maximum speed in the keystroke and timing (time point) at which the maximum speed is reached, the maximum acceleration in the keystroke and timing at which the maximum acceleration is reached, timing at which movement of the keyboard is started, timing at which the keyboard reaches a bottom, and the like when the keyboard is lowered and raised by the keystroke of the player or the like. In addition, the feature amount includes timing at which the keyboard is away from the bottom, timing at which the keyboard returns to the initial position, and difference time therebetween. Furthermore, the feature amount may include a time (a time length of the legato) during which two consecutive sounds are simultaneously emitted, a difference (a time difference) in timing at which the keystroke is performed on a plurality of keyboards to be simultaneously key struck in performance, a difference in timing at which the maximum keystroke speed is reached, a difference between or a ratio between the maximum keystroke speeds, a difference between or a ratio between the maximum accelerations, and the like. In addition, the feature amount may include acceleration when the keyboard arrives at the bottom face, that is, strength of impact due to keyboard collision, a time during which the keyboard collapses the felt portion at the bottommost portion and so-called pressing occurs, and the like. Furthermore, the feature amount may include acceleration at the moment when the keyboard starts to move, that is, strength of impact due to collision between the fingertip and the keyboard, and the like.

In addition, the feature amount of the performance may include a feature amount of a musical instrument and a feature amount of a performance environment. For example, it may be a feature amount that characterizes each piano by using a parameter related to keystroke required to generate a sound (echo or tone color) in a predetermined state. In addition, it may be a feature amount (echo, volume, or the like) of the performance hall itself by using position information or environment information (temperature, atmospheric pressure, humidity, and the like) in which the player conducts performance. In addition, it may be relationship information obtained by learning a relationship between environment information and sound, a feature amount of a performance hall, a feature amount of a piano, or a feature amount of a player.

### <1.1. Overview of the present disclosure (performance and skill)>

Furthermore, before describing the embodiments according to the present disclosure, a further outline according to the present disclosure will be described. Specifically, performance, skills, and the like of playing according to the present disclosure will be described.

In an artistic performance such as playing the piano, various sounds can be made depending on the way or the like the body and the fingers are moved. For example, in playing the piano, faintness of a body, an arm, a hand, fingers, and the like can be important in generating various sounds. In order to produce an ideal sound, performers practice and search every day.

In actual performance, since a sound and a sound may complicatedly overlap with each other such as overtone, it may be difficult to decompose the performance one sound by one sound (each sound) from sound information and evaluate the performance. In order to appropriately perform the evaluation, it is conceivable to separately evaluate information (hereinafter, appropriately set as "primary information") directly related to sound (for example, touch or pedal) and physical information (hereinafter, appropriately set as "secondary information") during the performance. Note that the performance according to the embodiment may include the primary information and the secondary information.

In playing the piano, even with the same keyboard, various tones can be produced by touching. Therefore, even with sound by the same keyboard, there are a light tone color and a heavy tone color. In the primary information, a feature amount of a touch directly related to such a sound is used as an index of the performance. In addition, the feature amount of the touch may include information not directly related to sound. For example, it is information about the posture during the performance. Note that the posture during the performance may affect the persistence of the player. In the secondary information, such physical information (hereinafter, appropriately set as "skill") is used as an index of the performance. For example, it is physical information such as a feature amount not directly related to a sound among the feature amounts of a touch such as a time when pressing the keyboard at the bottom, that is, a posture, and a center-of-gravity movement. Note that the skill is information depending on the context (finger grip) of the performance or the like.

When a musical piece is played at a certain level or higher in a contest or the like, the musical piece may include a set piece (phrase) and a free piece. The set piece is, for example, a song required to be played at a performance level to be achieved at a stage before individual differences, and is often required to be played at a prescribed tempo without any mistake. Furthermore, the free piece is, for example, a song including a phrase or the like as a key of various songs, and a performer can freely add it for performance in many cases. Here, a basic configuration phrase of music in playing the music is referred to as a "basic module". The basic module is, for example, a scale or the like, and is a phrase that is a basic component of various music. For example, by increasing basic modules that can be played at a high level, performers can play various music in a wide variety of expressions. Assuming that music is configured by combining the basic modules, a performance of the music can be described by the basic modules. In addition, a performance of the basic module may be described by skills and functions.

The skill is a technique in performance, and is information depending on a phrase or the like that is a context of the performance as described above. For example, the skill is how to move the fingers at the time of keystroke, a player's habit, and the like. A performer can improve his/her skills by correctly practicing. In addition, the skill is calculated as, for example, a feature amount such as a finger passing speed. On the other hand, the function is information depending on a physical ability (specification) of an individual, such as muscle strength and tactile sense of the fingers, sense of hearing, or the like, and does not depend on a phrase in many cases. The performer can improve the function by daily training. Furthermore, the function is calculated as, for example, a feature amount such as muscle strength of the fingers.

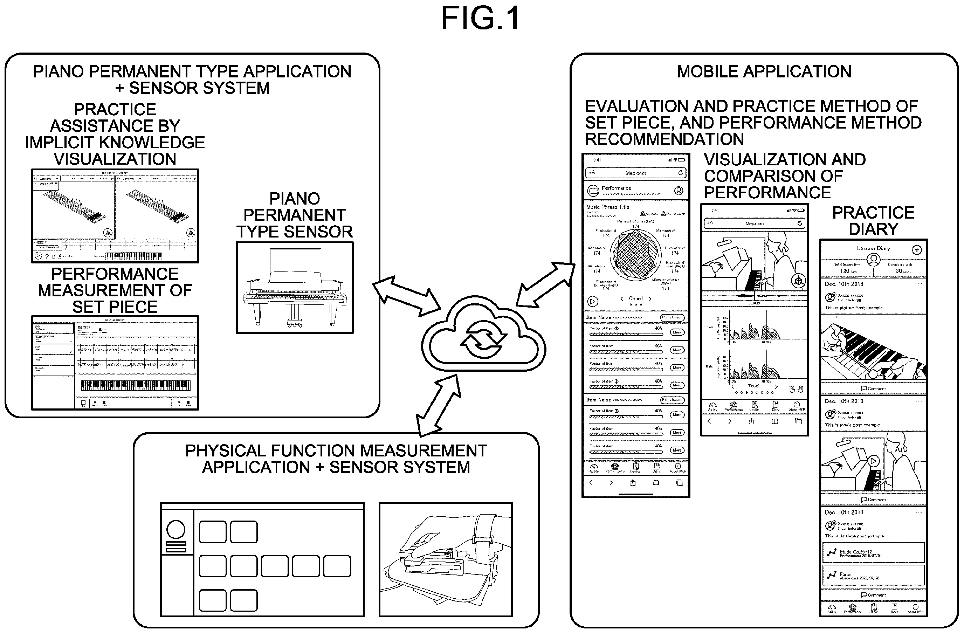

As described above, effective proficiency assistance can be promoted by using two types of physical information of skills and functions. Hereinafter, a configuration for realizing such proficiency assistance will be described. FIG. 1 is a diagram illustrating a configuration for implementing proficiency assistance using physical information according to the present disclosure. In FIG. 1, three configurations of a piano permanent type application (and a sensor system), a physical function measurement application (and a sensor system), and an application for a mobile terminal (mobile application) are included. These may be included in the information processing platform 1 described later. Here, the piano permanent type application is used to measure a performance and skills of a performer. The measurement using the piano permanent type application is performed, for example, at the time of the performance. In addition, the physical function measurement application is used to measure a physical function. The measurement of the physical function is performed in advance, for example, at a time other than the time of the performance. In addition, the mobile application is used to check a performance of playing and an effective practice method (playing method, performance method) using the piano permanent type application and the physical function measurement application. The mobile application assists daily practice of the performer, and for example, it is possible to confirm a result of the measured physical function, compare a result with another person (for example, an instructor of a performer, or a group of performers), and recommend or provide a practice method. Furthermore, the mobile application is an application that can be used by a performer, an instructor of the performer, or the like, and may assist not only the performer but also the instructor of the performer. By connecting these applications via a cloud, for example, performance data, daily practice information, data analysis results, and the like can be transmitted and received to and from others. Note that details of each application will be described later.

### <<2. Embodiments of the present disclosure>>

### <2.1. Overview of information processing platform 1 according to embodiment of the present disclosure>

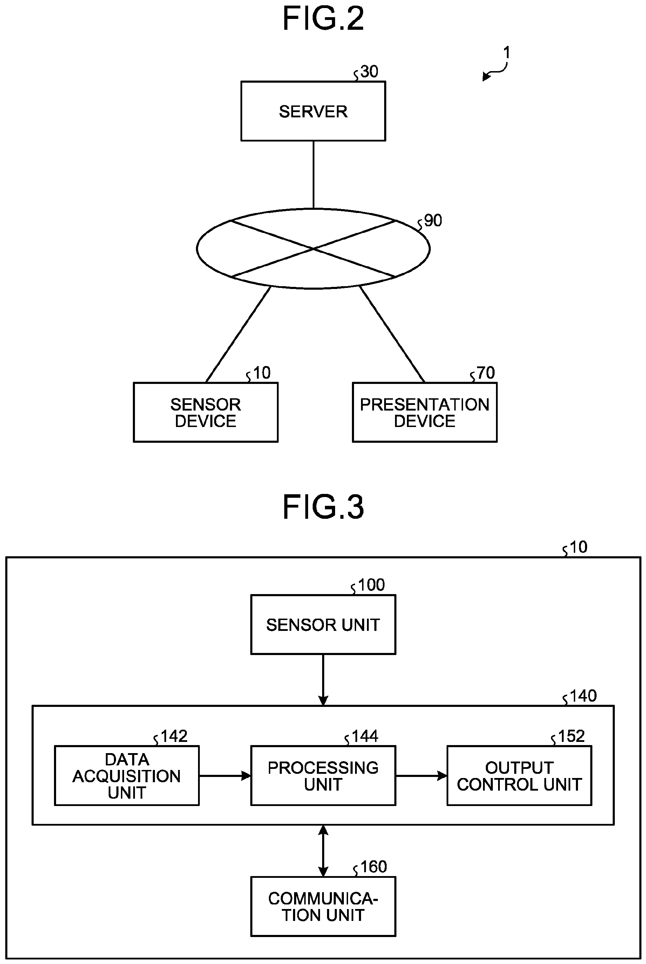

First, a schematic configuration of an information processing platform 1 according to an embodiment of the present disclosure will be described with reference to FIG. 2. FIG. 2 is an explanatory diagram illustrating a configuration example of the information processing platform 1 according to the present embodiment.

As illustrated in FIG. 2, the information processing platform 1 according to the present embodiment includes a sensor device 10, a server 30, and a presentation device 70, which are communicably connected to each other via a network 90. For example, the sensor device 10, the server 30, and the presentation device 70 may be connected to the network 90 via a base station or the like (for example, a base station of a mobile phone, an access point of a wireless LAN, and the like) which is not illustrated. That is, as a communication method used in the network 90, any method can be applied regardless of whether it is wired or wireless. Hereinafter, an outline of each device included in the information processing platform 1 according to the present embodiment will be described.

### (Sensor device 10)

The sensor device 10 can be a sensor that can be worn on part of the body of a trainee or a player, an imaging device that images the trainee or the player, a pressure sensor provided on a piano that the trainee or the player plays, a photo-reflector sensor, a sound collection device (microphone) that collects sound of the piano, or the like. The number and type of the sensor devices 10 are not particularly limited as long as the sensor device acquires sensing data. Note that details of the sensor device 10 will be described later.

### (Server 30)

The server 30 is configured to, for example, by a computer or the like. For example, the server 30 is held by a service provider that provides a service according to the present embodiment, and provides a service to each user or each third party. Specifically, for example, the server 30 collects sensing data regarding a player or a trainee, analyzes the collected sensing data, and performs feedback to the trainee or the like. The details of the server 30 will be described later.

### (Presentation device 70)

The presentation device 70 is a device for providing the feedback information and the application from the server 30 to the trainee or the like, and makes notification of the feedback information by visualizing, force sensing, auralizing, and audiblizing the feedback information during or after the performance of the trainee. For example, presentation device 70 is a device such as a tablet, a smartphone, a laptop personal computer (PC), or a notebook PC. Furthermore, the presentation device 70 may be a wearable device that can be worn on part of the body of the trainee. More specifically, examples of the wearable device include various types of wearable devices such as a head mounted display (HMD) type, an ear device (headphone) type, an anklet type, a bracelet type, a collar type, an eyewear type, a glove type, a pad type, a batch type, and a clothing type. Note that details of the presentation device 70 will be described later.

Note that, in FIG. 2, the information processing platform 1 according to the present embodiment is illustrated as including one sensor device 10 and one presentation device 70, but the present embodiment is not limited thereto. For example, the information processing platform 1 according to the present embodiment may include a plurality of sensor devices 10 and a plurality of presentation devices 70. Furthermore, the information processing platform 1 according to the embodiment may include, for example, another communication device such as a relay device when sensing data is transmitted from the sensor device 10 to the server 30.

### <2.2. Configuration of sensor device 10 according to embodiment of the present disclosure>

Next, a configuration of the sensor device 10 according to the embodiment of the present disclosure will be described with reference to FIG. 3. FIG. 3 is a block diagram illustrating a configuration of the sensor device 10 according to the present embodiment.

As illustrated in FIG. 3, the sensor device 10 according to the present embodiment mainly includes a sensor unit 100, a main control unit 140, and a communication unit 160. Hereinafter, details of each functional unit of the sensor device 10 will be described.

### (Sensor unit 100)

For example, the sensor unit 100 can acquire sensing data indicating the state of each motion element performed by each portion of the body of the user during the performance by being worn on the body of the user (the trainee or the player). For example, the sensor unit 100 is realized by one or a plurality of sensor devices such as an acceleration sensor, an angular velocity sensor, a gyro sensor, a geomagnetic sensor, a position sensor, a vibration sensor, and a bending sensor. The sensor device as described above detects a change in acceleration, angular velocity, or the like given by the motion element to generate a plurality of pieces of sensing data indicating the detected change. Further, the plurality of pieces of sensing data obtained by the sensor unit 100 is output to the main control unit 140 described later. Furthermore, the sensor unit 100 may incorporate a clock mechanism (not illustrated) that grasps an accurate time, and may associate the sensing data with the time at which the sensing data is acquired.

Note that, here, the bending sensor is, for example, a sensor using an element whose resistance value changes nonlinearly according to a bending amount when bent, and can detect a bending angle of a joint by being worn on a joint of a user, for example. In the present embodiment, by wearing the sensor device as described above on each joint or the like such as the arm, the leg, or the torso of the user, it is possible to quantitatively detect the posture (inclination) of the finger or the arm in the space, the movement speed, the bending angle of the joint, or the like.

Further, in the present embodiment, the sensor unit 100 may be an imaging device that images a trainee or a player. For example, an imaging device may image a user to obtain video data as an example of a result caused by the watching performance. Furthermore, for example, by capturing the movement of the user or the like with a high-speed imaging camera (imaging device), the position and movement of the joint or the like of the user can be quantitatively detected. Note that, in the present embodiment, the movement of the eyeball, the size of the pupil, and the like of the user may be detected by the imaging device.

Furthermore, in the present embodiment, the sensor unit 100 may be a nuclear magnetic resonance sensor that detects a state in the oral cavity or the trachea of the trainee or the player, movement of the lips or the tongue, or the like using nuclear magnetic resonance. Specifically, when the trainee or the like conducts performance in a magnetic resonance imaging (MRI) apparatus, the above-described state, movement, or the like can be detected. Specifically, when the embodiments of the present disclosure are applied to methods of playing various wind musical instruments (flute, oboe, clarinet, trumpet, and the like), the MRI is useful because the movement of the lips and the tongue, which is difficult to detect by other methods, can be detected.

Furthermore, the sensor unit 100 may be a position sensor that detects the vertical movement of the keyboard of the piano by the motion element of the trainee or the player. For example, by installing a position sensor below each keyboard, it is possible to detect the vertical movement of each keyboard and detect the movement of the fingers that move each keyboard up and down. Furthermore, the sensor unit 100 may be a pressure sensor that detects the pressure applied to the keyboard of the piano by the motion element of the trainee or the player, and a photo-reflector sensor including a light receiving/emitting sensor that detects the vertical movement of the keyboard by reflection of light.

Furthermore, the sensor unit 100 may be a sound collection device that senses the sound of the piano played by the trainee or the player, which is an example of a result generated by the listening performance. For example, the sensor unit 100 may be a microphone provided in the vicinity of the piano. In this case, a voice uttered by the trainee or the player or a voice uttered by the instructor who teaches the trainee may be collected, and a practice of the trainee or an advice by the instructor may be estimated by voice recognition. Information obtained by voice recognition in this manner may be stored as a study log in the server 30 described later.

Alternatively, the sensor unit 100 detects, via the microphone, a sound when the piano is key struck with various forces by a robot or the like. Furthermore, the server 30 described later associates a parameter (force or the like) related to the keystroke with collected sound data using machine learning or the like, thereby generating relationship information between the parameter and the sound. Then, by using the relationship information, it is possible to acquire a parameter regarding keystroke of the trainee or the like based on a state (for example, echo, tone color, volume, and the like) of a sound newly collected from a performance of the trainee or the like by the microphone.

Furthermore, in the present embodiment, the sensor unit 100 may include a biological information sensor such as a myoelectric sensor, a heart rate sensor, a pulse sensor, a blood flow sensor, a respiratory sensor, an electroencephalogram sensor, a skin temperature sensor, or a skin conductivity sensor. Here, the myoelectric sensor is a sensor that detects a weak electric field generated from muscle fibers constituting a muscle. For example, the myoelectric sensor can quantitatively detect the muscle activity amount of the muscle by measuring the myoelectric potential due to the electrical signal generating in muscle fibers when a muscle such as an arm contracts to propagate to the body surface by a plurality of electrodes worn on an arm or the like of a player or a trainee.

Further, the heart rate sensor is a sensor which detects a heart rate, that is, a heartbeat in the heart, and the pulse sensor is a sensor that detects a pulse that is a pulsation of an artery appearing on a body surface or the like when a change in pressure occurs in an inner wall of artery due to the blood sent to the whole body through the artery by a heartbeat (heart rate) in the heart. The blood flow sensor is a sensor that emits infrared light to the body and detects the amount of blood flow by reflection of the infrared light. Further, the respiratory sensor can be a breathing flow meter that detects changes in breathing volume. The electroencephalogram sensor is a sensor that detects an electroencephalogram by extracting periodic waves by removing noise from the variation of the measured potential difference between the electrodes after a plurality of electrodes is worn on a scalp. The skin temperature sensor is a sensor that detects the body temperature of the player or the trainee, and the skin conductivity sensor is a sensor that detects the skin electrical resistance of the player or the trainee.

Furthermore, the sensor unit 100 may include a position information sensor such as a global positioning system (GPS) receiver that acquires position information of the trainee or the player. Furthermore, the sensor unit 100 may include various other sensors such as an atmospheric pressure sensor, a temperature sensor, and a humidity sensor in order to acquire environment information indicating the state of the environment in which the trainee or the player plays the music.

Furthermore, the sensor unit 100 may include various motion captures, a three-dimensional distance measurement sensor, and the like. For example, the angle of a predetermined joint can be measured by detecting a predetermined landmark position of the human body using a three-dimensional distance measurement sensor. As a result, it is possible to detect a bad posture such as a posture in which the shoulder is higher than that in the exemplary posture or a posture in which the neck is pushed out.

### (Main control unit 140)

The main control unit 140 is provided in the sensor device 10 and can control each block of the sensor device 10. The main control unit 140 is realized by hardware such as a central processing unit (CPU), a read only memory (ROM), and a random access memory (RAM), for example. Furthermore, the main control unit 140 can also function as a data acquisition unit 142, a processing unit 144, and an output control unit 152. Hereinafter, details of these functions of the main control unit 140 according to the present embodiment will be described.

### -Data acquisition unit 142-

The data acquisition unit 142 controls the sensor unit 100 to acquire sensing data output from the sensor unit 100 to output the acquired sensing data to the processing unit 144 described later. In addition, the data acquisition unit 142 may incorporate a clock mechanism (not illustrated) that grasps an accurate time to output, to the processing unit 144, the sensing data in association with the time at which the sensing data is acquired.

### -Processing unit 144-

The processing unit 144 converts the sensing data output from the data acquisition unit 142 described above into a predetermined format that can be transmitted via the network 90 (for example, sensing data that is an analog signal is converted into a digital signal) to output it to the output control unit 152 described later.

### -Output control unit 152-

The output control unit 152 controls the communication unit 160 described later to transmit the sensing data in the predetermined format output from the processing unit 144 described above to the server 30.

### (Communication unit 160)

The communication unit 160 is provided in the sensor device 10, and can transmit and receive information to and from an external device such as the server 30. In other words, the communication unit 160 can be said to be a communication interface having a function of transmitting and receiving data. Note that, the communication unit 160 is realized by a communication device such as a communication antenna, a transmission/reception circuit, and a port.

Note that the sensor device 10 may be a wearable device of various types such as an HMD type, an ear device type, an anklet type, a bracelet type, a collar type, an eyewear type, a pad type, a batch type, a belt type, and a clothing type. Specifically, these wearable devices can be provided on a finger, an arm, a leg, a torso, a head, a toe, or the like of a trainee or a player in order to acquire various sensing data. Furthermore, the sensor device 10 may be a device installed around a trainee or a player, such as an imaging device or a sound collection device.

### <2.3. Configuration of server 30 according to embodiment of the present disclosure>

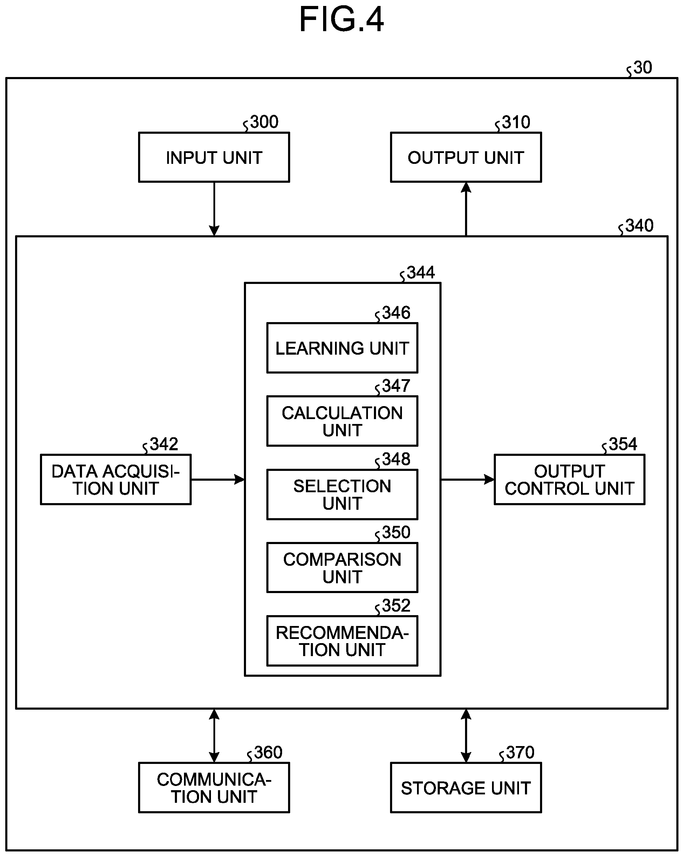

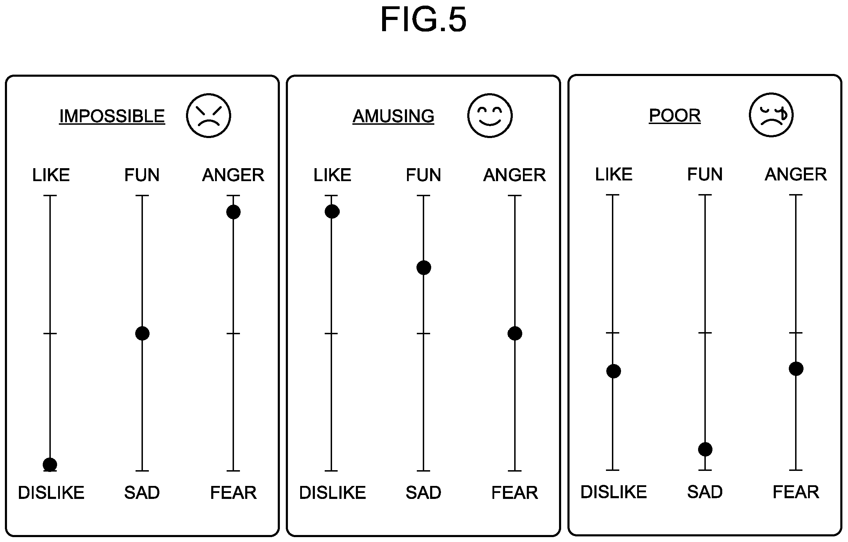

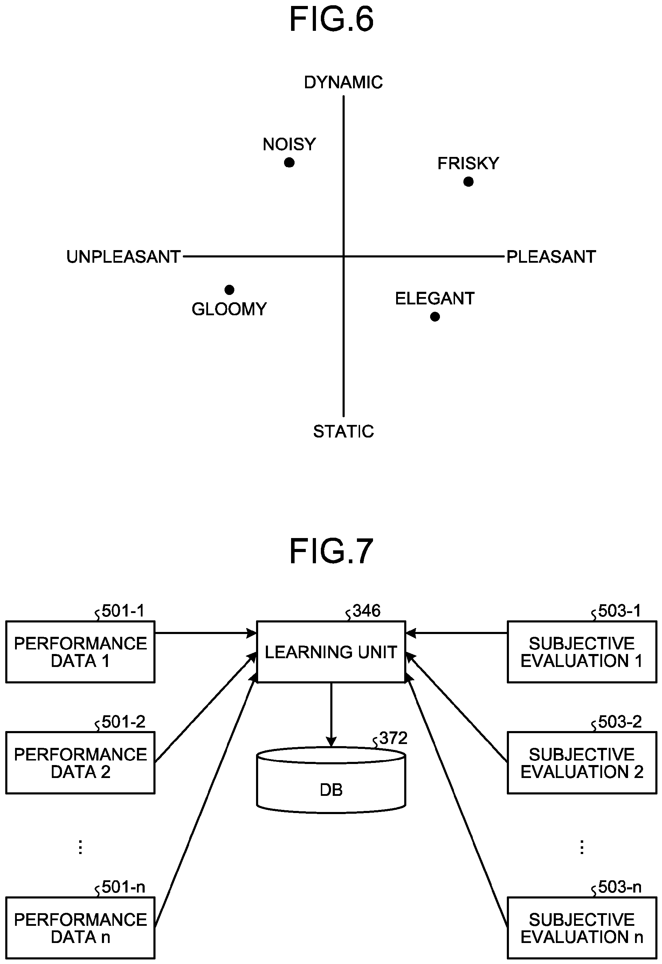

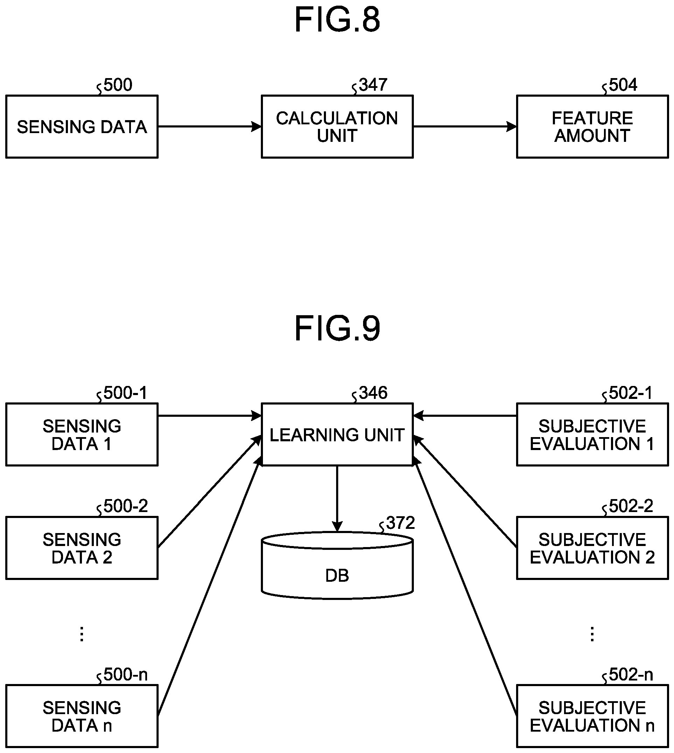

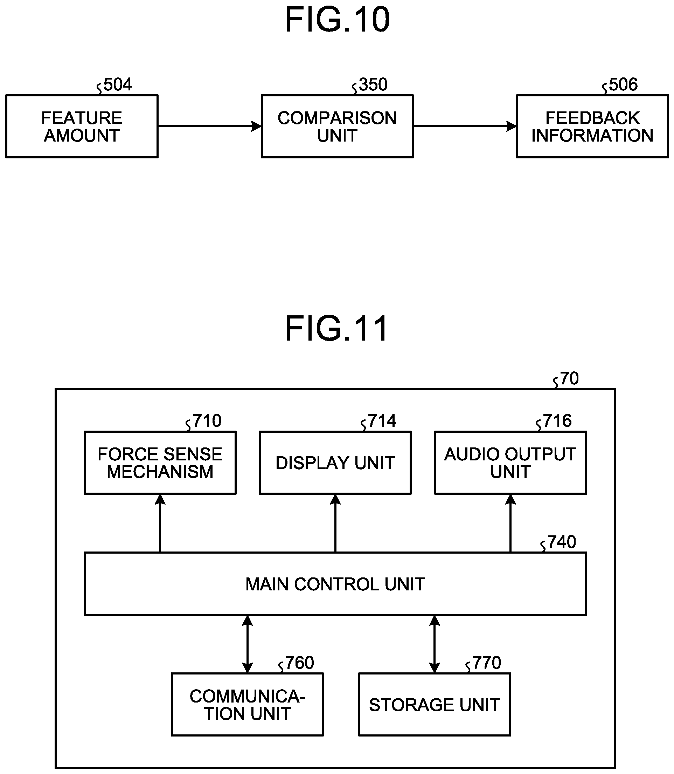

Next, the configuration of the server 30 according to the embodiment of the present disclosure will be described with reference to FIGS. 4 to 10. FIG. 4 is a block diagram illustrating a configuration of the server 30 according to the present embodiment. FIGS. 5 and 6 are explanatory diagrams for explaining subjective evaluation information according to the present embodiment. FIGS. 7 and 9 are explanatory diagrams for explaining the learning unit 346 according to the present embodiment. FIG. 8 is an explanatory diagram for explaining the calculation unit 347 according to the present embodiment. Furthermore, FIG. 10 is an explanatory diagram for explaining the comparison unit 350 according to the present embodiment.

As described above, the server 30 includes, for example, a computer or the like. As illustrated in FIG. 4, the server 30 mainly includes an input unit (acquisition unit) 300, an output unit 310, a main control unit 340, a communication unit 360, and a storage unit 370. Hereinafter, details of each functional unit of the server 30 will be described.

### (Input unit 300)

The input unit 300 receives an input of data and a command to the server 30. More specifically, the input unit 300 is realized by a touch panel, a keyboard, or the like, and can receive an input of attribute information of the trainee or the player.

### (Output unit 310)

The output unit 310 includes, for example, a display, a speaker, a video output terminal, an audio output terminal, and the like to output various types of information by an image, audio, or the like.

### (Main control unit 340)

The main control unit 340 is provided in the server 30, and can control each block of the server 30. The main control unit 340 is realized, for example, by hardware such as a CPU, a ROM, and a RAM. Furthermore, the main control unit 340 can also function as a data acquisition unit (acquisition unit) 342, a processing unit 344, and an output control unit (presentation unit) 354. Hereinafter, details of these functions of the main control unit 340 according to the present embodiment will be described.

### -Data acquisition unit 342-

The data acquisition unit 342 acquires the subjective evaluation information from the trainee (second user) about each performance of the past player (first user) transmitted from the presentation device 70 to be described later to output the acquired subjective evaluation information to the processing unit 344 to be described later. In addition, the data acquisition unit 342 acquires sensing data transmitted from the sensor device 10 described above, stores the acquired sensing data in a DB 372 described later of the storage unit 370 to output the acquired sensing data to the processing unit 344 described later. Specifically, the data acquisition unit 342 acquires, together with the subjective evaluation information, sound data of the performance associated with the subjective evaluation information, and sensing data regarding each motion element, performance state, and the like of the player obtained during the performance.

Specifically, the data acquisition unit 342 acquires subjective evaluation information about sound data obtained from a sound collection device that senses a sound generated by the performance. Alternatively, the data acquisition unit 342 may acquire subjective evaluation information about video data obtained from an imaging device that images an actor, for example, in a performance of watching a play or the like.

As described above, the subjective evaluation information is the user's subjective evaluation, and means, for example, different evaluation depending on a person such as hard or high. Specifically, in the present embodiment, for example, information about sensibility of the user such as favorite, passionate, and gentle may be used. Specifically, in the present embodiment, the trainee is caused to input in advance the subjective evaluation information about, for example, a favorite performance or a past performance (sound data) of a player who the trainee desires to regard as a role model.

For example, as illustrated in FIG. 5, the trainee may be caused to designate the input of the subjective evaluation information with a combination of degrees of predetermined subjective evaluation indexes as a value of the subjective evaluation information via the presentation device 70. In the example illustrated in FIG. 5, first, the trainee is caused to input subjective evaluations of the past performance such as "IMPOSSIBLE", "AMUSING", and "POOR". Furthermore, in this example, the trainee is caused to input three index values indicating the degree of closeness to each of "LIKE AND DISLIKE", "FUN AND SAD", and "ANGER AND FEAR" in each of the subjective evaluations of the past performances such as "IMPOSSIBLE", "AMUSING", and "POOR". That is, in this example, the trainee is caused to input not only the rough subjective evaluation of the past performance but also the index value indicating the degree for the fine items, so that the detailed information about the subjective evaluation by the trainee including the combination of the three index values can be obtained.

Alternatively, in the present embodiment, as illustrated in FIG. 6, the coordinate values in the mapping space of the predetermined subjective evaluation from a predetermined subjective point of view may be designated in advance by the trainee via the presentation device 70. Specifically, in the example illustrated in FIG. 6, "NOISY", "FRISKY", "ELEGANT", "GLOOMY", and the like are mapped in advance as a predetermined subjective point of view by the trainee on the xy plane in which the x axis represents a value determined at a ratio between "PLEASANT AND UNPLEASANT" and the y axis represents a value determined at a ratio between "DYNAMIC AND STATIC". In a case where the trainee designates a predetermined subjective point of view such as "NOISY", "FRISKY", "ELEGANT", or "GLOOMY" to the past performance, the coordinate values on the xy plane of the designated predetermined subjective point of view can be used as the subjective evaluation information about the past performance.

In the present embodiment, for example, the value of the subjective evaluation information as described above about the past performance is designated before the trainee starts the practice or during a break between the practices. Note that the player (first user) of the past performance may be another player other than the trainee, or may be the trainee himself/herself. For example, the trainee may designate subjective evaluation information about the performance of another player who the trainee desires to regard as a role model, or may designate subjective evaluation information about his/her past performance as expected.

Note that the data acquisition unit 342 may acquire sensing data obtained from the biological information sensor worn on the trainee as the sensibility information that is an example of the subjective evaluation information. For example, the biological information sensor is a sensor that senses a heart rate, a pulse, an electroencephalogram, respiration, sweating, myoelectric potential, a skin temperature, a skin electrical resistance, eye motion, a pupil diameter, or the like of the trainee. In this case, the processing unit 344 to be described later may determine the sensibility information from the sensing data, for example, determine the feeling of being excited by an increase in pulse or sweating.

### -Processing unit 344-

The processing unit 344 performs machine learning in advance on the relationship between the past performance and the subjective evaluation information from the trainee (second user), generates relationship information between each past performance and each subjective evaluation information from the trainee to store the performance and the relationship information in the DB 372. Then, the processing unit 344 selects a performance associated with the subjective evaluation information newly designated by the trainee based on the relationship information, compares the selected performance with the performance of the trainee, generates feedback information, and presents the generated feedback information to the trainee.

Specifically, the processing unit 344 functions as a learning unit 346, a calculation unit 347, and a presentation unit (a selection unit 348, a comparison unit 350, a recommendation unit 352) in order to implement these functions described above. Hereinafter, details of these functions of the processing unit 344 according to the present embodiment will be described.

The learning unit 346 performs machine learning in advance on the relationship between the past performance of the player (first user) and the subjective evaluation information from the trainee (second user) to generate relationship information between each past performance and each subjective evaluation information from the trainee. Specifically, as illustrated in FIG. 7, the processing unit 344 inputs performance data 501, which is sound data obtained by sensing a sound generated by the performance, and subjective evaluation information 503 to the learning unit 346 included in the processing unit 344, and causes the learning unit 346 to perform machine learning. Specifically, for example, it is assumed that the processing unit 344 includes a supervised learning unit (learning device) 346 such as a support vector regression or a deep neural network.

The sound data 501 acquired from the sensor device 10 and the subjective evaluation information 503 are input to the learning unit 346 as an input signal and a teacher signal (label), respectively, and the learning unit 346 performs machine learning on the relationship between these pieces of information according to a predetermined rule.

At this time, the input signal and the teacher signal to be input are not in a one-to-one relationship as illustrated in FIG. 7, and a plurality of input signals (performance data 501) and one teacher signal (subjective evaluation information 503) may be input in association with each other, or a plurality of input signals and a plurality of teacher signals may be input in association with each other. Furthermore, the subjective evaluation information 503 that is a teacher signal may be input by being clustered in advance. That is, in the present embodiment, a group of a plurality of performances having a similar tendency may be handled as a data group of the same cluster. Such clustering may be used at the time of selection by the selection unit 348 described later or may be used at the time of classifying the performance of the trainee.

Then, the learning unit 346 may acquire the information about the relationship between the feature amount of each piece of the performance data 501 and the subjective evaluation information 503 by performing multivariate analysis such as multiple regression analysis. The feature amount of the performance data 501 can be obtained, for example, by calculating the similarity between the change patterns of the respective phrases included in the performance data 501 having the same label.

In addition, the learning unit 346 extracts a feature amount characteristic of each subjective evaluation information by performing multivariate analysis such as multiple regression analysis on the relationship between the feature amount and the subjective evaluation information obtained in this manner. As a result, the learning unit 346 can perform machine learning on the relationship information that is the relationship between the subjective evaluation information 503 and the feature amount. Then, the learning unit 346 stores the relationship information and the like obtained by the machine learning in the storage unit 370, thereby constructing the database (DB) 372.

Furthermore, the learning unit 346 can classify the performance data 501 of a player newly acquired from the sensor device 10 based on the relationship information obtained by the machine learning. Specifically, the learning unit 346 can extract a feature amount associated with each piece of the subjective evaluation information 503 from the performance data 501 of the player newly acquired from the sensor device 10, and label the acquired performance data 501 with the subjective evaluation information 503 based on the extracted feature amount and the DB 372 obtained by the machine learning.

The selection unit 348 selects a past performance associated with the subjective evaluation information newly designated by the trainee as the model based on the relationship information. For example, the processing unit 344 causes the trainee to designate the subjective evaluation information via the presentation device 70. In this case, the selection unit 348 selects the performance data 501 associated with the designated subjective evaluation information from the DB 372 and acquires the sensing data regarding the motion element, the performance state, and the like during the performance associated with the selected performance data 501.

Note that, in a case where there is a plurality of pieces of corresponding performance data 501, the selection unit 348 may present the plurality of pieces of corresponding performance data 501 in a list format or the like to the trainee via the presentation device 70, and cause the trainee to select one or a plurality of pieces of the performance data. The selection unit 348 outputs the performance sensing data of the selected performance data 501 to the calculation unit 347 or the learning unit 346.

Furthermore, in the present embodiment, the selection unit 348 may select the past performance associated with the subjective evaluation information newly designated by the trainee according to the attribute information (gender, age, height, weight, frame, muscle strength, flexibility, agility, etc.) of the trainee and the like. By performing such selection, tailor-made feedback can be performed according to the attribute or the like of the trainee.

The calculation unit 347 processes each piece of sensing data output from the data acquisition unit 342 described above, and calculates a feature amount from the sensing data. The calculated feature amount is used to generate feedback information to be fed back to the trainee. Specifically, as illustrated in FIG. 8, the calculation unit 347 applies a predetermined algorithm based on the sensing data transmitted from the selection unit 348 or the sensor device 10 to calculate the feature amount regarding the motion element, the performance state, or the like of one or more selected performances. More specifically, the calculation unit 347 extracts a feature amount characterizing the selected performance by performing multivariate analysis such as the multiple regression analysis on a plurality of pieces of sensing data related to the one or more selected performances. Here, the sensing data indicating the performance state is sensing data including information such as a performance speed, performance accuracy, a volume of a sound generated by the performance, a sound echo, a tone color, a volume difference or a time difference between one sound and one sound in a chord, a difference between a maximum value and a minimum value of each sound parameter, and a granularity of each sound parameter. For example, sensing data related to such a performance state can be acquired by collecting a sound with a microphone provided in the vicinity of the player.

Furthermore, in the present embodiment, for example, as illustrated in FIG. 9, the learning unit 346 may acquire information about the relationship between a sensing data 500 of the selected performance having subjective evaluation information 502 that is the same as or similar to the subjective evaluation information newly designated by the trainee and the corresponding subjective evaluation information 502 by performing the multivariate analysis. Then, in the present embodiment, the feature amount of the selected performance may be acquired based on the acquired information about the relationship. Furthermore, in the present embodiment, database (DB) 372 may be constructed by storing the acquired relationship information in the storage unit 370. Specifically, for example, the feature amount can be obtained by calculating the similarity between the change patterns of the sensing data 500 of each motion element in each selected performance. Furthermore, for example, the change patterns in the three-dimensional space of the sensing data 500 of each motion element in each selected performance is normalized by a predetermined norm and extracted, and the similarity between them is calculated.

Then, as illustrated in FIG. 10, the comparison unit 350 selects, from the DB 372, a feature amount 504 (first feature amount) of the performance that serves as a model for the trainee as a role model, and compares the feature amount with a feature amount (second feature amount) of sensing data in performance of the trainee associated with the feature amount 504. For example, the comparison unit 350 compares the sensing data related to the performance of the trainee the same as that of the sensing data associated with the feature amount 504 with the sensing data associated with the feature amount 504. For example, the comparison unit 350 may calculate a difference (deviation) between the role model and the calculated feature amount 504 or may calculate a matching degree between them. Furthermore, the comparison unit 350 may extract information (body part, motion amount, and the like) about the motion element necessary for setting the calculated difference to 0. Then, the comparison unit 350 generates feedback information 506 for feeding back to the trainee using the above-described comparison result to output the generated feedback information 506 to an output control unit 354.

Note that the comparison unit 350 may extract a difference of the performance data 501 itself instead of the difference in the feature amount between the performance associated with the role model and the performance of the trainee. Furthermore, the feedback information may be a difference itself of the feature amount or the performance data, or may be generated based on the difference. Alternatively, the comparison unit 350 may output, as the feedback information 506, the performance sensing data 500 associated with both of the feature amounts 504 compared with each other to the output control unit 354 with them superimposed and displayed.

Furthermore, in a case where there is a plurality of representative feature amounts 504, the comparison unit 350 may calculate a difference from the corresponding feature amount of the trainee, and select the representative feature amount 504 having a large difference as a role model to be compared as a feature amount that is highly required to be corrected in order for the performance of the trainee to be close to the selected performance. Alternatively, the comparison unit 350 may select, based on the DB 372, the feature amount 504 having the highest relevance to the desired subjective evaluation as the feature amount 504 that is considered to have a greater effect if the performance of the trainee is improved in order to be close to the selected performance as the role model to be compared.

The recommendation unit 352 can refer to association between a difference and a cause of the difference stored in the DB 372 in advance to identify the cause associated with the difference, and include the cause in the feedback information 506. Specifically, the processing unit 344 stores each difference extracted by the comparison unit 350 in advance in association with the cause of the difference in the DB 372. For example, the difference indicating the phenomenon of "SHOULDER RISES" is stored in the DB 372 in association with "UNNECESSARY KEYBOARD PRESSING OCCURS" as the cause. The recommendation unit 352 refers to the DB 372, identifies a cause associated with the difference extracted by the comparison unit 350, and includes the cause in the feedback information 506.

Note that the processing unit 344 may acquire the association between the difference and the cause as described above by an input via the input unit 300 or from another information processing device via the communication unit 360. Alternatively, the processing unit 344 may acquire the association between the difference and the cause by performing machine learning using external big data in which knowledge about the phenomenon and the cause is accumulated. For example, the processing unit 344 may acquire information about the relationship between the feature amount and the cause of the difference by the multivariate analysis. Then, the processing unit 344 extracts a feature amount characteristic of each cause by performing the multivariate analysis of the obtained relationship between the feature amount and the cause. As a result, the processing unit 344 can perform machine learning on the relationship information that is the relationship between the difference and the cause. Then, the processing unit 344 stores the relationship information and the like obtained by the machine learning in the storage unit 370, thereby constructing the DB 372.

Further, the recommendation unit 352 may present a solution for solving the cause. For example, the recommendation unit 352 refers to association between a cause and a solution stored in the DB 372 in advance, and includes the identified solution associated with the cause in the feedback information 506. Specifically, the processing unit 344 stores a cause and a solution in the DB 372 in advance in association with each other. For example, the solution such as "MUSCLE TRAINING" are stored in the DB 372 in association with a cause of "POSTURE DURING THE PERFORMANCE IS BAD". The recommendation unit 352 refers to the DB 372 and includes the identified solution associated with the cause in the feedback information 506.

Also in this case, the processing unit 344 may acquire the association between the cause and the solution by an input via the input unit 300 or from another information processing device that has accumulated knowledge about the cause and the solution via the communication unit 360.

Note that the recommendation unit 352 may present a solution to the trainee among the plurality of trainees connected to the information processing platform 1, for example, in a case where a difference from the model performance exceeds a predetermined range such as top N percent in ascending order.

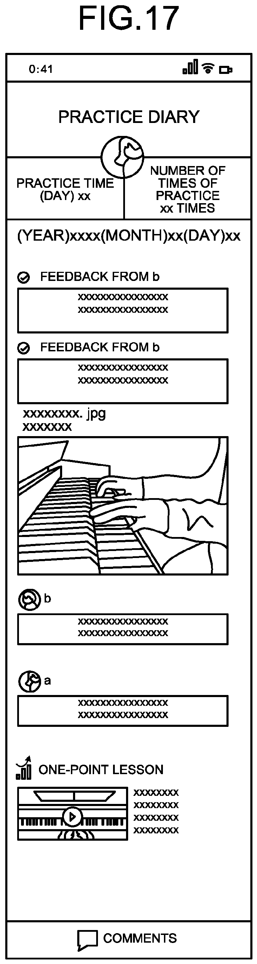

Furthermore, the recommendation unit 352 may switch the content and the presentation method of the feedback information 506 presented to the trainee depending on whether the trainee is playing an instrument. For example, in a case where the sensor device 10 detects that the trainee is in front of the musical instrument, or the like, the recommendation unit 352 may present a solution that can be practiced using the musical instrument, or may recommend taking a break. On the other hand, for example, in a case where it is determined that the trainee is not playing an instrument such as a case where the sensor device 10 detects that the trainee is not in front of the musical instrument, the recommendation unit 352 may present, for example, the feedback information 506 that enables review of the content of a practice of the performance method performed immediately before (see FIG. 17 to be described later).

The output control unit 354 controls the communication unit 360 to be described later to transmit the feedback information 506 output from the processing unit 344 to the presentation device 70. That is, the output control unit 354 can control feedback in the presentation device 70. For example, as will be described later, the output control unit 354 controls a display unit 714 of the presentation device 70 to display a predetermined image. Alternatively, the output control unit 354 controls a force sense mechanism 710 which is a wearable device worn on the body of the trainee to stimulate the sense of touch of the trainee. Alternatively, the output control unit 354 controls an audio output unit 716 to output a predetermined sound.

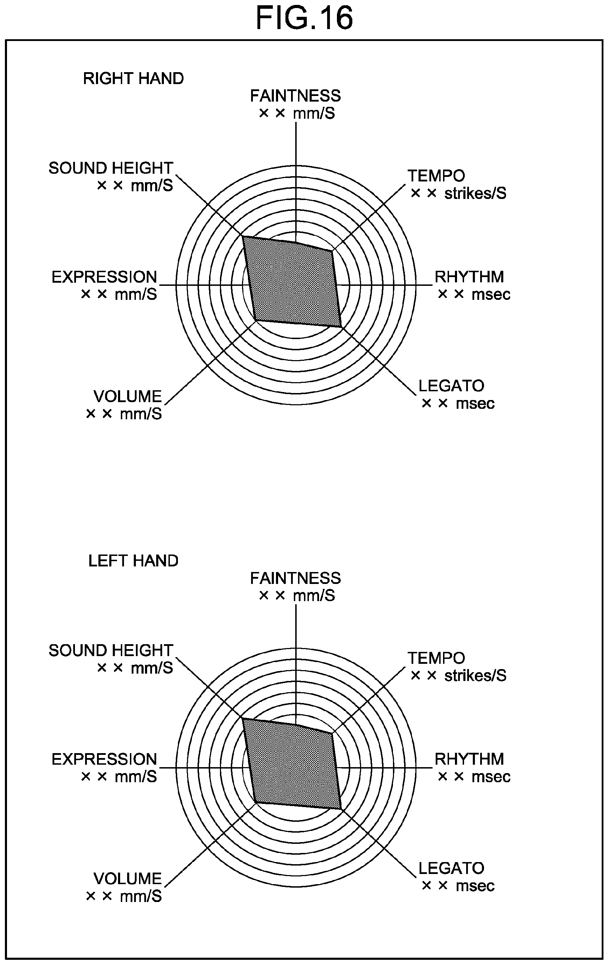

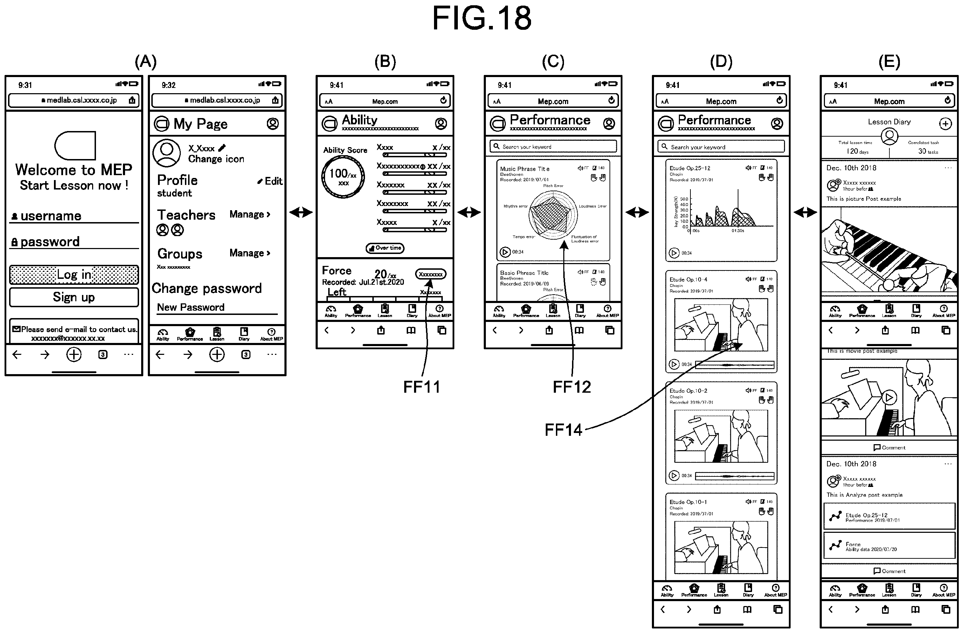

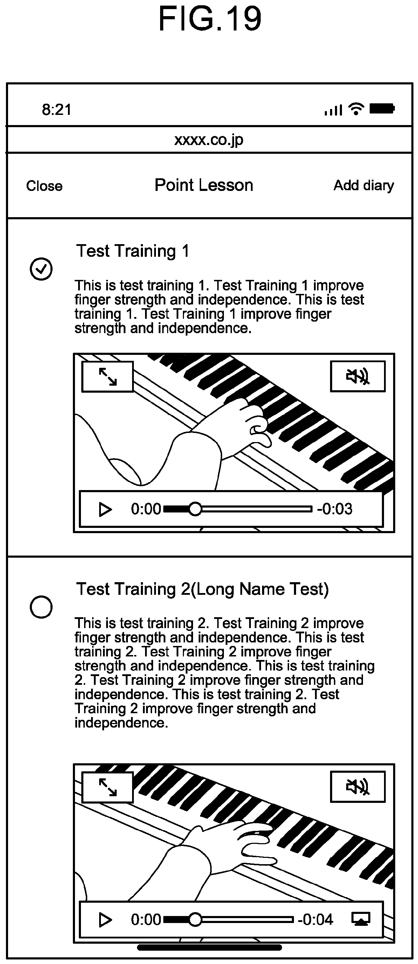

In the present embodiment, the output control unit 354 presents the feedback information by displaying a temporal change in information such as the amount of motion, the motion speed, the motion acceleration in an animation manner, and the motion accuracy in the performance of the trainee (see FIG. 16 to be described later). In the present embodiment, such an animation display enables the trainee to intuitively recognize a plurality of items. Furthermore, for example, the output control unit 354 performs an effect process on animation display according to the difference extracted by the comparison unit 350. Specifically, as the effect process, the output control unit 354 may change the shading process for animation display, change the state of wire frame display in animation display, change the color, luminance, and transparency of animation display, and the like (see FIGS. 18 and 19 to be described later). In the present embodiment, by performing an effect process on such a display, it is possible to allow the trainee to intuitively recognize the difference.

Furthermore, the output control unit 354 is not limited to transmit all the output feedback information 506 output from the processing unit 344 to the presentation device 70. For example, the output control unit 354 may select the feedback information 506 based on attribute information or the like of the trainee to transmit the selected feedback information 506 to the presentation device 70. Specifically, in a case where the amount of information to be fed back to the trainee is large, that may confuse the trainee and hinder acquisition of skills. Therefore, the output control unit 354 limits the amount of information to be fed back according to the attribute or the like of the trainee, so that it is possible to avoid confusion of the trainee.

Furthermore, in the present embodiment, the output control unit 354 may select the feedback information 506 to be transmitted to the presentation device 70 based on a setting in advance. Hereinafter, the selection of the feedback information 506 by the output control unit 354 based on the setting in advance will be described with an example in which the trainee attempts to improve both the task of "PERFORMANCE SPEED" and "KEYSTROKE STRENGTH" using the information processing platform 1 according to the present embodiment. In such a case, if both the feedback information 506 for improving (improvement) the "PERFORMANCE SPEED" and the feedback information 506 for improving (improvement) the "KEYSTROKE STRENGTH" are fed back, the trainee may be confused. Therefore, in the present embodiment, for example, the trainee or the instructor sets in advance which feedback information 506 of the performance speed and the keystroke strength should be preferentially fed back. Then, the output control unit 354 controls the presentation device 70 to preferentially feed back any one of the feedback information 506 based on the setting. By doing so, it is possible to avoid confusion of the trainee. Furthermore, in the present embodiment, the present invention is not limited to feed back any one of feedback information 506, and for example, may feed back a plurality of pieces of feedback information 506 sequentially with a time difference. In such a case, the order of feedback, the time difference, and the like may also be set in advance so as to be suitably fed back to the trainee.

Furthermore, in the present embodiment, as described above, the output control unit 354 may select the feedback information 506 to be transmitted to the presentation device 70 using an algorithm obtained by learning by the learning unit 346 described above, instead of selecting the information based on the attribute information or the pre-setting. For example, in the present embodiment, the content and the information amount of the feedback information 506 fed back to the trainee and the information about the improvement of the performance of the trainee are input to the learning unit 346. Then, the learning unit 346 to which these pieces of information have been input learns the feedback information 506 and the relationship information indicating the relationship between the information amount and the improvement effect in advance. Furthermore, the output control unit 354 selects the feedback information 506 to be transmitted to the presentation device 70 based on the feedback information 506 and the information amount that are estimated to have a higher improvement effect using the relationship information obtained by the learning unit 346. In the present embodiment, by appropriately controlling the feedback information 506 to be fed back in this manner, it is possible to more effectively achieve acquisition of and improvement in the performance of the trainee. Note that, in the present embodiment, not only the content and the information amount of the feedback information 506 but also the feedback timing and the form of feedback at the time of feedback (display, sound, force sense, etc.) may be selected based on the information obtained by learning by the learning unit 346.

Furthermore, the output control unit 354 may select a feedback form (display, sound, force sense, etc.) based on the feedback information 506, the attribute information of the trainee, or the like, and may transmit information in the selected feedback form to the presentation device 70. For example, in a case where the present embodiment is applied to skill acquisition for accurately playing the piano, the output control unit 354 selects a form of feedback by the force sense mechanism 710 (see FIG. 11) that applies a force to part (joint or the like) of the body of the trainee to transmit the motion of the expert who is a role model for the trainee as the feedback information. In addition, in a similar case, the output control unit 354 selects a form of feedback by the display unit 714 (see FIG. 11) that visually transmits, as feedback information, a deviation in motion between the trainee and the expert. Furthermore, which form of feedback the output control unit 354 performs feedback in may be set in advance by the trainee or the like according to his/her preference or the like.

### (Communication unit 360)

The communication unit 360 is provided in the server 30, and can transmit and receive information to and from an external device such as the sensor device 10 or the presentation device 70. Note that the communication unit 360 is realized by a communication device such as a communication antenna, a transmission/reception circuit, or a port.

### (Storage unit 370)

The storage unit 370 is provided in the server 30, and stores a program, information, and the like for the above-described main control unit 340 to execute various types of processing, and information obtained by the processing. Note that the storage unit 370 is realized by, for example, a magnetic recording medium such as a hard disk (HD), a non-volatile memory such as a flash memory, or the like. Furthermore, the storage unit 370 can store the DB 372 described above.

### <2.4. Configuration of the presentation device 70 according to present embodiment>

Next, the configuration of the presentation device 70 according to the embodiment of the present disclosure will be described with reference to FIG. 11. FIG. 11 is a block diagram illustrating a configuration of the presentation device 70 according to the present embodiment.

As described above, the presentation device 70 may be a device such as a smartphone, a tablet, a laptop PC, a notebook PC, or a wearable device. Furthermore, as illustrated in FIG. 11, the presentation device 70 mainly includes the force sense mechanism 710, the display unit 714, the audio output unit (audio output device) 716, a main control unit 740, a communication unit 760, and a storage unit 770. Hereinafter, details of each functional unit of the presentation device 70 will be described.

### (Force sense mechanism 710)

The force sense mechanism 710 is a device that transmits a force sense such as applying a force to part (joint or the like) of the body of the trainee based on the feedback information 506 transmitted from the server 30. For example, the force sense mechanism 710 is a glove type wearable device (wearable device) worn on the hand of the trainee. Specifically, a glove type wearable device 712 is referred to as a finger exoskeleton robot, and applies a force to a finger or a joint of a trainee by operating a plurality of exoskeleton members (not illustrated) by an actuator, and for example, causes the trainee to force sense how much the force in the extending/bending direction of the joint is excessive or insufficient. As a result, according to the glove type wearable device, it is possible to guide the performance of the trainee to be close to the performance of the expert. Furthermore, in the present embodiment, the above-described sensor device 10 may be attached to the force sense mechanism 710. In this case, the force sense mechanism 710 may apply a force or a stimulus to part of the body of the trainee such that the sensor device 10 acquires a target value. Note that, in the present embodiment, the wearable device may be an arm cover-type wearable device to be worn on the arm of the trainee. Alternatively, the force sense mechanism 710 may be, for example, a vibration device that applies a vibration to part of the body of the trainee or a stimulation device, using electric muscle stimulation, that applies stimulation to muscles. That is, in the present embodiment, the force sense mechanism 710 may be any mechanism as long as it can provide a tactile stimulus to part of the body of the trainee to feed back (biofeedback) the feedback information 506 to the trainee in a sensible manner.

Note that the force sense mechanism 710 can also be used when the trainee performs image training. For example, as the feedback information 506, in a case where the motion of the expert as a role model for the trainee is fed back by the force sense mechanism 710, the trainee can perform image training even without the piano or the like. At this time, the performance data 501 associated with the feedback information 506 may be output to the trainee by the audio output unit 716 described later. Furthermore, the feedback by the force sense mechanism 710 may be replayed slowly, and the performance sound output by the audio output unit 716 may be output slowly to further enhance the effect of the image training of the trainee.

### (Display unit 714)

The display unit 714 is a device that displays the feedback information 506 to the user such as the trainee to output the feedback information 506 to the trainee by an image or light, for example. The display unit 714 is realized by a display (image display device), a light emitting element (not illustrated), and the like. Furthermore, the display unit 714 may be realized by a video output terminal or the like.

Specifically, the display unit 714 can display, for example, a difference in the feature amount 504 between the role model and the trainee included in the feedback information 506 in different colors according to the magnitude of the difference. Furthermore, in a case where the difference is minute or the time when the difference occurs is a minute time, it is difficult for the trainee to perceive the difference, so that the display unit 714 may virtually enlarge and display the information of the difference. Specifically, the display unit 714 may visualize the difference by multiplying the difference by a predetermined scalar (enlargement in the spatial direction) or may display the difference in slow motion (enlargement in the temporal direction). Furthermore, the display unit 714 may display the difference between the past feature amount 504 and the current feature amount of the player as described above, and indicate the degree of acquisition of the player.

Furthermore, the display unit 714 may be a projection device capable of displaying an object based on the feedback information 506 as augmented reality (AR) in a real space with the object superimposed on the real space. Such a projection device can be, for example, a smart glass type wearable device (not illustrated) worn in front of the eyes of the trainee. The smart glass type wearable device is provided with a transmissive display, and the transmissive display includes, for example, a half mirror or a transparent light guide plate to hold a virtual image optical system including a transparent light guide unit or the like in front of the eyes of the trainee and display the object inside the virtual image optical system. Furthermore, the projection device may be an HMD worn on the head of the trainee.

### (Audio output unit 716)

The audio output unit 716 is a device that outputs the feedback information 506 to the user such as the trainee by voice (alarm or the like), and may be, for example, a headphone speaker 716 worn on the ear of the trainee or a speaker (not illustrated) provided in the vicinity of the trainee. Furthermore, the audio output unit 716 may be realized by an audio output terminal or the like. For example, when a difference in the feature amount 504 between the role model and the trainee occurs, the audio output unit 716 performs feedback by outputting a specific sound to the trainee who is playing an instrument.

As described above, in the present embodiment, means associated with any suitable sensory modality of the force sense mechanism 710, the display unit 714, and the audio output unit 716 described above can be selected according to the feedback information 506 or the like, and feedback can be performed to the trainee. In addition, in the present embodiment, feedback may be performed by the force sense mechanism 710, the display unit 714, and the audio output unit 716 at the same time, and is not particularly limited. By doing so, it is possible to make the trainee feel the "tips" for acquisition, which is difficult for the trainee to imagine.

### (Main control unit 740)

Main control unit 740 is provided in presentation device 70, and can control each block of the presentation device 70. The main control unit 740 is realized, for example, by hardware such as a CPU, a ROM, and a RAM.

### (Communication unit 760)

The communication unit 760 can transmit and receive information to and from an external device such as the server 30. Note that the communication unit 760 is realized by a communication device such as a communication antenna, a transmission/reception circuit, or a port.

### (Storage unit 770)

The storage unit 770 is provided in the presentation device 70, and stores a program or the like for the above-described main control unit 740 to execute various types of processing, and information obtained by the processing. Note that the storage unit 770 is realized by, for example, a magnetic recording medium such as an HD, a non-volatile memory such as a flash memory, or the like.

Furthermore, the presentation device 70 may include an input unit (not illustrated). The input unit has a function of receiving an input of data and a command to the presentation device 70. More specifically, the input unit is realized by a touch panel, a button, a switch, a key, a keyboard, a microphone, an image sensor, or the like.

Furthermore, in the present embodiment, the function of the sensor unit 100 of the sensor device 10, the force sense mechanism 710 of the presentation device 70, and the like may be integrated to form one wearable device.

### <2.5. Information processing method according to embodiment of the present disclosure>

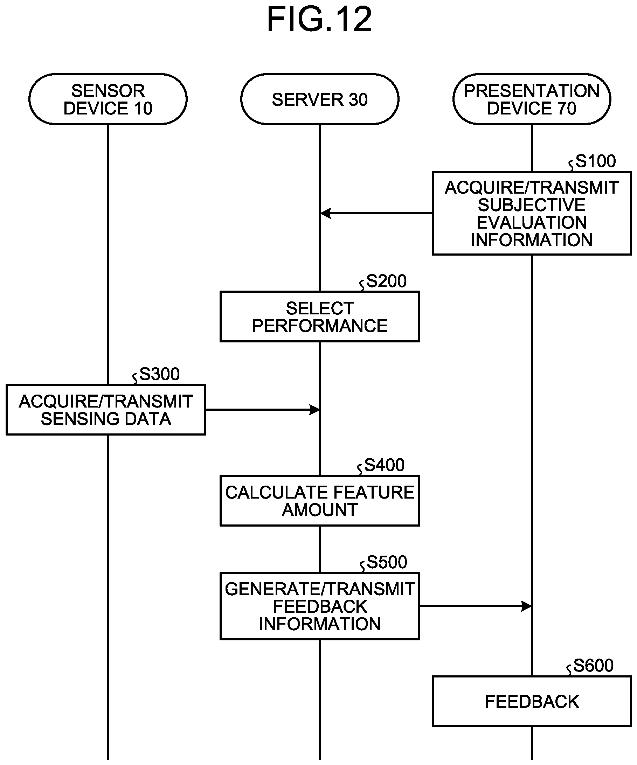

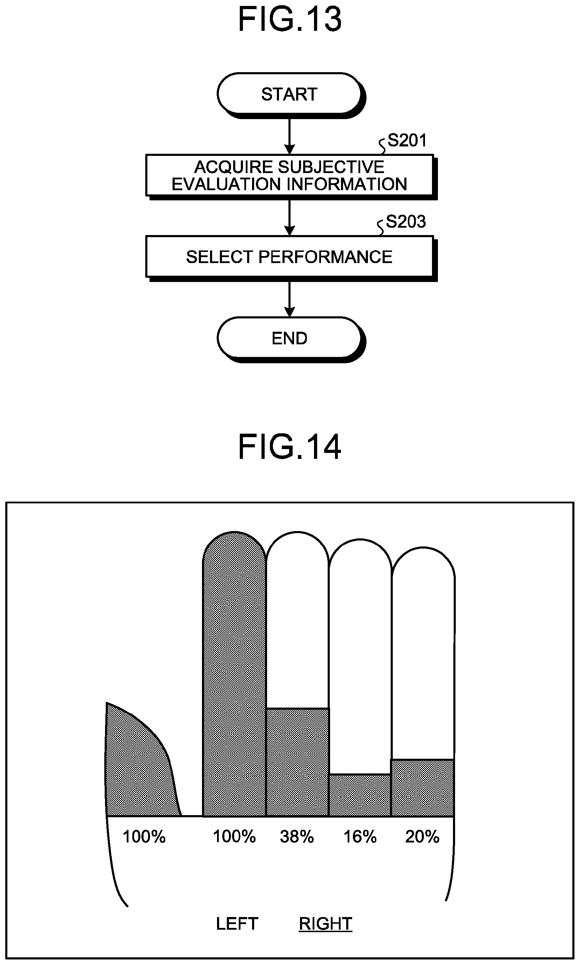

The information processing platform 1 according to the present embodiment and the configurations of the sensor device 10, the server 30, and the presentation device 70 included in the information processing platform 1 have been described in detail above. Next, the information processing method according to the present embodiment will be described with reference to FIG. 12. FIG. 13 is a sequence diagram illustrating an example of the information processing method according to the present embodiment. As illustrated in FIG. 12, the information processing method according to the present embodiment includes a plurality of steps from step S100 to step S600. Hereinafter, details of each step included in the information processing method according to the present embodiment will be described.

First, the presentation device 70 acquires subjective evaluation information such as passionate, gentle, or the like with respect to the performance of the past player (first user) before the performance of the trainee. Furthermore, the presentation device 70 transmits the acquired subjective evaluation information to the server 30 (step S100).

The server 30 acquires the subjective evaluation information 503 from the presentation device 70. The server 30 selects a performance associated with the subjective evaluation information 503 desired by the trainee as a model by applying a predetermined algorithm based on the subjective evaluation information 503 (step S200). Note that details of step S200 will be described later.

In addition, the sensor device 10 is attached in advance to part of the body of the trainee or installed around the trainee before the performance of the trainee. Then, when the trainee starts playing an instrument, the sensor unit 100 of the sensor device 10 senses a change in acceleration, angular velocity, or the like of each motion element that occurs with the motion of the trainee during the performance to acquire a plurality of pieces of sensing data. Further, the sensor device 10 transmits the acquired sensing data to the server 30 (step S300). Note that the sensing data acquired here is preferably acquired in the performance associated with the performance selected in step S200 described above, and is preferably, for example, sensing data when the trainee plays the musical piece the same as that of the performance selected in step S200.

The server 30 acquires the sensing data 500 associated with the performance selected in step S200 described above, and calculates the feature amount 504 of the selected performance by applying a predetermined algorithm based on the sensing data 500 (step S400).

The server 30 compares the feature amount 504 obtained in the above-described step S400 with the feature amount of the sensing data obtained in the above-described step S300 associated with the feature amount 504 to extract a difference to generate the feedback information 506 based on the comparison result. Then, the server 30 transmits the feedback information 506 to the presentation device 70 in order to feed back the feedback information to the trainee (step S500) .

The presentation device 70 gives feedback to the trainee based on the received feedback information 506 (step S600).

Further, details of step S200 in FIG. 13 described above will be described with reference to FIG. 13. FIG. 13 is a flowchart in step S200 according to the present embodiment. As illustrated in FIG. 13, step S200 according to the present embodiment specifically includes a plurality of steps from step S201 to step S203. Hereinafter, details of each step included in step S200 according to the present embodiment will be described.

The server 30 acquires subjective evaluation information from the trainee about each past performance. Furthermore, the server 30 performs machine learning in advance on the relationship between the past performance and the subjective evaluation information from the trainee to generate relationship information between each past performance and each subjective evaluation information from the trainee (step S201).

The server 30 acquires subjective evaluation information that is an image of the performance that is newly designated by the trainee and that the trainee desires to acquire. Furthermore, the server 30 selects the performance data 501 associated with the newly acquired subjective evaluation information based on the relationship information generated in step S201 described above, and uses the performance data as a model for the trainee (step S203).

As described above, according to the embodiment of the present disclosure described above, it is possible to provide an information processing device, an information processing method, and a program capable of effectively assisting acquisition of the performance related to expression desired by a trainee (user).

### <<3. Examples according to embodiment of the present disclosure>>

The details of the information processing method in the embodiment of the present disclosure have been described above. Next, the example of the information processing method according to the present embodiment of the present disclosure will be described more specifically while illustrating a specific example. Note that the following embodiment is merely an example of information processing according to the embodiment of the present disclosure, and the information processing according to the embodiment of the present disclosure is not limited to the following example.

### <3.1. First example>

First, as the first example, the first example in a case where the above-described embodiment of the present disclosure is applied to a piano skill acquisition assistance system will be described with reference to FIGS. 14 to 17. FIGS. 14 to 17 are explanatory diagrams for explaining an example of a display screen in the presentation device 70 of the present embodiment. The skill acquisition assistance system can appropriately assist a trainee to learn a performance method according to a state of or a request from the trainee.

In the present embodiment, the trainee first performs a login process on the skill acquisition assistance system using his/her user ID. The trainee can switch to various menus such as "MEASUREMENT" of his/her own state, "EVALUATION" of the measurement result, and "PRACTICE DIARY" by operating his/her own home screen displayed after the login processing.

In the present embodiment, the "MEASUREMENT" menu is further subdivided into menus for function measurement, skill measurement, body shape measurement, and the like. Here, the function means a biological function such as motion, sense of hearing, tactile sense, sense of sight, memory, or force sense. In addition, the skill means playing techniques such as finger motion speed and independence of each finger.

First, in the function measurement, the trainee selects one of the measurable function lists, whereby the sensor device 10 can start the measurement of the selected function. After the measurement result is presented to the trainee, the trainee can select whether to save the measurement result in the DB 372 as a log.

For example, FIG. 14 illustrates measurement results of touches of respective fingers of the right and left hands of the trainee. In the example illustrated in FIG. 14, when the trainee selects the left hand or the right hand, the display is switched to the selected hand.

In the skill measurement, first, the trainee is caused to select a set piece for measuring specific skills such as scale, arpeggio, and chord, or a free piece desired by the trainee. After the trainee is caused to select a measurement format (sensor) such as sound or video for the selected music, the sensor device 10 can start measurement. The sensing data 500 of the measurement result is stored in the DB 372 as meta information in association with the user ID, the date, the selection operation history, and the like.

In addition, when the trainee selects the measurement of the body shape, for example, the measurement of the body shape of the trainee is started by a 3D scanner or the like.

The "EVALUATION" menu of the measurement result is subdivided into menus such as evaluation of the measurement result of the function, evaluation of the measurement result of the skill, and evaluation of the measurement result of the body shape, associated with the above-described "MEASUREMENT" menu.

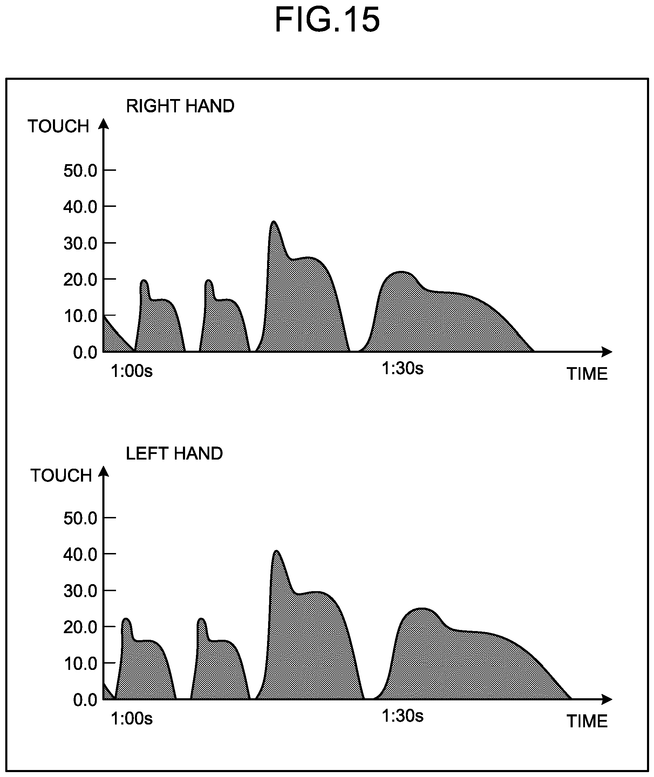

In the evaluation of the measurement result of the function, the measurement result stored as a log is displayed. For example, the time-series change of the measurement result at each time point exemplified in FIG. 14 is displayed. FIG. 15 illustrates the time-series change in the touch of each finger illustrated in FIG. 14. In addition, in the example illustrated in FIG. 16, the radar chart represented by the representative value of each finger at each time point is changed and displayed according to the lapse of time with the indexes such as the height, the expression, and the volume. The radar chart may be displayed in an animation manner in order to illustrate the time-series change of each index. Note that it is also possible to switch the display to a display of the measurement result at each time point illustrated in FIG. 14 by the trainee designating the date and time.

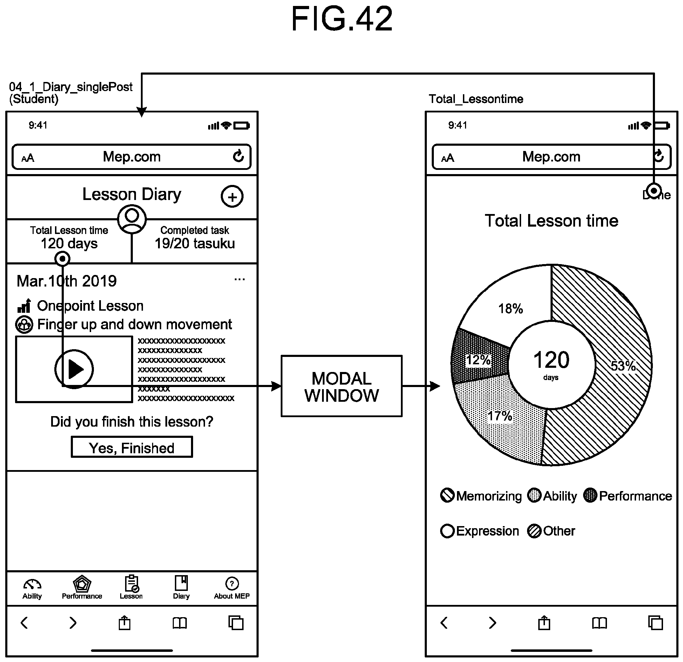

In the evaluation of the skill measurement result, first, the trainee is caused to select meta information (sensing data 500) to be evaluated. For example, the skill acquisition assistance system sorts the meta information in the DB 372 by date, player, song, or the like, displays the list, and causes the trainee to select one of the items. Furthermore, in a case where the trainee instructs the system to replay the selected meta information, the skill acquisition assistance system replays a moving image that displays performance data, each sensing data 500 such as movements of a keyboard and the fingers, a feature amount of the sensing data 500, and the like (see FIG. 42 to be described later).

At the time of replay, the trainee can select, as a model, the sensing data 500 to be compared with the meta information to be evaluated. For example, the trainee can select, as a comparison target, the sensing data 500 of the performance of the player who the trainee desires to regard as a model. Specifically, for example, the skill acquisition assistance system can select the performance sensing data 500 corresponding to the designated subjective evaluation information 503 by causing the trainee to designate the subjective evaluation information 503 of the present embodiment. Alternatively, the skill acquisition assistance system can select the sensing data 500 of the performance of the designated player by causing the trainee to designate the player.

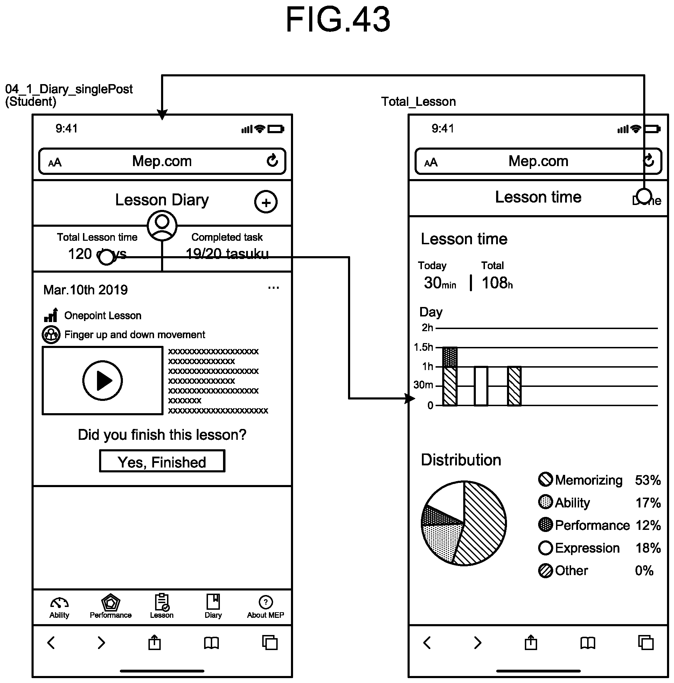

When the sensing data 500 to be compared is selected, the trainee can confirm the feedback information 506 of the comparison result. At this time, the trainee can select, as the feedback information 506, whether to display the sensing data 500 to be evaluated and the sensing data 500 to be compared in an overlapping manner or to display a difference therebetween (see FIG. 43 to be described later). In addition, the trainee can designate to highlight a portion having a large difference therebetween.

Note that the skill acquisition assistance system can also select, as a comparison target, the sensing data 500 of the past performance of the trainee. In this case, for example, it is possible to confirm the current proficiency level as compared with the past performance of the trainee.

The skill acquisition assistance system may further display a cause associated with the difference or recommend a practice method as a solution to the cause as the feedback information 506 to be generated as a result of the comparison. At this time, the skill acquisition assistance system may display, for example, viewpoints of a plurality of tasks such as playing an instrument accurately or playing an instrument fast, and display a practice method corresponding to each of the viewpoints when the trainee performs an operation to select one of the viewpoints. Furthermore, the skill acquisition assistance system may display a plurality of practice methods corresponding to each viewpoint, and in a case where the trainee performs an operation of selecting one of the practice methods, display a detailed explanatory sentence of the practice method or replay a moving image for demonstrating the practice.

In the "PRACTICE DIARY" menu, the content of a practice by the trainee is recorded in the DB 372. For example, the trainee uploads the moving image of the practice performed and the performance data 501 in his/her own timeline to the server 30. At this time, the practice time may be manually input, or may be automatically input from a timer or the like of the system. In addition, the trainee may distinguish and record which category the content of a practice corresponds to. For example, when the practice is classified into categories, such as "search for expression" for searching for expression that is ideal for the trainee, "search for skill" for improving performance skills, "improvement in functions" for training physical functions such as finger motion speed, or "memorization" of musical scores, it is possible to objectively perform the practice later. Furthermore, comments and notes such as reflection points and caution points for the practice may be added.

FIG. 17 illustrates a screen display example of the timeline of the trainee a. As illustrated in FIG. 17, a friend or the instructor b of the trainee a can browse the timeline of the trainee, replay the uploaded performance data, and write a comment. As a result, the skill acquisition assistance system can assist the trainee to efficiently acquire skills. Note that the server 30 can also acquire the above-described subjective evaluation information from the timeline illustrated in FIG. 17 instead of explicit designation by the trainee. For example, the server 30 may acquire the subjective evaluation information by recognizing words in the timeline. Alternatively, the server 30 may acquire predetermined subjective evaluation information defined in advance according to the evaluation such as the number of "LIKE" input by a friend, an instructor, or the like in the timeline.

Next, a page configuration of the entire mobile application will be described. FIG. 18 is a diagram illustrating an example of a page configuration of the entire mobile application. FIG. 18(A) illustrates the login screen of the player and the home screen after the login processing. In FIG. 18, the trainee can switch to various menus such as "PHYSICAL FUNCTION", "PERFORMANCE", and "PRACTICE DIARY" by operating his/her own home screen displayed after the login processing.

In addition, FIG. 18(B) illustrates a confirmation screen of his/her physical function. Here, as an example of the physical function, a confirmation screen including muscle strength, independence, flexibility, agility, and the like of the fingers is displayed. In addition, the confirmation screen in which the evaluation is performed so that the sum of the scores of the respective functions is on a scale of 100 points is displayed. Furthermore, for example, the information processing platform 1 may display a screen for recommending a practice method in response to an operation (for example, a click or a tap) on the item FF11 included in the screen of FIG. 18(B) (see FIG. 19). The item FF11 is a point lesson, and is assumed to be linked to a screen for recommending the practice method. In addition, as an example of the recommendation of the practice method, improvement in muscle strength and independence of the fingers is displayed.

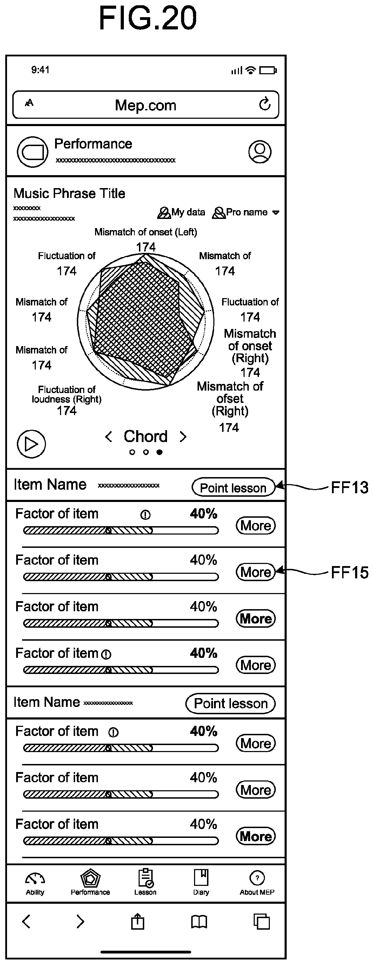

FIG. 18(C) illustrates a list screen of the primary information. Here, the score of each item of the primary information is displayed as a chart. For example, in response to an operation on the item FF12 (chart) included in the screen of FIG. 18(C), the information processing platform 1 may display a screen for explaining detailed skills (see FIG. 20). The item FF12 is a chart illustrating the score of each item of the performance, and here, it is assumed that the item is linked to a screen for explaining detailed skills. Note that, in response to the operation on the item FF13 included in the screen of FIG. 20, the information processing platform 1 may display a screen for recommending a practice method similar to the case where the item FF11 is operated (see FIG. 19). That is, the item FF13 is a point lesson, and is assumed to be linked to a screen for recommending the practice method.

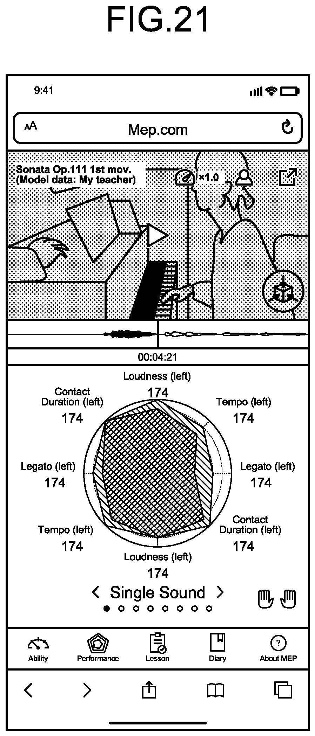

FIG. 18(D) illustrates a performance data management screen. The management screen displays the imaging information in which the performance is displayed in thumbnails. For example, in response to an operation on the item FF14 (imaging information) included in the screen of FIG. 18(D), the information processing platform 1 may display a screen for visualizing the performance state (see FIG. 21). The item FF14 is imaging information of the performance, and is linked to a screen for visualizing the performance state. FIG. 21 illustrates a case where a moving image capable of replaying a performance is attached, and the information processing platform 1 replays the moving image according to an operation on the moving image. Note that, in response to the operation on the item FF15 included in the screen of FIG. 20, the information processing platform 1 may display a screen for visualizing the performance state similar to the case where the item FF14 is operated (see FIG. 21).

FIG. 18(E) illustrates a screen of a practice diary. In FIG. 18(E), photographs, moving images, and the like at the time of the performance are attached. In this way, the mobile application can support the daily practice of the player. Hereinafter, UI operations of various menus will be described. Note that the items FF11 to FF15 are not limited to the case illustrated in FIG. 18, and may be any information displayed at any position as long as the information is displayed on the screen. Note that, the same applies to the item FF to be described later.

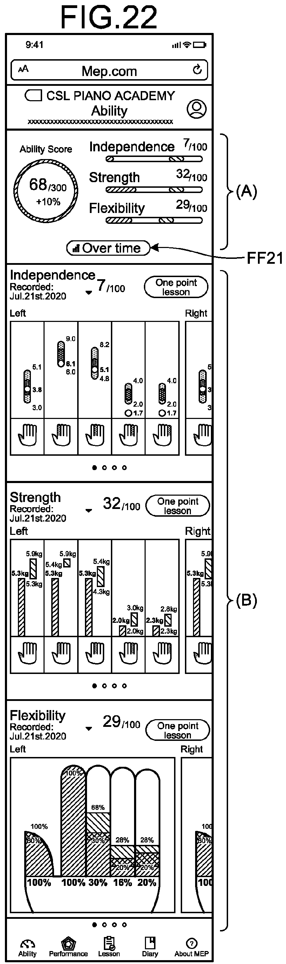

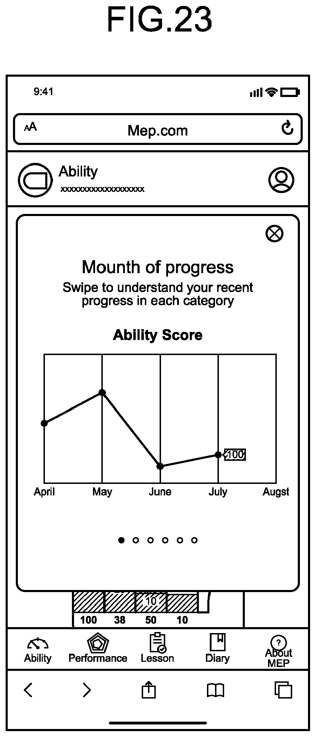

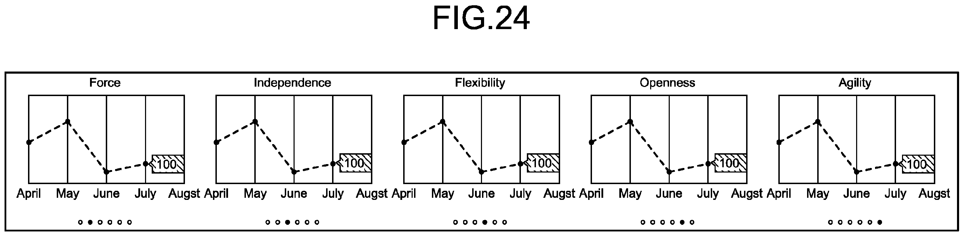

FIG. 22 is a diagram illustrating an example of a measurement result of the physical function. In FIG. 22, the scores of the respective items such as the independence of the fingers, the strength of the fingers, and the flexibility of the fingers of the trainee are displayed, and the total value of the scores of the respective items is displayed as the comprehensive score of the trainee (see FIG. 22(A)). At this time, the score of each item may be converted to a normalized score on a scale of 100 points. In addition, in response to the operation on the item FF21 included in the screen of FIG. 22, the information processing platform 1 may display a confirmation screen of the time-series change (see FIG. 23). FIG. 23 illustrates the time-series change in performance scores on a monthly basis. Furthermore, FIG. 24 is a diagram illustrating an example of the time-series change confirmation screen for each item of the functions displayed in response to the operation of swiping the time-series change confirmation screen of FIG. 23 sideways.

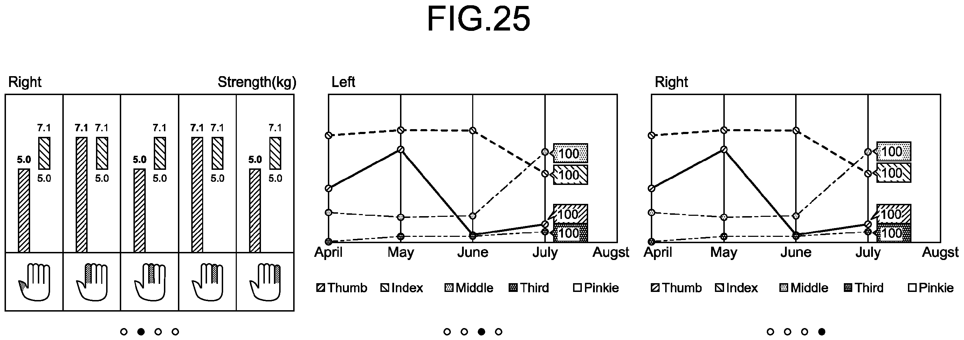

In addition, in FIG. 22, result information for each skill is displayed (see FIG. 22(B)). As illustrated in FIG. 22(B), by displaying the graph for each skill, it is possible to easily distinguish the result information for each skill. Here, the graph is displayed for each skill of muscle strength, independence, and flexibility of the fingers. In addition, scores evaluated on a scale of 100 points for muscle strength, independence, and flexibility of the fingers are displayed. Furthermore, the information processing platform 1 may display a screen indicating a time-series change, for example, in response to an operation of swiping the screen of FIG. 22 sideways (see FIG. 25). In FIG. 25, the time-series change in muscle strength of the fingers in units of months is displayed with each of the left and right hands.

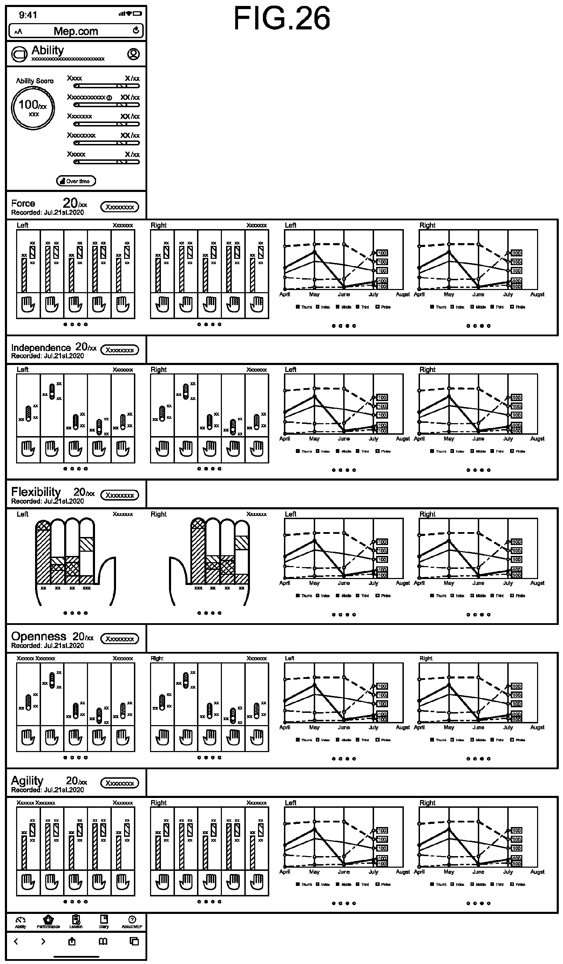

Furthermore, as described above, a score converted on a scale of 100 points may be displayed for each item. For the calculation of the score, for example, the average score of all the fingers may be used. At this time, the information processing platform 1 may calculate the score with the average score of the professional performers as 100 points. As a specific example, the information processing platform 1 may calculate the average score by averaging the scores of all the fingers in each of the items such as the muscle strength, the independence, the agility, and the flexibility of the fingers, or may calculate the average score as one score by performing weighting according to the degree of importance of each finger. Furthermore, the information processing platform 1 may calculate a ratio of an individual's score to an average score of data of a professional performers calculated by a method similar to that of the trainee, thereby performing conversion on a scale of 100 points. Note that FIG. 26 illustrates an example of an overall page configuration displayed on the information processing platform.

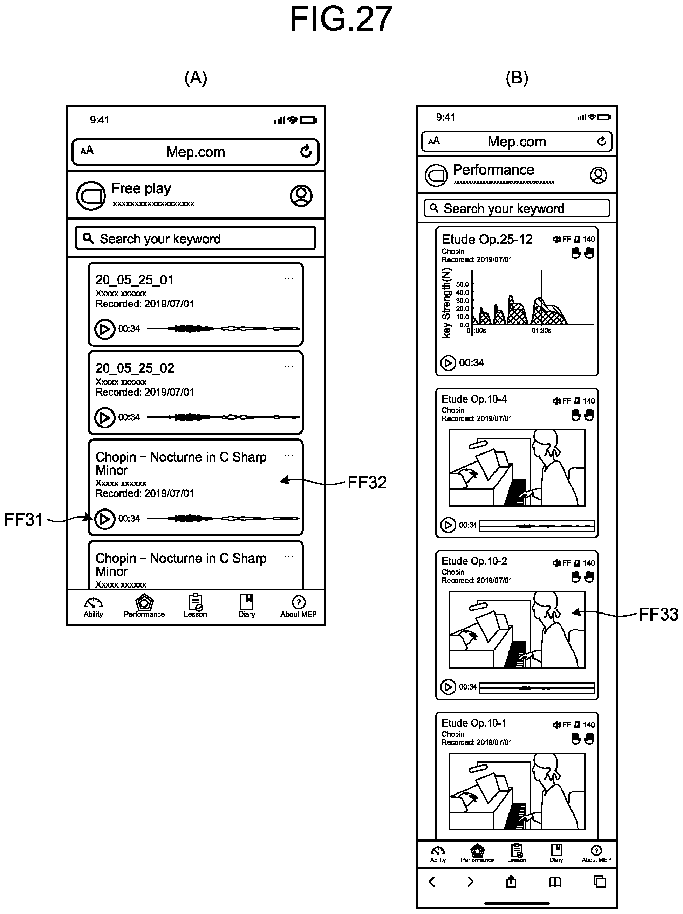

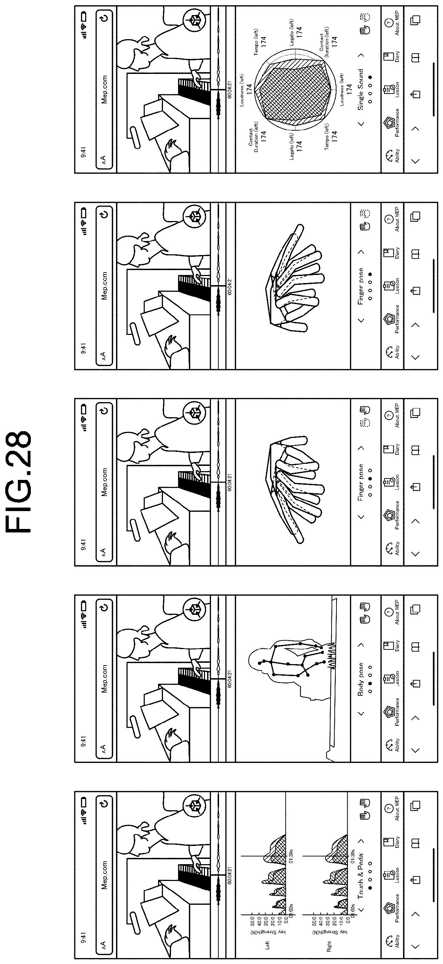

FIG. 27 is a diagram illustrating an example of a performance data management screen. Specifically, a list of the measured performance data is displayed. FIG. 27(A) illustrates a case where performance data is displayed as a sound waveform. In response to an operation on the item FF31 (for example, replay information of "Chopin Nocturn in C Sharp Minor") included in the screen of FIG. 27(A), the information processing platform 1 may enable sound replay. In addition, in a case where the sound is replayed, the waveform of the sound displayed in the drawing is changed and displayed with the replay of the sound. Furthermore, the information processing platform 1 may display a visualization screen of the performance in response to an operation on the item FF32 (for example, the screen of "Chopin Nocturn in C Sharp Minor") included in the screen of FIG. 27(A) (see FIG. 28). For example, a touch visualization screen or the like is displayed. Note that, although FIG. 28 illustrates the visualization of the touch, the pedal may be visualized similarly to the touch. Furthermore, in FIG. 27(A), information such as a performance data name, song information, and performance date and time may be displayed. FIG. 27(B) illustrates a case where the performance data is displayed in thumbnails. In response to the operation on the item FF33 (for example, the thumbnails of "Etude Op.10-2") included in the screen of FIG. 27(B), the information processing platform 1 may display a performance visualization screen as in FIG. 27(A) (see FIG. 28). In this manner, by enabling confirmation not only by an application permanently installed in the piano but also by a mobile application, it may be possible to share the performance with others via a practice diary or the like. In addition, editing of music title and the like may also be performed on this screen.

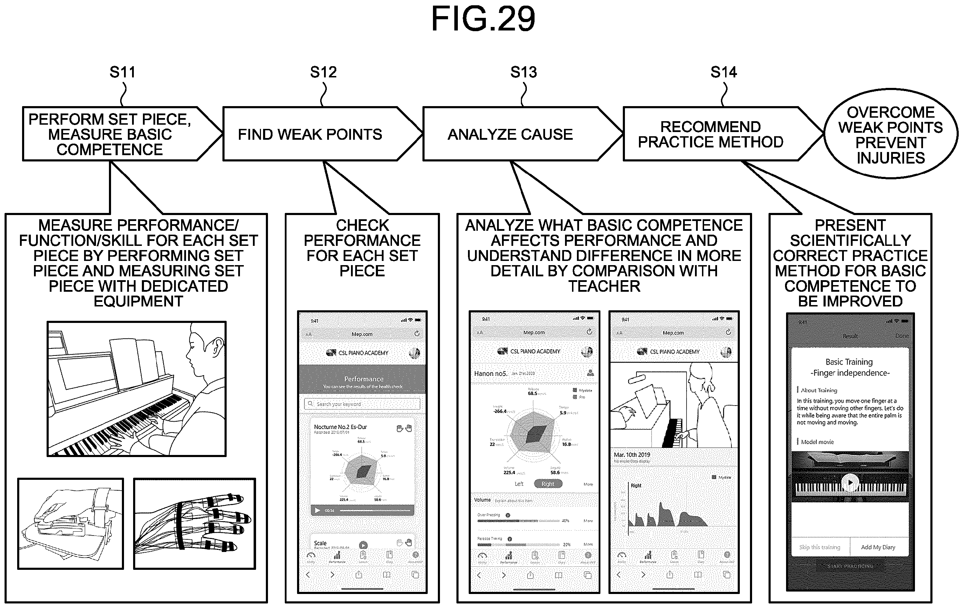

FIG. 29 is a diagram illustrating a flow of presentation of primary information and a performance. First, the information processing platform 1 measures the performance of a set piece or the like of the trainee, thereby measuring primary information and the performance for each set piece (S11). This makes it possible to measure the basic competence of the trainee. Then, the information processing platform 1 presents a list screen of the primary information for each set piece (S12). Since the trainee can confirm the primary information for each set piece, the trainee can appropriately grasp the weak points. In addition, the information processing platform 1 presents the performance result information (S13). For example, the information processing platform 1 presents detailed performance visualization information, model data, and the like. By comparing the performance of the model with the performance of the trainee, the trainee can analyze what basic competence affects the performance. Then, the information processing platform 1 recommends a practice method to the trainee (S14). For example, the information processing platform 1 presents a scientifically correct practice method with respect to the basic competence that the trainee wants to improve. In this way, by visualizing the performance and the details for each song and presenting the cause, the player can grasp his or her own weak points and effectively perform practice.

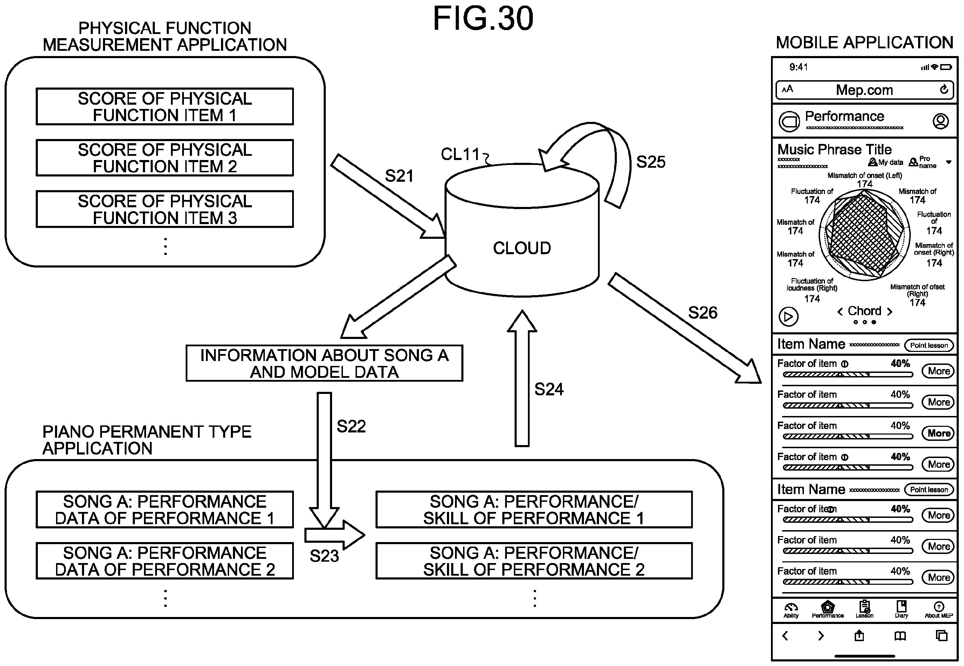

FIG. 30 is a diagram illustrating an example of a method of calculating primary information and a skill. Specifically, a method of calculating the score when the primary information of the trainee is explained with the skill and the function of the trainee is illustrated. The cloud CL11 acquires a score of each item measured by the physical function measurement application (S21). The piano permanent type application acquires the information about a song A played by the trainee and the model data from the cloud CL11 (S22). The piano permanent type application calculates scores of the primary information and the skill of each performance based on a plurality of pieces of performance data of the song A played by the trainee and the information acquired from the cloud CL11 (S23). The cloud CL11 acquires scores of the primary information and the skill of each performance calculated by the piano permanent type application (S24). Then, the cloud CL11 calculates scores indicating the primary information of the trainee by the skill and the function of the trainee (S25). Specifically, the cloud CL11 calculates a score indicating the primary information of the trainee by the skill and the function based on the score of each item measured by the physical function measurement application and the score of the primary information and the skill of each performance calculated by the piano permanent type application. Then, the cloud CL11 presents information about the calculated score to the mobile application (S26). Note that the cloud CL11 may centrally manage all the measurement data and the like acquired for each user. In addition, the cloud CL11 may confirm measurement data and the like by a mobile application, a piano permanent type application described later, or the like.

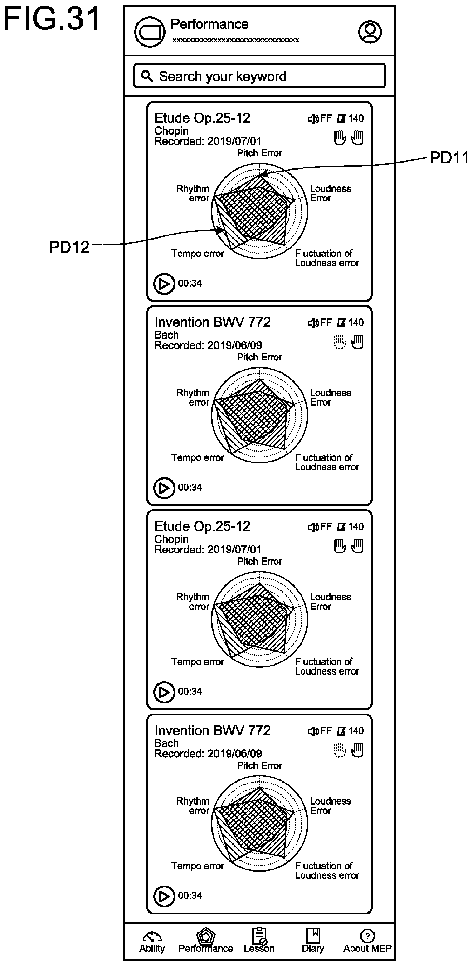

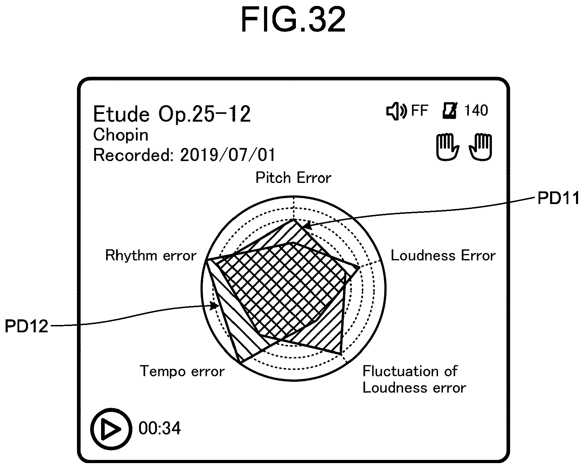

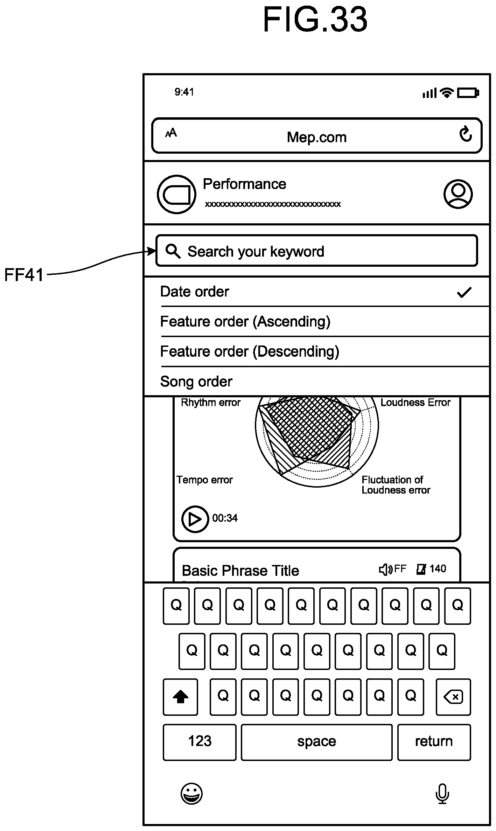

FIG. 31 is a diagram illustrating an example of a primary information list screen. The data illustrated in FIG. 31 is, for example, primary information calculated based on performance data when all the set pieces are played by the trainee. FIG. 32 is an enlarged view of the primary information of "Etude Op.25-12" in FIG. 31. FIG. 32 illustrates a performance of when the trainee plays "Etude Op.25-12". In FIGS. 31 and 32, the primary information of five items ("Pitch error", "Loundness error", "Fluctuation of loudness error", "Tempo error", "Rhythm error") important for the performance is displayed for each set piece. In FIGS. 31 and 32, the primary information PD11 of the trainee and the primary information PD12 of a comparison target (for example, an instructor, a professional performer, or an average of a plurality of professional performers) are displayed. FIG. 33 is a diagram illustrating an example of a screen indicating selection of rearrangement (sorting) of the primary information. In FIG. 33, the information processing platform 1 sorts the primary information in the selected sorting order when the trainee selects a music title (Song order), a date (Date order), and the like. Note that, although not illustrated, it may be sorted in the order of composers, performance scores, and the like. For example, the information processing platform 1 sorts the primary information in the selected sorting order according to selection from the list displayed when the item FF41 is operated. Note that, in FIG. 33, it is assumed that a date (date order) for which a check mark is placed is selected.

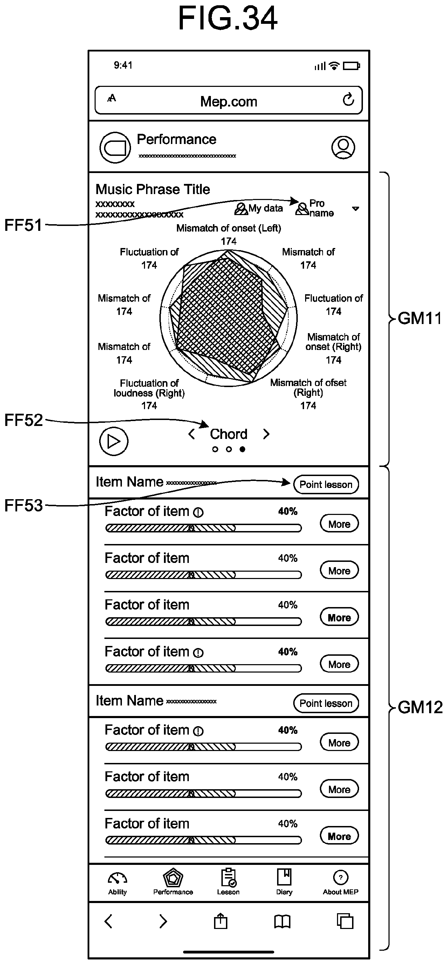

FIG. 34 is a diagram illustrating an example of a screen displaying details of the performance. Specifically, the primary information including, as items, volume, variation in volume, variation in tempo, rhythm, variation in chord, legato, variation in legato, and the like is displayed (screen GM11). Note that, the item FF51 is operation information for selecting model data to be compared. In the item FF51, in response to the selection of the model data to be compared, the information processing platform 1 may display the primary information of the model data. The item FF52 is operation information for selecting the primary information of the left hand, the right hand, and the chord. In the item FF52, in response to the selection of the left hand, the right hand, and the chord, the information processing platform 1 may display the primary information about a single sound when playing an instrument with the left hand, a single sound when playing an instrument with the right hand, and the chord. Then, the information processing platform 1 may display the primary information based on the sensibility information for music. In FIG. 34, the information processing platform 1 displays which function or skill affects each item of the primary information or the sensibility information (screen GM12). Note that FIG. 34 illustrates a case where top 3 to 4 items on which the function and the skill have a high degree of influence are displayed, but in practice, performance scores may be calculated for items whose number is equal to or more than that of the displayed items. Furthermore, the item FF53 is operation information for recommending a practice method or the like for an item on which the function and the skill have the highest degree of influence. As described above, in FIG. 34, by indicating the score of the primary information by the function and the skill, it is possible to appropriately present the cause of the weak points.

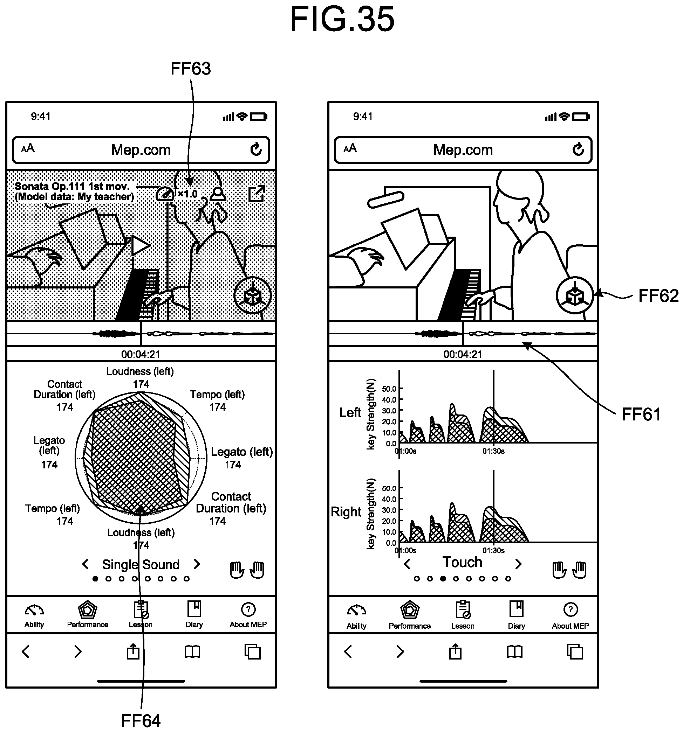

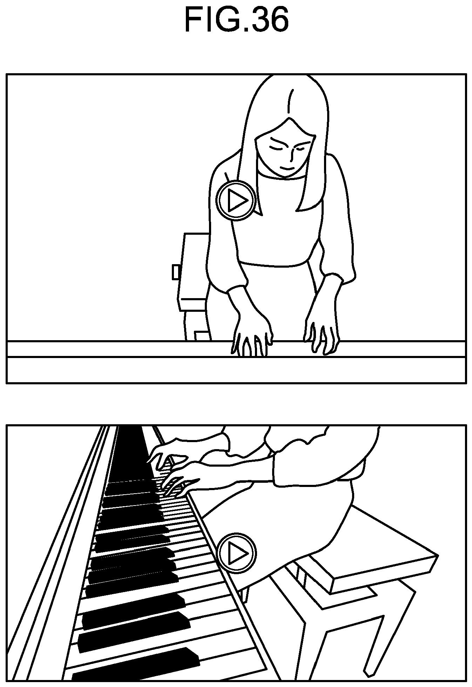

FIG. 35 is a diagram illustrating an example of the performance visualization. In FIG. 35, the imaging information about the performance is displayed. A moving image (animation) attached to the imaging information is replayed according to the operation on the imaging information. At this time, the playback time is displayed together with the replay of the moving image. The item FF61 is operation information indicating sound waveform display. In the item FF61, for example, in response to an operation on the seek bar, the information processing platform 1 displays performance data at corresponding time. The item FF62 is operation information for switching the viewpoint of the moving image. In response to the operation on the item FF62, the information processing platform 1 displays a moving image from one or more predetermined viewpoints (see FIG. 36). Note that, in FIG. 36, imaging information from two viewpoints of the upper part and the side part of the piano is displayed. A moving image is attached to the imaging information, and the information processing platform 1 replays the moving image of the operated imaging information according to the operation on the imaging information. The item FF63 is operation information such as switching of the replay speed and switching of the model data. The item FF64 is operation information indicating performance data at a corresponding time. In the item FF64, in response to an operation on a seek bar or the like of the item FF61, the information processing platform 1 displays performance data one sound by one sound at a corresponding time. Furthermore, in the item FF64, the trainee can appropriately grasp which sound is different from the model data by the comparison with the model data.

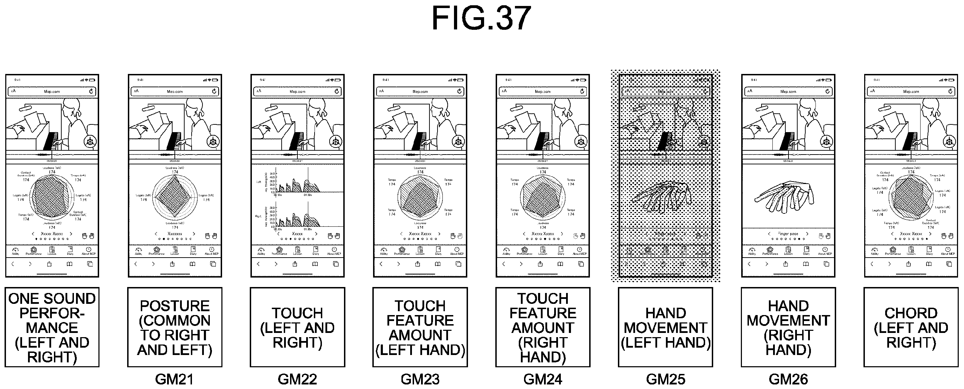

FIG. 37 is a diagram illustrating an example of the performance visualization. In FIG. 37, a screen indicating imaging information such as a moving image is fixed to the upper portion of the display screen, and the display of the feature amount illustrated in the lower portion of the display screen can be switched by swiping. The screen GM21 illustrates visualization of the posture. Note that the visualization of the posture is displayed by, for example, a skeleton. As a result, the trainee can compare his or her posture with the model by the skeleton, and thus can more intuitively grasp the difference from the model. The screen GM22 to the screen GM24 indicate the feature amounts of the touch. Note that, in the display of the feature amount of the touch, for example, a numerical value may be displayed in superposition with the waveform. In addition, similarly to the touch, the feature amount of the pedal may be displayed in a waveform such as superimposed by a line. The screen GM25 and the screen GM26 indicate the movement of the fingers. Here, for example, the feature amount of the motion may be displayed in accordance with the display of the globe. The difference from the model data may be displayed using a figure such as an arrow.

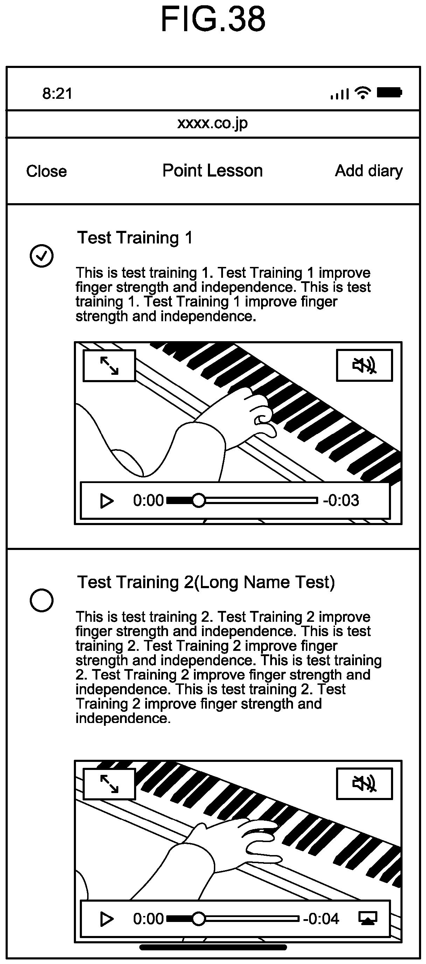

FIG. 38 is a diagram illustrating an example of recommendation of the practice method. In FIG. 38, the information processing platform 1 displays one or more training candidates which the trainee should follow. In FIG. 38, candidates of "Test Training 1" and "Test Training 2" are displayed. In this manner, by displaying a plurality of training candidates, the trainee can appropriately select highly effective training. Here, the function and skill, and the recommended content may be stored in a one-to-one correspondence in advance. Then, when the training which the trainee should follow is selected, the information processing platform 1 adds the selected training to, for example, the practice diary. In this manner, in FIG. 38, the information processing platform 1 recommends training indicating practice methods for respective functions and skills. Then, the information processing platform 1 presents a plurality of candidates of the training, and adds the selected training to the practice diary when the trainee selects one of them. As described above, by selecting a training from a plurality of candidates, an effective training can be selected.

The recommended content that recommends a practice method includes two types: imaging information such as a moving image and character information such as a sentence, and guidance to a training application. Furthermore, in the recommended content, the information processing platform 1 may perform auditory training on the application. Here, the information processing platform 1 may perform calibration for auditory training with a psychological threshold value. Thus, the training can be performed with its own stimulation intensity instead of the device. Note that the calibration test item may include, for example, a difference in volume, a deviation in timing, a balance of a chord, a deviation in a chord, and the like. As described above, it is possible to assist effective hypothesis practice by presenting a plurality of recommendation results regarding skills and functions in the mobile application.

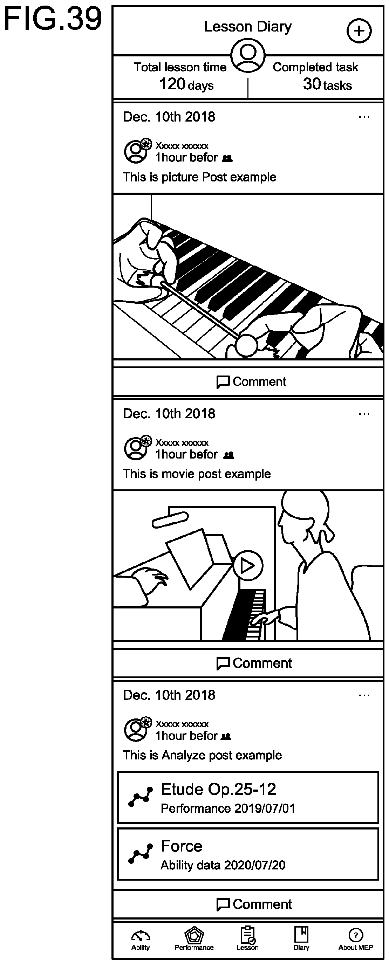

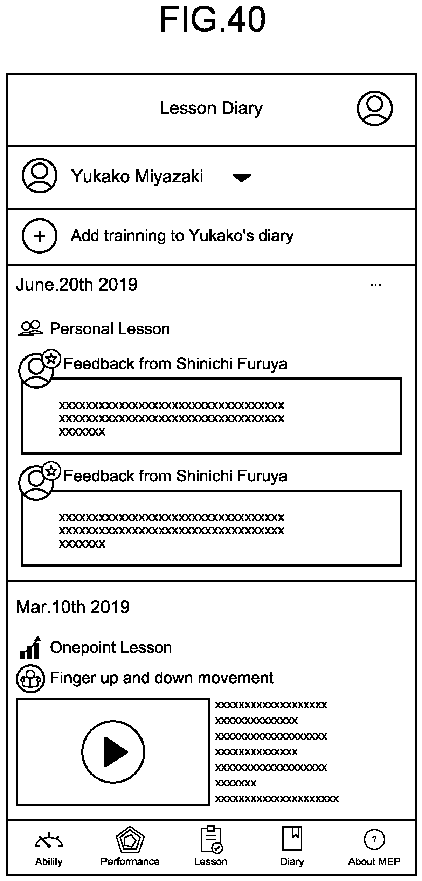

FIG. 39 is a diagram illustrating an example of a diary screen of a practice diary. In the practice diary, task management and practice time management are performed. In FIG. 39, the information processing platform 1 displays the practice time and the number of achieved tasks which is the total number of tasks performed by the trainee. Furthermore, in FIG. 39, the information processing platform 1 displays, for example, free posting from the trainee or another person, a task given by the instructor or the like, a task added from a point lesson, and the like. Note that the free posting may include, for example, performance, functions, playing, and the like of the trainee. Furthermore, FIG. 40 is a diagram illustrating an example of a diary screen for the instructor. In the diary screen for the instructor, for example, the practice diary may be displayed for each trainee.

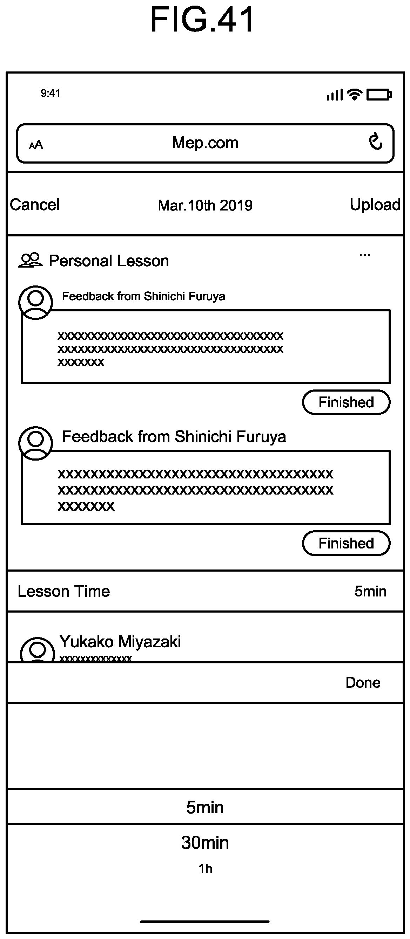

FIG. 41 is a diagram illustrating an example of a diary screen when a practice time is recorded. In the practice diary, for example, by recording the time for each practice item, the imbalance of the practice can be reduced. At this time, the information processing platform 1 may present the practice time for each category using a graph such as a line graph or a circular graph (see FIGS. 42 and 43). In FIG. 42, a circular graph is displayed according to the operation on the time of the total lesson. Note that the circular graph includes items of "MEMORIZATION", "SKILL", "PERFORMANCE", "EXPRESSION", and "OTHERS", the memorization of which occupies 53%, which is the highest. Furthermore, in FIG. 43, a bar graph is displayed according to the operation on the time of the total lesson. Furthermore, in the diary screen for the instructor, the instructor may describe the content of a practice for each category when giving instructions such as handing out a lesson to the trainee. In this case, the content of a practice written by the instructor is displayed for each category on the diary screen for the trainee.

As the information displayed on the diary screen of the practice diary, the information processing platform 1 may display, for example, a summary report of the immediately preceding practice. This summary report may include, for example, details of various feature amounts, replayable moving images, solved problems, unsolved problems, and the like. Furthermore, the information processing platform 1 may display, for example, information for proposing a feature amount to be noticed during the next practice. This proposal may include, for example, at which timing attention is paid to which feature amount such as motion or sound. Furthermore, the information processing platform 1 may display, for example, information for recommending the content of a practice or a song to be performed next. This recommendation may include, for example, practicing the contents of four practices without imbalance. Furthermore, the information processing platform 1 may display, for example, information for reviewing past lessons, performances, and the like. This review may include how the same song was played in the past, what advice the instructor gave, a comparison with the latest performance, and the like. Furthermore, the information processing platform 1 may display, for example, information for replaying a song which the trainee is currently involved in. The information for replaying the song includes, for example, information of a link destination registered in advance. Furthermore, the information processing platform 1 may display, for example, information for proposing the length of the break time. This proposal may include, for example, a necessary practice time based on the time of the practice in advance. Furthermore, the information processing platform 1 may display, for example, information for recommending necessary training. This recommendation may include, for example, training of functions such as fingers and sense of hearing. Furthermore, the information processing platform 1 may display, for example, information for requesting a consultation with a specific instructor. The information for the requesting may include, for example, an email to a registered certified instructor. At this time, the instructor may reply to the e-mail.

### <3.2. Second example>

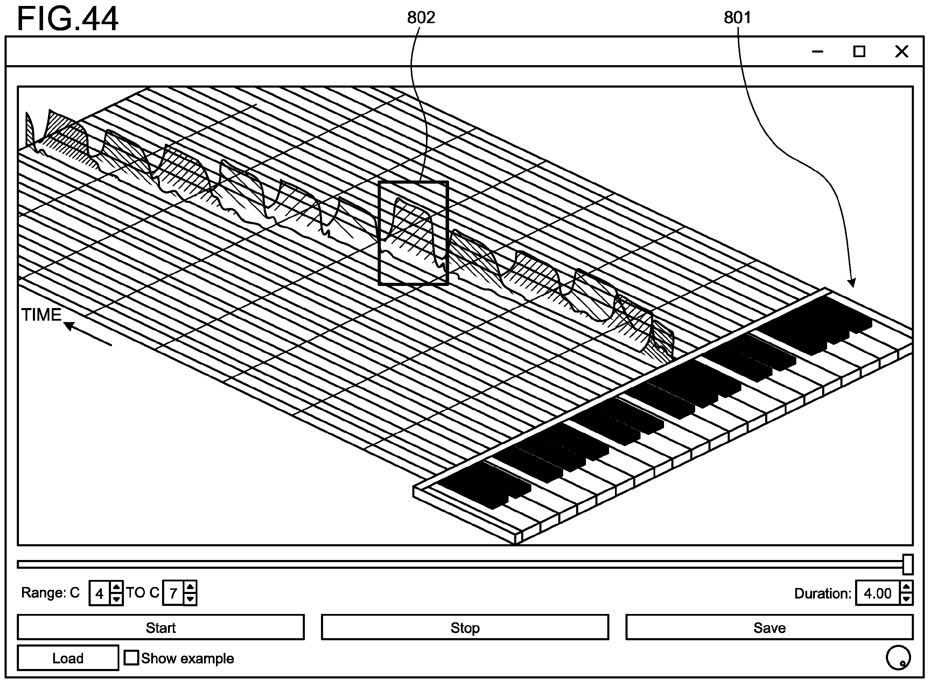

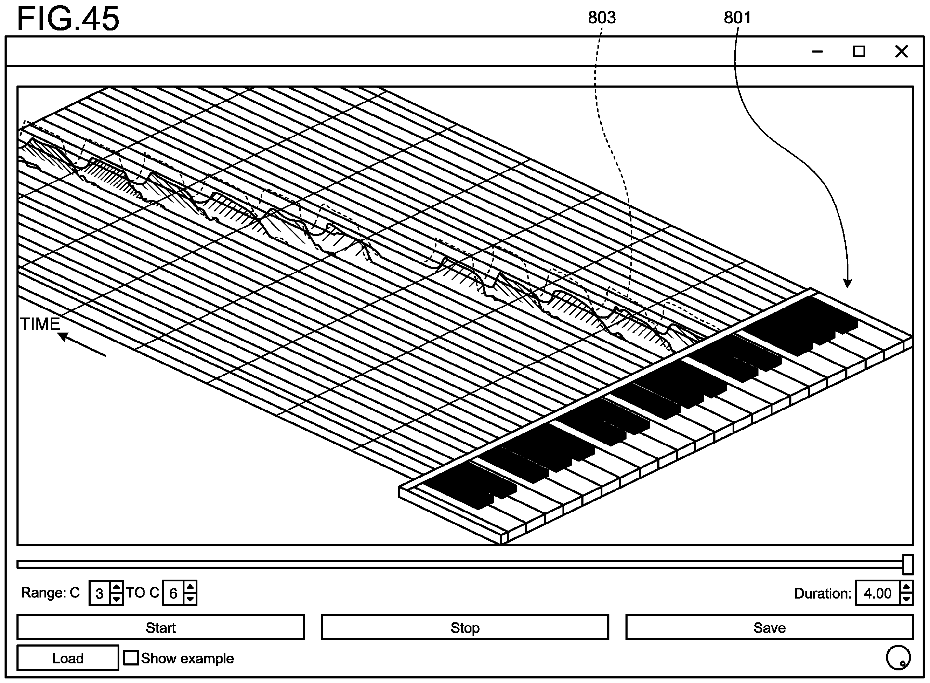

Next, as the second example, the second example in a case where the above-described embodiment of the present disclosure is applied to a skill acquisition assistance system for playing the piano will be described with reference to FIGS. 44 and 45. FIGS. 44 and 45 are explanatory diagrams for explaining an example of feedback in the present embodiment. The skill acquisition assistance system displays the sensing data 500 of the performance of the trainee and the performance of the past trainee or another player in an overlapping manner, so that the feature of the performance is intuitively and easily transmitted to the trainee, whereby the appropriate performance method can be instructed.

In the present embodiment, the skill acquisition assistance system displays the temporal change in the sensing data 500 of the performance of the trainee in an animation manner. Specifically, the sensor device 10 of the present embodiment includes a sensor that detects the vertical movement of each keyboard and the pressure applied to each keyboard. Furthermore, the sensor device 10 can detect that unnecessary pressing of the keyboard has occurred, for example, in a case where the amount of deformation of the felt installed at the bottom of each keyboard is equal to or greater than a predetermined threshold value. Such unnecessary pressing of the keyboard is a state in which the efficiency is poor because the extra muscle strength is used although there is no effect on the performance sound, so that it is preferable that the trainee improve it.

Furthermore, the sensor device 10 includes a motion capture, a three-dimensional distance measurement sensor, and the like, and can measure the posture of the player at the time of the performance. For example, the sensor device 10 can detect that the player takes a bad posture with a heavy burden, such as a posture in which the neck is pushed out or a posture in which the shoulder is raised. Furthermore, the sensor device 10 includes an electromyograph, and can detect, for example, muscle activity of a portion unnecessary for performance, such as a force applied to the neck.

Then, in the skill acquisition assistance system, by the process of the server 30, the presentation device 70 displays the temporal change in the vertical movement of each keyboard in the performance of the trainee in an animation manner as illustrated in FIG. 44. In the example illustrated in FIG. 44, the movement (lowering) amount of each keyboard that changes from moment to moment is displayed on the time axis corresponding to each keyboard of a keyboard display screen 801. In addition, the height of the peak 802 indicating the movement amount of each keyboard is displayed higher as the peak speed when the keyboard descends is higher. Here, the higher the peak speed when the keyboard descends, the larger the volume of the piano. Therefore, the relative volume can be visually grasped by the height of the peak 802 indicating the movement amount of each keyboard. This makes it easy for the trainee to visually grasp the variation in volume.

Furthermore, the server 30 performs an effect process on the animation display and displays a difference from the exemplary performance. For example, in a case where unnecessary pressing of the keyboard occurs, the server 30 makes a notification of the occurrence of the unnecessary pressing by, for example, changing a color, brightness, or transparency such as making a color with which the peak 802 of the movement amount of each keyboard is filled cloudy. Alternatively, the server 30 may make a notification of the occurrence of unnecessary pressing by changing a line type or the like of a waveform representing the movement amount of each keyboard or performing a shading process on the peak 802 of the movement amount of each keyboard. As a result, the trainee can visually and easily grasp that unnecessary muscle strength is used.

Furthermore, in a case where the trainee takes a bad posture, the server 30 makes a notification that the posture is in a bad state, for example, by changing the color of the keyboard display screen 801 to a color that gives a gloomy impression. As a result, the trainee can visually and easily grasp that the trainee uses the body unnaturally. Furthermore, in a case where muscle activity unnecessary for the performance is detected, similarly the server 30 makes a notification, for example, by changing the color of the keyboard display screen 801 to a color that gives a gloomy impression. As a result, the trainee can visually and easily grasp that the trainee uses the body part unnaturally.

Note that these notifications are not limited to the above-described display change, and may be notifications by sense of hearing or tactile sense in addition to the above-described display change or instead of the display change. For example, in a case where the posture of the trainee is in a bad state, the notification may be made by outputting an artificial sound, such as a triangular wave or a rectangular wave, that can be easily distinguished from the piano sound. Alternatively, the notification may be made by vibrating a vibrator worn on the shoulder, the neck, or the like of the trainee.

In addition, the server 30 displays a temporal change in the vertical movement of each keyboard in the performance of the trainee illustrated in FIG. 44 and a temporal change 803 in the vertical movement of each keyboard in the past performance of the trainee or another player in an overlapping manner as illustrated in FIG. 45. As a result, it is possible to visually and easily grasp the difference in feature between the performance of the trainee and the past performance.

### <3.3. third example>

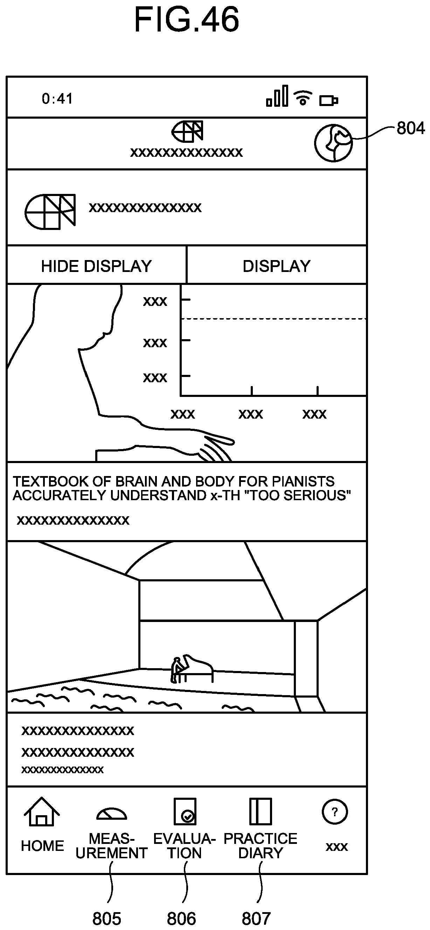

Next, as the third example, the third example in a case where the above-described embodiment of the present disclosure is applied to a skill acquisition assistance system for playing the piano will be described with reference to FIGS. 46 to 51. FIGS. 46 to 51 are explanatory diagrams for explaining an example of a display screen in the presentation device 70 of the present embodiment. First, prior to use of the system, the user registers a login ID and a password for login, a profile (gender, age, playing experience, etc.), a profile picture, and the like. For example, the profile picture may be displayed as an icon indicating the user when the system is used.

FIG. 46 is a diagram illustrating an example of the home screen presented to the logged-in user. When an icon 804 indicating the user is clicked on the home screen illustrated in FIG. 46 or each menu screen to be described later, it is possible to switch to My Page of the user.

In My Page of the user, for example, the user's name, email address, profile, and the like are displayed. Furthermore, in a case where the user is a trainee, a registered instructor or the like is displayed in My Page. Furthermore, the trainee may be able to invite a user selected as an instructor or a friend by using an email, a one-dimensional code (for example, a barcode), a two-dimensional code (for example, a QR code (registered trademark)), or the like so that the user or the friend who the trainee desires to be his/her instructor can access his/her home screen or the like on My Page. Similarly, in a case where the user is an instructor, the instructor may be able to invite a user selected as a student or a friend by using an e-mail, various codes, or the like so that his or her own student or friend can access his/her own home screen or the like on My Page. At this time, the user (the trainee or the instructor) may set the disclosure restriction for each piece of information in his/her My Page for each invited person. In this manner, the user can control the disclosure range of the user's own home screen or the like.

Furthermore, the user can switch to each menu screen by clicking buttons indicating "MEASUREMENT" 805, "EVALUATION" 806, "PRACTICE DIARY" 807, and the like set on the home screen as illustrated in FIG. 46.

Note that the home screen includes a screen for an instructor in addition to the screen for a trainee illustrated in FIG. 46. On the home screen for the instructor, for example, a practice diary or the like of a trainee who is a student of the instructor is displayed, and the practice diary of the student can be easily accessed. For example, by clicking a button indicating "PRACTICE DIARY" set on the home screen and selecting one of the students, the instructor can access a "PRACTICE DIARY" menu of the student, replay a moving image of the performance uploaded, and input advice as described later. The outline of the latest practice diary uploaded by any of the students may be displayed on the home screen of the instructor.

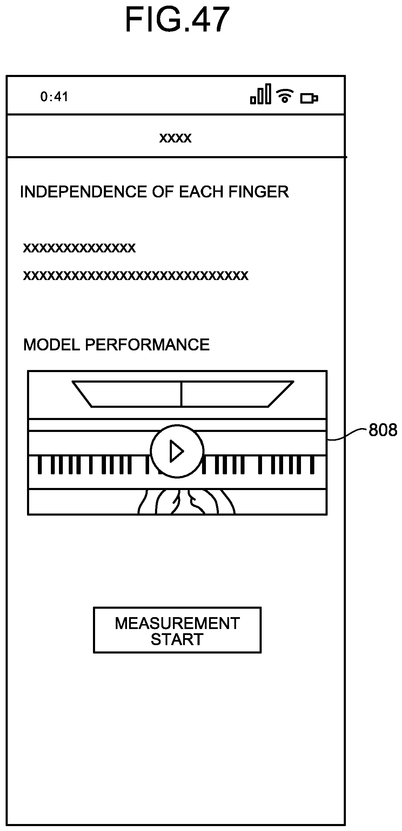

When the user (trainee) clicks the "MEASUREMENT" 805 button on the home screen, the screen transitions to the "MEASUREMENT" menu screen. As described above, the "MEASUREMENT" menu screen is further subdivided into measurement of function, measurement of skill, measurement of body shape, and the like, and a list of measurable items is displayed for each subdivided menu. For example, for the function measurement, the independence of each finger, the strength of each finger, the finger motion speed, and the like are displayed in a list. In addition, for the skill measurement, scale, endurance, tremolo, and the like are displayed in a list. When the user selects a desired item, the screen transitions to a screen for starting measurement. FIG. 47 illustrates a screen displayed in a case where the independence of each finger is selected in the function measurement. As illustrated in FIG. 47, a moving image 808 of the performance as a model may be displayed in each item selected by the user.

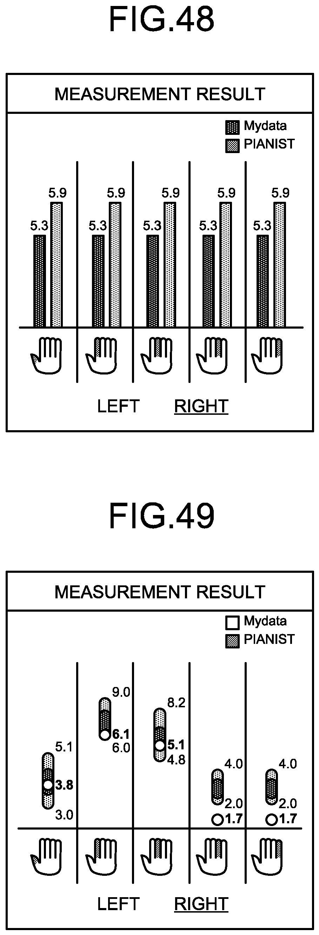

When the measurement is completed, the measurement result is displayed. As the measurement result, for example, the measurement result of the independence of each finger in FIG. 14 is displayed. Alternatively, as illustrated in FIG. 48 or 49, the measurement result of the strength of each finger is displayed. In the example illustrated in FIG. 48, for example, the values of the strength of each finger of the user (Mydata) and the model player (pianist) are displayed so that the difference between the two can be seen. Furthermore, in the example illustrated in FIG. 49, for example, a value of the strength of each finger of the user (Mydata) and a range of values of the strength of each finger of a plurality of model players (pianists) are displayed. In addition, when the measurement result is displayed, one-point advice or the like corresponding to each measurement result may be added and displayed. For example, a specific practice method corresponding to the magnitude of the difference from the model player may be displayed in addition to the measurement result.

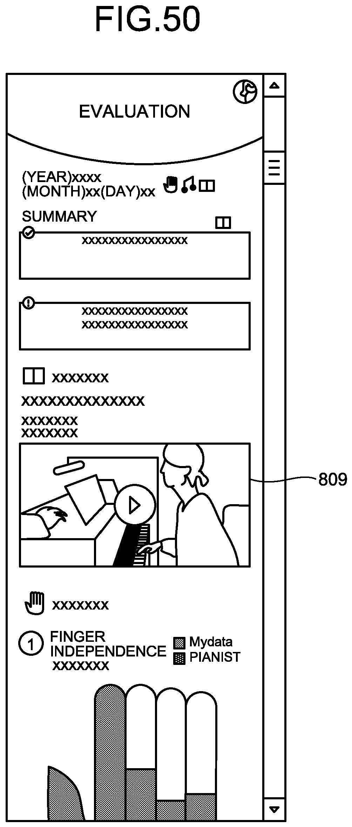

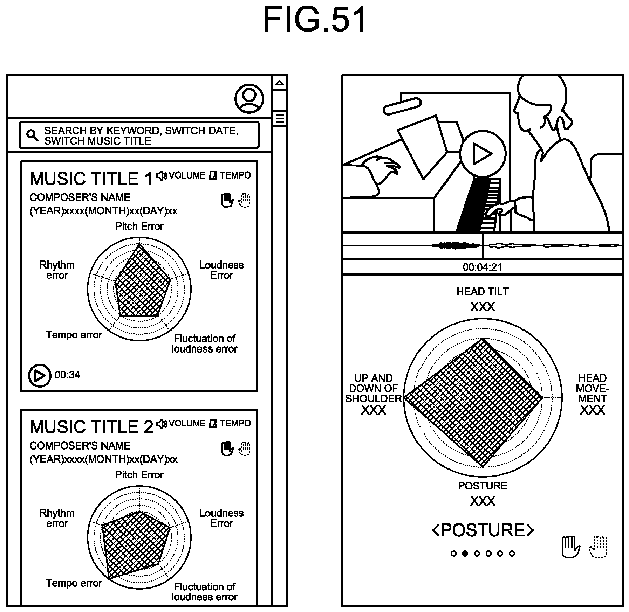

When the user (trainee) clicks the "EVALUATION" 806 button on the home screen, the screen transitions to an" EVALUATION" menu screen. FIG. 50 illustrates an example of the "EVALUATION" menu screen. As illustrated in FIG. 50, a result of measurement performed by the user in the past is displayed on the "EVALUATION" menu screen. For example, in FIG. 50, a summary at the time of measurement, a moving image 809 recording a performance state at the time of measurement, and the like are displayed in addition to the measurement date and time and the above-described measurement result (see FIGS. 14, 48, and 49). Then, by selecting each measurement result, it is possible to further display a time-series change (see FIGS. 15 and 16) of the measurement result. Note that, in the example illustrated in FIG. 50, the latest measurement result is displayed, and for example, it is possible to further switch to the display of the past measurement result by selecting any one of the past measurement dates and times displayed in the list. Alternatively, when a button (not illustrated) in the "EVALUATION" menu screen of FIG. 50 is clicked, the screen shifts to a screen on which a friend or the like other than the user can be selected, and the measurement result of the friend selected on the screen can be displayed. In this case, it is preferable to display the measurement result of the friend only in a case where the friend performs setting so that the user is allowed to disclose the measurement result. Note that FIG. 51 is a modification of FIG. 50, and is a diagram illustrating an example of a screen on which the performance screen and the analysis result can be compared in real time. For example, the analysis result indicates "Pitch Error", "Loudness error", "Fluctuation of loudness error", "Tempo error", and "Rhythm error". In addition, evaluations of "HEAD TILT", "HEAD MOVEMENT", "POSTURE", and "SHOULDER MOVEMENT" are illustrated. FIG. 51(A) illustrates a list screen of the skill evaluation, and FIG. 51(B) illustrates a visualization screen of the skill evaluation.

When the user (trainee) clicks the "PRACTICE DIARY" 807 button on the home screen, the screen transitions to a "PRACTICE DIARY" menu screen. On the "PRACTICE DIARY" menu screen, for example, the content of a practice by the user is displayed in the timeline format as described above (see FIG. 17). Alternatively, when the "PRACTICE DIARY" 807 button is clicked on the home screen, the screen may transition to a screen on which a friend other than the user can be selected, and the "PRACTICE DIARY" menu of the friend selected on the screen may be displayed. In this case, it is preferable to display the "PRACTICE DIARY" menu of the friend only in a case where the friend performs setting so that the user is allowed to disclose the "PRACTICE DIARY".

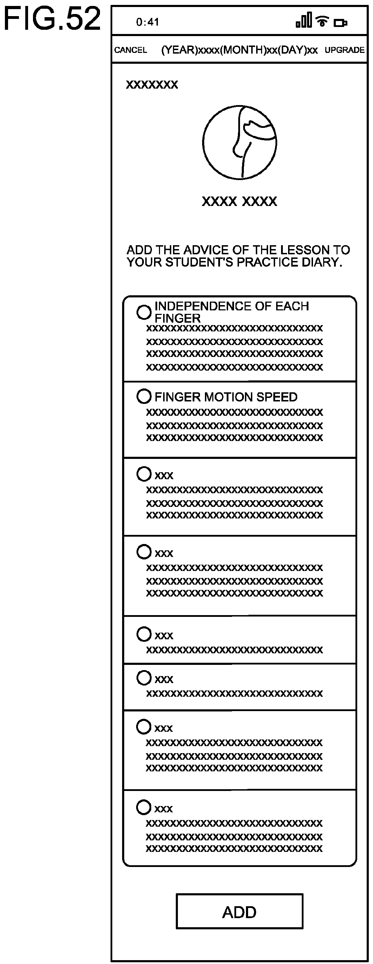

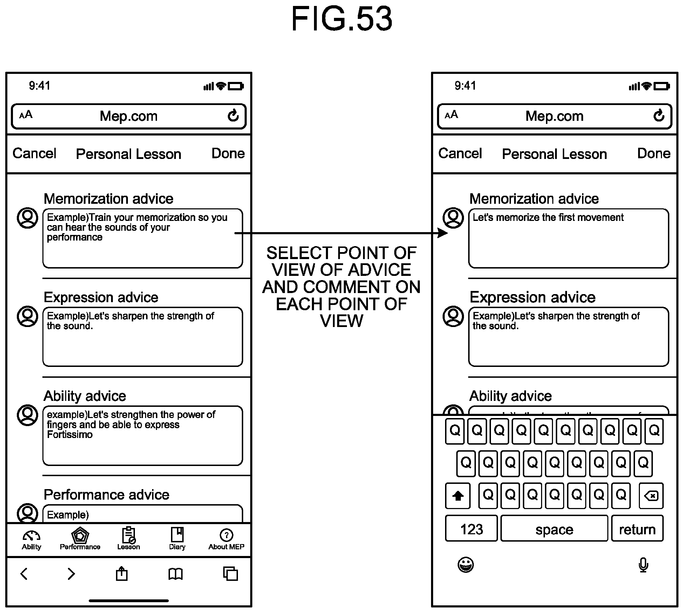

Furthermore, as described above, when the instructor clicks the "PRACTICE DIARY" button on the home screen, for example, the screen transitions to a screen on which a student can be selected, and the "PRACTICE DIARY" menu of the student selected on the screen is displayed. The instructor can input a comment for the "PRACTICE DIARY" of the student, and input advice as illustrated in FIG. 52. For example, by selecting the performance data uploaded to the "PRACTICE DIARY" of the student, the screen transitions to a screen illustrated in FIG. 52, and advice for performance can be input. In the example illustrated in FIG. 52, it is possible to input advice after selecting a viewpoint of giving advice from among the independence of each finger, the finger motion speed, and the like. As a result, the student (trainee) can easily refer to the advice added by the instructor and can effectively use the advice. Note that FIG. 53 is a modification of FIG. 52, and is a diagram illustrating an example of a screen on which an instructor can freely write advice for each viewpoint of advice. FIG. 53 illustrates a case where the leader writes "Let's memorize the first movement" for "Memorization advice".

### <3.4. Piano permanent type application>

In the above embodiment, various UIs using a mobile phone application have been described, but the present invention is not limited to these examples. In the above embodiment, the piano permanent type application and the mobile phone application may function in cooperation. Hereinafter, details of the piano permanent type application will be described.

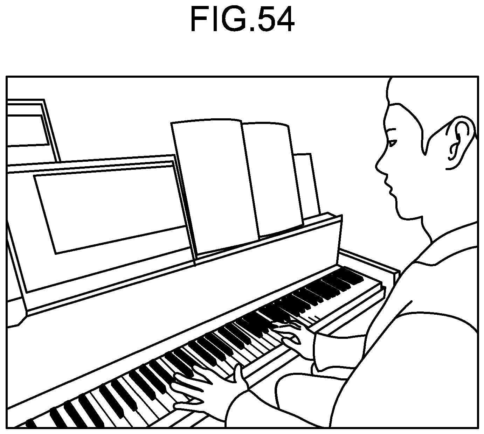

In the piano permanent type application, for example, a sensor system and a monitor (for example, the touch monitor) are permanently installed in a piano (see FIG. 54). FIG. 54 illustrates a case where the touch panel is installed on the music stand, but the present invention is not limited to this example, and the touch panel may be installed beside the piano instead of on the music stand. In addition, the piano permanent type application includes, for example, two types of modes of a performance mode and a measurement mode.

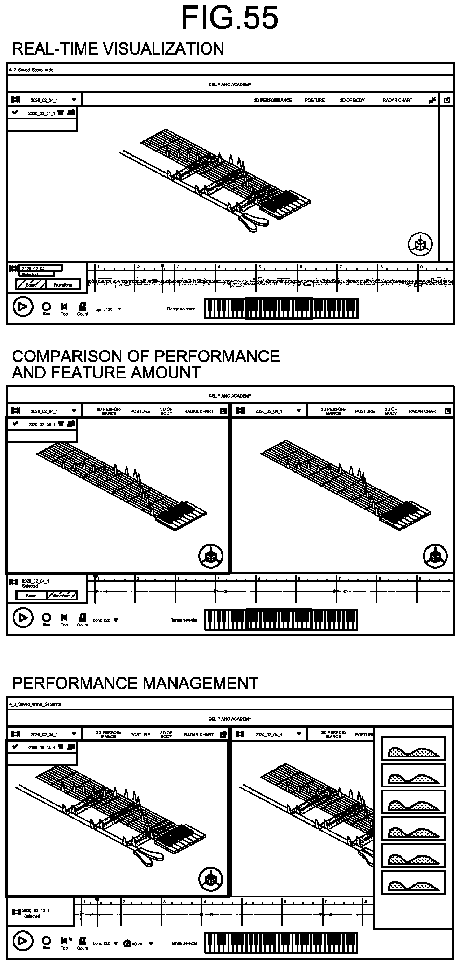

FIG. 55 is a diagram illustrating an example of a performance mode. The performance mode includes visualization in real time, performance and feature amount comparison, management of the performance, and the like. In the performance mode, the information processing platform 1 supports a lesson or practice by visualizing implicit knowledge, for example. In addition, for example, the performance data can be stored in a cloud to be checked on a mobile device.

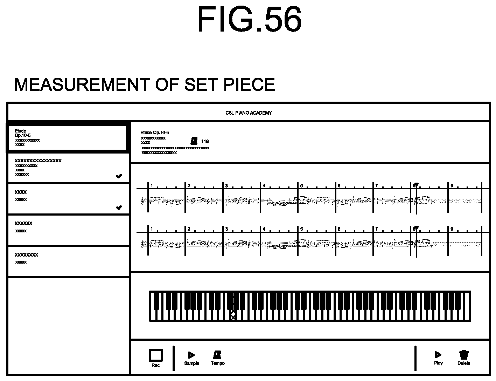

FIG. 56 is a diagram illustrating an example of a measurement mode. In the measurement mode, the information processing platform 1 presents a measurement result by acquiring performance data in which various basic set pieces are played by the trainee. As a result, the trainee can appropriately grasp the weak point and how to overcome the weak points.

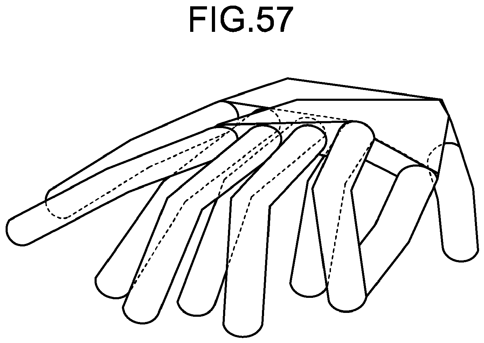

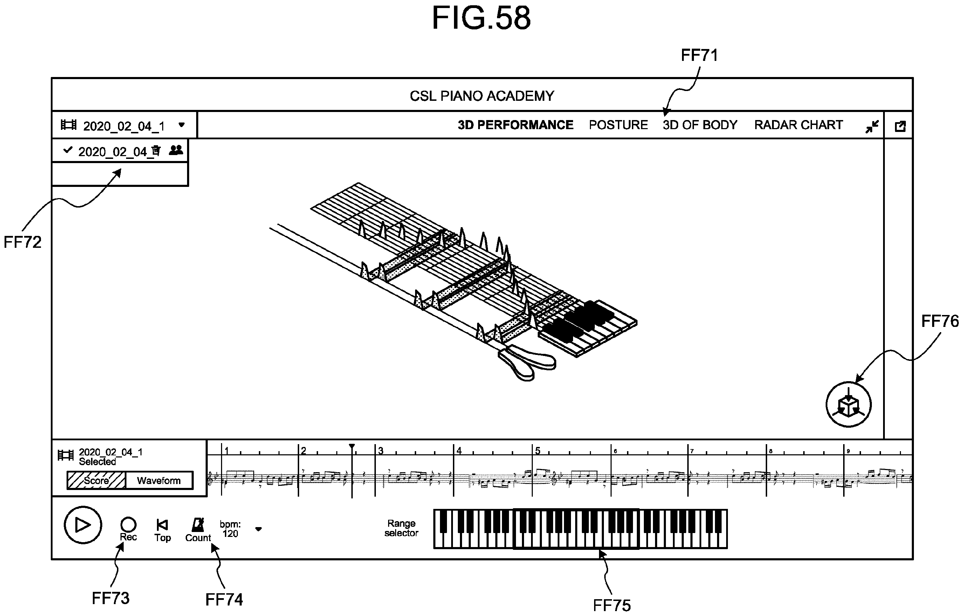

FIG. 57 is a diagram illustrating an example of visualization in real time. FIG. 57 illustrates a case where the posture of the fingers is visualized. Note that the present invention is not limited to the example illustrated in FIG. 57, and for example, the timing of the pedal may be visualized in addition to that of the touch. FIG. 58 is a diagram illustrating an example in which movements of a touch and a pedal are visualized in real time. In the item FF71, the 3D performance, the posture, the 3D of the body, the radar chart of the feature amount, and the like are displayed by tab switching. Note that, in the 3D performance, for example, the 3D CG of the hand is displayed. Furthermore, in the item FF72, addition to the list or the like is displayed according to the recording of the performance. Furthermore, the item FF73 is display information for recording the performance, display information for replaying the recorded performance, and the like. The item FF74 is display information for setting a tempo or display information for using an electronic metronome. The item FF75 is display information for switching a range to be displayed. In the item FF75, when the trainee selects a range, the movement of the touch and the pedal in the selected range is visualized. Item FF76 is display information for switching the viewpoint in 3D. The item FF76 has, for example, a function similar to that of the item FF62.

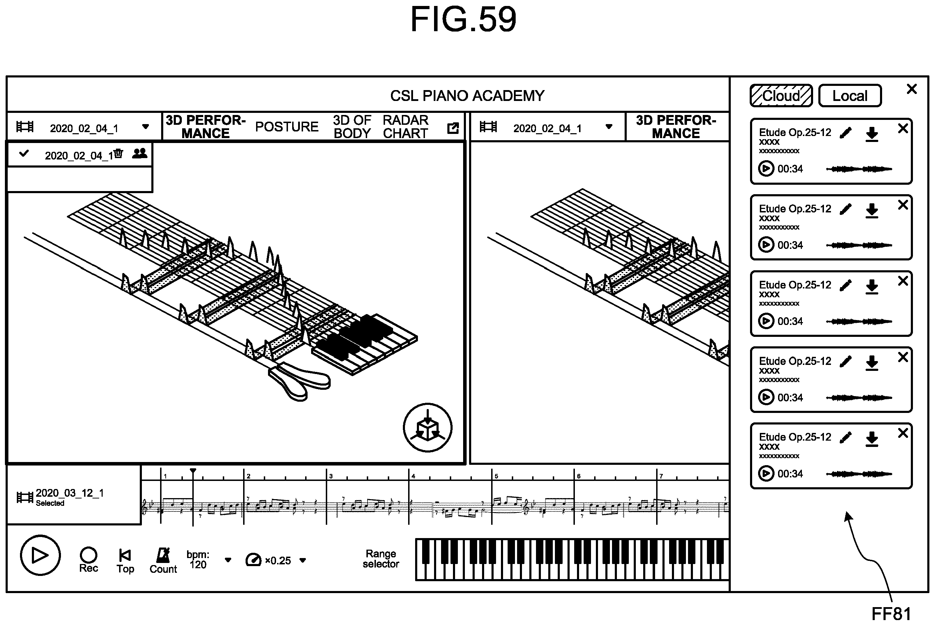

FIG. 59 is a diagram illustrating an example of management of the performance data. In FIG. 59, it is assumed that performance data to be displayed in the pull-down list on the comparison screen among the performance data is selected. In FIG. 59, it is assumed that performance data to be reviewed again among the performance data is stored in the cloud. The item FF81 is, for example, a drawer menu. In the item FF81, data played by the trainee is additionally displayed. In the item FF81, when the trainee drags and drops the performance data onto the display screen from the drawer menu, the corresponding performance data is displayed. Note that, in the item FF81, music information may be input, a label may be attached, a memo may be written, and the like.

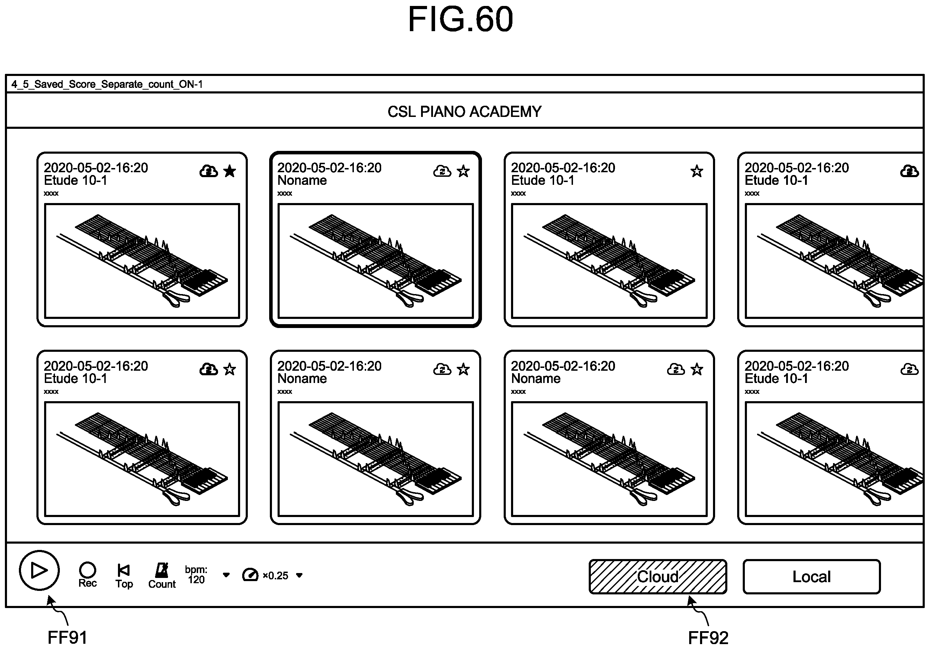

FIG. 60 is a diagram illustrating an example of management of the performance data. FIG. 60 is a modification of FIG. 59. Specifically, a case where the performance data is managed on the entire screen is illustrated. In FIG. 60, it is assumed that performance data of "2020-05-02-16:20 Noname" is selected. The item FF91 is display information for replaying data selected by the trainee. The item FF92 is display information for acquiring performance data stored in the cloud. The performance data stored in the cloud is added via the item FF92.

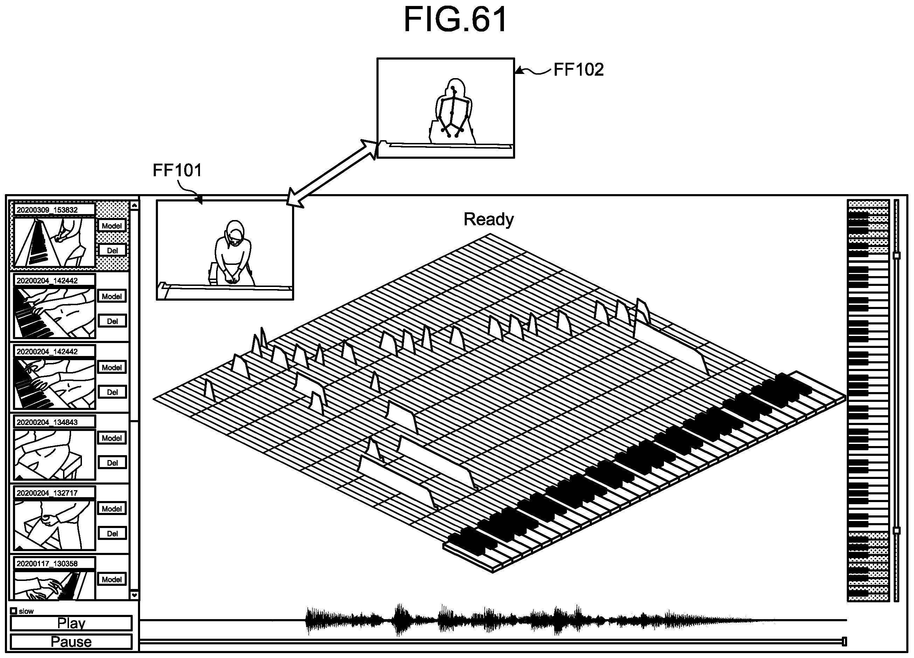

FIG. 61 is a diagram illustrating an example of management of the performance data. FIG. 61 is a modification of FIGS. 59 and 60. In FIG. 61, the information processing platform 1 may display the item FF102 in response to an operation on the item FF101. As a result, it is easy to grasp the state of the trainee during the performance, and thus, it is possible to promote improvement in usability.

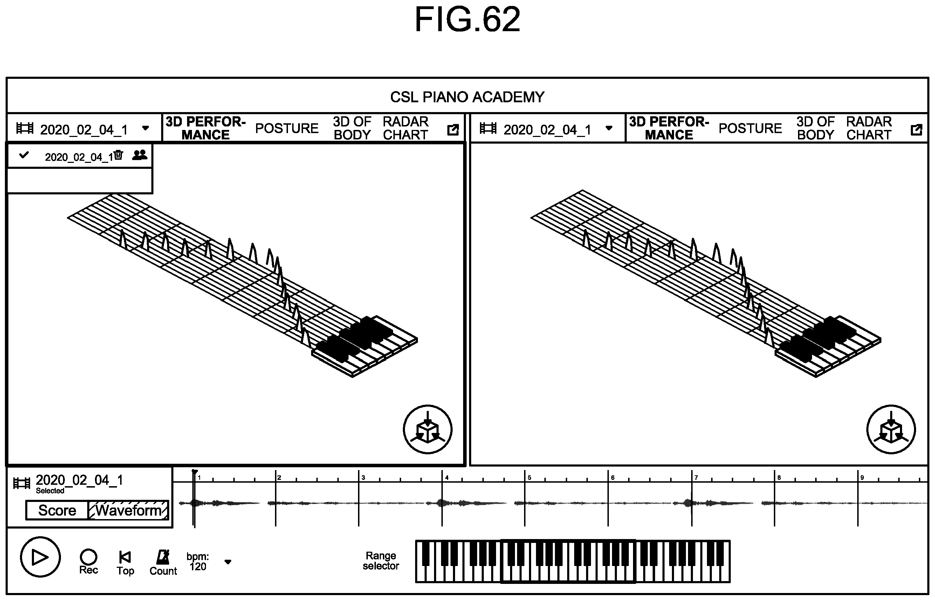

FIG. 62 is a diagram illustrating an example of the performance and feature amount comparison. FIG. 62 illustrates a case a feature amount such as a touch between the performance data selected by the trainee selecting the performance data and compares and another performance data is compared. At this time, the trainee selects performance data that the trainee desires to be compared from the recorded performance data, for example. Note that the performance data to be compared is not limited to the past performance data of the trainee, and may be, for example, performance data shared by others such as an instructor and a friend. In addition, in FIG. 62, the information processing platform 1 may zoom in/out the screen in response to an operation such as scrolling. Furthermore, when the trainee touches one of the waves displayed on the screen, the information processing platform 1 may display details of the wave. Furthermore, in FIG. 62, the information processing platform 1 may display a waveform of a sound, a musical score, and the like. At this time, the information processing platform 1 may display a seek bar together with a sound waveform and a musical score. By comparing the two performances while moving the seek bar, the trainee can appropriately grasp which physical movement is different.

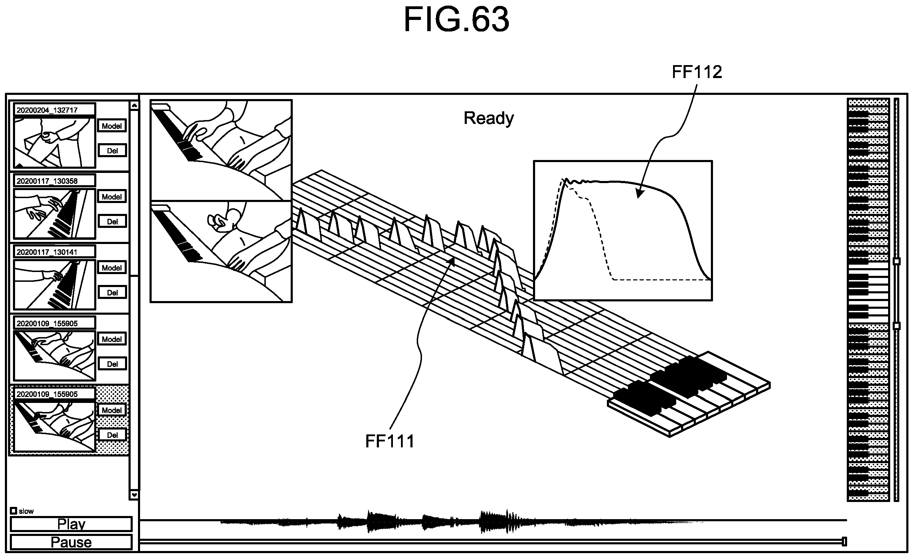

FIG. 63 is a diagram illustrating an example of the performance and feature amount comparison. FIG. 63 is a modification of FIG. 62. Specifically, a case where performance data to be compared is superimposed and displayed is illustrated. The item FF111 is display information in which performance data to be compared is superimposed and displayed. In response to an operation on the item FF111, the information processing platform 1 displays the item FF112 that is display information indicating details such as similarity between two touches.

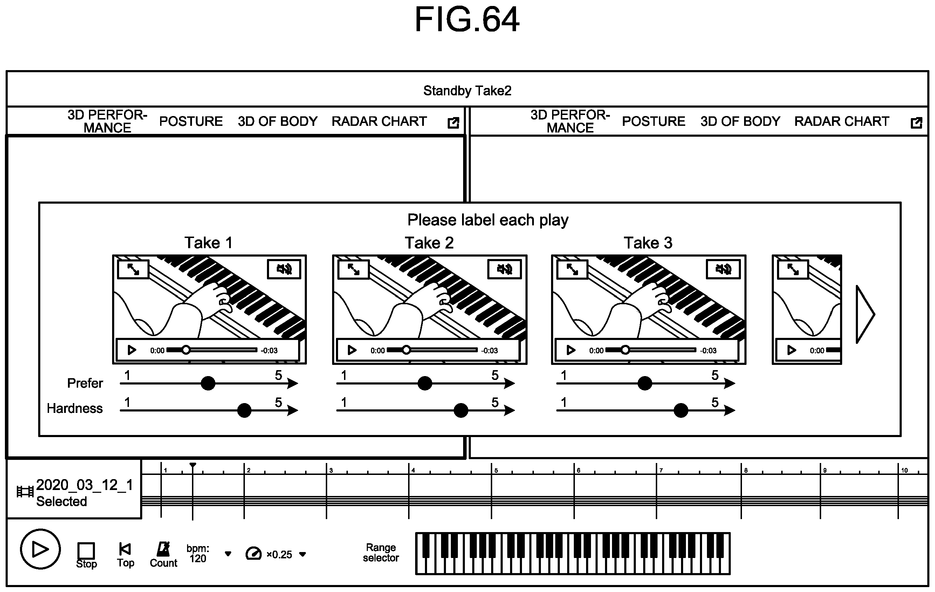

FIG. 64 is a diagram illustrating an example of searching for performance data. In FIG. 64, the performance data when the trainee continuously play an instrument a plurality of times is recorded and collectively labeled, so that the performance data desired by the trainee is searched for. Here, the metronome may function at the start of playing an instrument. In addition, during recording of the performance data, for example, display may be performed such that it can be recognized that the performance data is being measured. For example, the information processing platform 1 may perform display such as reddening a display area indicating the measurement state. FIG. 64 is a diagram illustrating an example of labeling recorded performance data. FIG. 64 illustrates a case where the preference of the performance is labeled in five levels using the numbers "1" to "5". However, the present invention is not limited to this example, and the preference of the performance may be labeled with two choices of "LIKE" and "DISLIKE". The data thus labeled may also be statistically processed on the server. As a result, it is possible to compare the performance with the performance data of the model using the performance preferred by the trainee as a model.

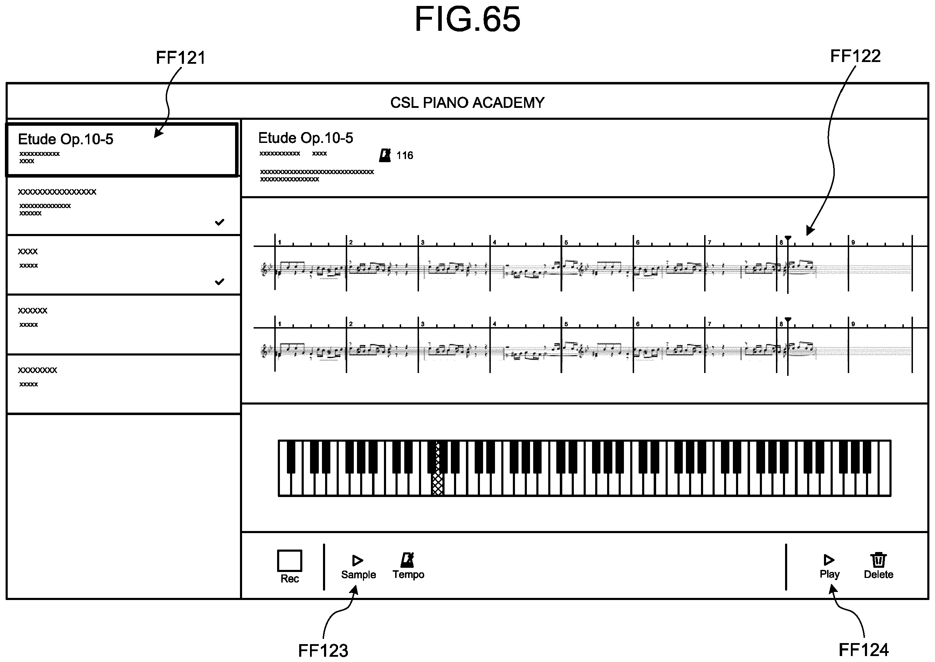

FIG. 65 is a diagram illustrating an example of presentation of the performance based on measurement of a set piece. The item FF121 is display information in which the set piece to be recorded is listed. This list is obtained, for example, from a cloud. Furthermore, the performance selected by the trainee is recorded. Furthermore, the status may include, for example, four of "unrecorded", "recording", "recorded", and "uploaded". The item FF122 is display information indicating a musical score. Note that a finger motion, a finger number, or the like may be written in the musical score. Furthermore, the item FF123 and the item FF124 are display information for starting recording, display information for replaying a performance of a model, display information for replaying a metronome, and the like.

### <3.5. Piano permanent type sensor system>

Here, the piano permanent type sensor system is a sensor system that multimodally records physical information during the performance in order to move the piano permanent type application. Hereinafter, the piano permanent type sensor system will be described.

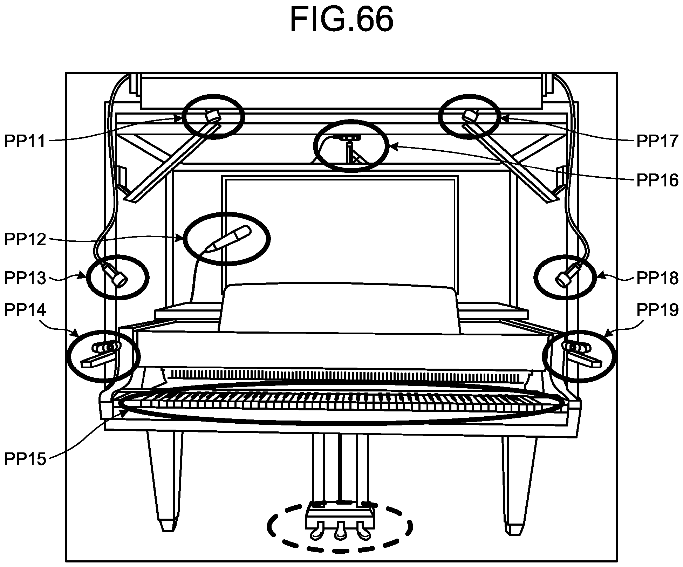

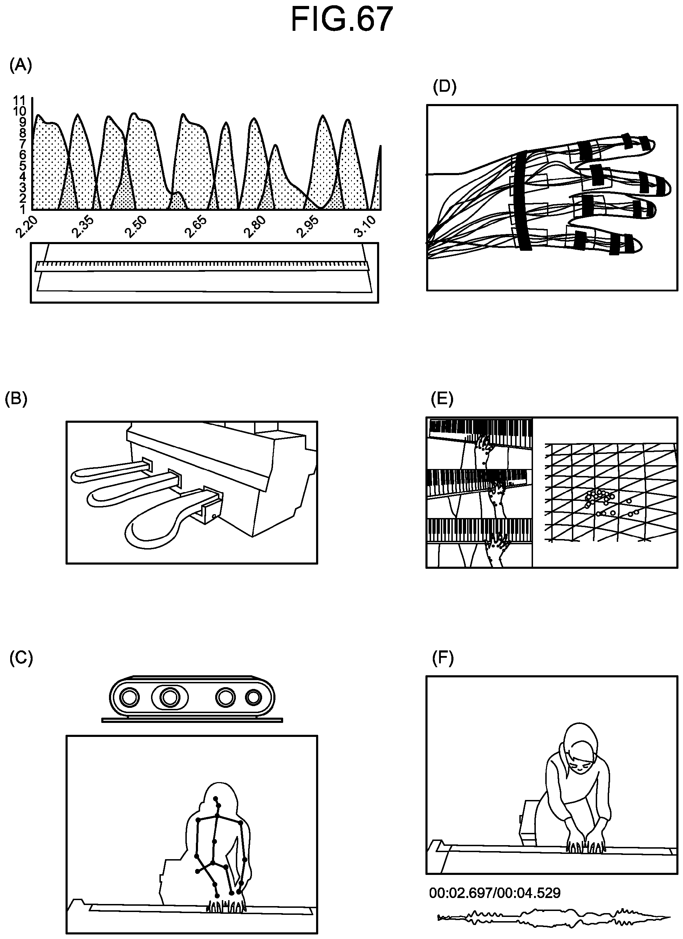

FIG. 66 is a diagram illustrating an example of an overall image of a piano permanent type sensor system. The piano permanent type sensor system includes various sensors. In FIG. 66, the various sensors (sensors PP11 to PP19) are surrounded by solid lines. Note that the pedal sensor is surrounded by a dotted line. For example, the piano permanent type sensor system includes a touch sensor (see FIG. 67(A)), a pedal sensor (see FIG. 67(B)), a depth sensor (see FIG. 67(C)), a data glove (see FIG. 67(D)), a high-speed camera (see FIG. 67(E)), a sound and an image (see FIG. 67(F)), a center of gravity sensor, a wrist/arm sensor, and the like. Note that the depth sensor is used, for example, for estimating the posture. In addition, the high-speed camera is used for estimating the posture and position of the fingers.

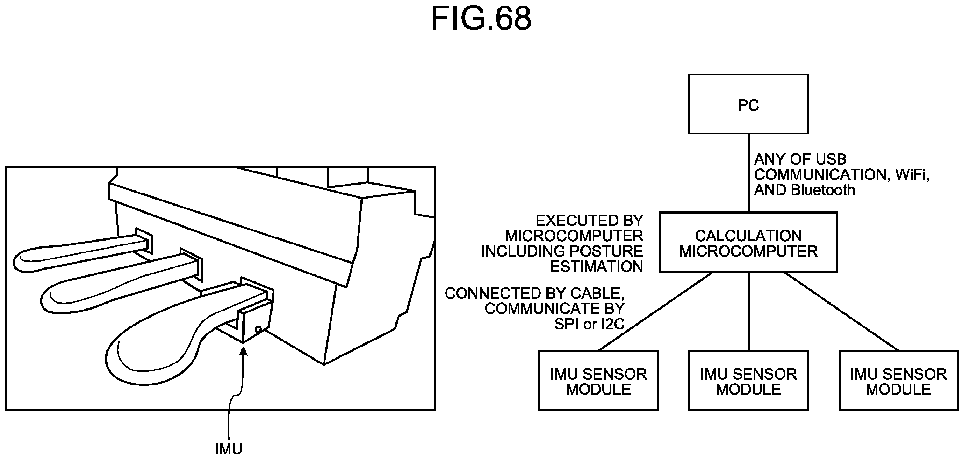

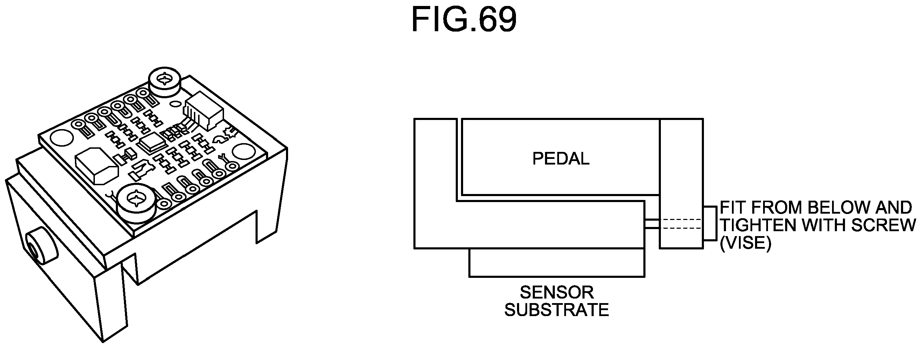

FIG. 68 is a diagram illustrating an example of a pedal sensor of the piano permanent type sensor system. In FIG. 68, an inertial measurement unit (IMU) is provided on the pedal. The IMU can communicate with, for example, a calculation microcomputer that performs posture estimation and a PC. FIG. 69 is a diagram illustrating an example of details of the pedal sensor. Note that, the pedal sensor may include a sensor base. Pedaling is recorded via this IMU. As illustrated in FIG 68, the IMU is, for example, clamped with a screw below the pedal. The IMU can be attached to, for example, one or more pedals (for example, 1 to 3 pedals). Since the IMU is provided below the pedal, it is possible to prevent the performance from being disturbed. In addition, the IMU samples acceleration, angular velocity, geomagnetism, and the like at, for example, 1000 FPS. Further, the piano permanent type sensor system may convert posture estimation of the sensor into the pressing of the pedal. For example, in the piano permanent type sensor system, the posture may be converted into the angle of the pedal, and the angle of the pedal may be converted into the pressing. In addition, in the piano permanent type sensor system, conversion to the pressing of the pedal may be performed by a calculation microcomputer or the like. As a result, the communication amount can be reduced.

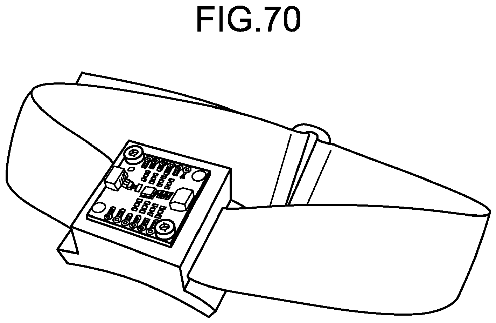

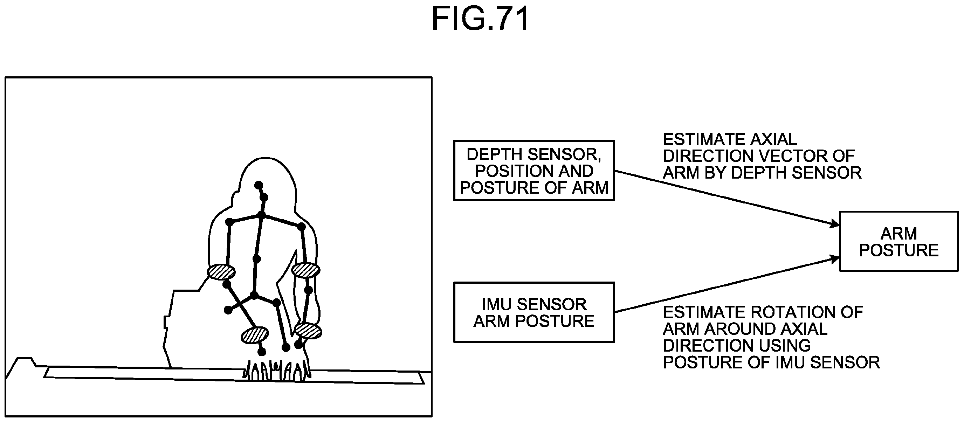

FIG. 70 is a diagram illustrating an example of an IMU sensor. In FIG. 70, the information processing platform 1 measures the rotation of the arm by the IMU sensor attached to the wrist or the arm with a band. FIG. 71 is a diagram illustrating an example of a case where the IMU sensors are provided on the wrist and the elbow. Although there is a possibility that the rotation of the arm cannot be measured with the information acquired from the depth sensor, it is possible to estimate the posture of the arm with higher accuracy by providing the IMU sensor on the wrist and the elbow. In FIG. 71, the information processing platform 1 estimates an axial vector of the arm from the depth sensor, and estimates the rotation of the arm around the axial direction by using a posture of the IMU sensor. In this way, by integrating the sensor information obtained by the IMU and the posture information obtained by the depth sensor, the posture of the arm can be estimated with higher accuracy.

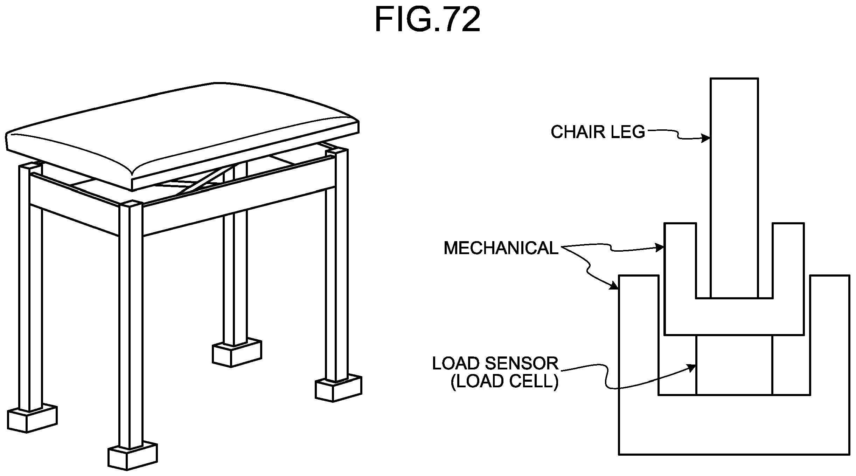

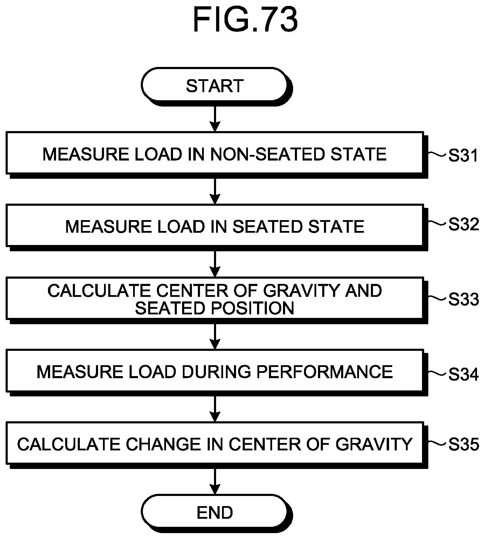

FIG. 72 is a diagram illustrating an example of a center of gravity sensor of the piano permanent type sensor system. In FIG. 72, the information processing platform 1 detects the movement of the center of gravity by load cells attached to the four legs of the chair. For example, the information processing platform 1 calculates feature amounts such as a position and a gradient from the locus of the center of gravity. Note that the information processing platform 1 may perform a similar calculation using, for example, a pressure-sensitive mat. FIG. 73 is a diagram illustrating a flow of calculation of a change in the center of gravity. The piano permanent type sensor system measures a load in a non-seated state (S31). The piano permanent type sensor system measures a load in a seated state (S32). Then, the piano permanent type sensor system calculates the center of gravity and the seated position based on the load in the non-seated state and the load in the seated state (S33). Thus, the piano permanent type sensor system can appropriately compare the habit of the sitting with those of others by calculating the center of gravity and the sitting position. Then, the piano permanent type sensor system measures a load during the performance (S34). Then, the piano permanent type sensor system calculates a change in the center of gravity based on the center of gravity, the sitting position, and the load during the performance (S35). Thus, the piano permanent type sensor system can appropriately compare the habit of the way of moving the body with those of others by calculating the change in the center of gravity.

### <3.6. Other application examples>

Embodiments of the present disclosure are not limited to the above-described examples, and can be applied to various applications. Various application examples of the embodiment of the present disclosure will be briefly described below.

### (First application example)

Furthermore, in the above description, the case where the embodiment of the present disclosure is applied to playing the piano is described, but the present embodiment can also be applied to playing other musical instruments. For example, the present embodiment can also be applied to other keyboard musical instruments (organ, chamber, synthesizer, and the like), string musical instruments (violin, cello, and the like), percussion musical instruments (drum), wind musical instruments (flute, oboe, clarinet, trumpet, and the like), and the like. Specifically, the sensor device 10 according to the present embodiment can detect motions of fingers, legs, a neck, a throat, and the like of a player and positions of strings and holes to be pressed even in performance of the above-described various musical instruments. More specifically, the movement of the tongue of the player in the oral cavity can be detected by the MRI described above. Furthermore, the present embodiment is not limited to application to playing a musical instrument, but can also be applied to singing and whistling.

### (Second application example)

Furthermore, embodiments of the present disclosure can be applied to a performance other than music. For example, the present embodiment can be used for training for vocalization (English utterance, speech, etc.), training for sports, a rehabilitation (rehabilitation for improvement in physical paralysis, etc.), a game, and a medical surgery (preventive endoscope training, etc.), training for driving of a vehicle (car, bicycle, wheelchair, airplane, etc.), training for operating a device (construction machine, etc.), skill training for creating an art work and a craft work (painting, handwriting, origami, etc.), and the like. Furthermore, as described above, the present embodiment can also be applied to image training.

### <<4. Summary>>

As described above, according to the embodiment of the present disclosure described above, it is possible to provide an information processing device, an information processing method, and a program capable of assisting effective acquisition of the performance according to the embodiment of the present disclosure described above.

### <<5. Hardware configuration>>

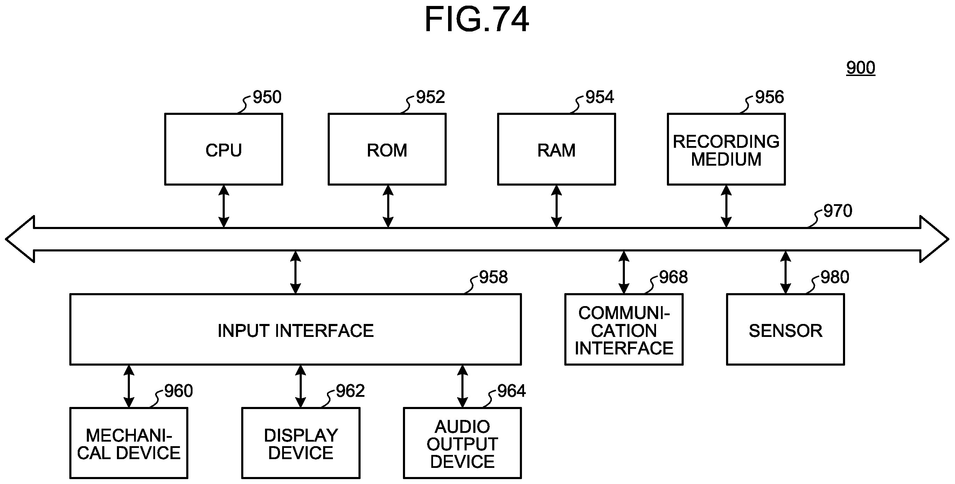

FIG. 74 is an explanatory diagram illustrating an example of a hardware configuration of an information processing device 900 according to the present embodiment. In FIG. 74, the information processing device 900 illustrates an example of a hardware configuration of the server 30 described above.

The information processing device 900 includes, for example, a CPU 950, a ROM 952, a RAM 954, a recording medium 956, and an input/output interface 958. Furthermore, the information processing device 900 includes a force sense device 960, a display device 962, an audio output device 964, a communication interface 968, and a sensor 980. Furthermore, the information processing device 900 connects the respective components by, for example, a bus 970 as a data transmission path.

### (CPU 950)

The CPU 950 includes, for example, one or more processors including an arithmetic circuit such as a CPU, various processing circuits, and the like, and functions as the main control unit 340 that controls the entire information processing device 900.

### (ROM 952 and RAM 954)

The ROM 952 stores programs used by the CPU 950, control data such as calculation parameters, and the like. The RAM 954 temporarily stores, for example, a program executed by the CPU 950. The ROM 952 and the RAM 954 function as, for example, the storage unit 370 described above in the information processing device 900.

### (Recording medium 956)

The recording medium 956 functions as the storage unit 370 described above to store, for example, various pieces of data such as data related to the information processing method according to the present embodiment and various applications. Here, examples of the recording medium 956 include a magnetic recording medium such as a hard disk, and a non-volatile memory such as a flash memory. Furthermore, the recording medium 956 may be detachable from the information processing device 900.

### (Input/output interface 958, force sense device 960, display device 962, and audio output device 964)

The input/output interface 958 connects, for example, the force sense device 960, the display device 962, the audio output device 964, and the like. Examples of the input/output interface 958 include a Universal Serial Bus (USB) terminal, a digital visual interface (DVI) terminal, a High-Definition Multimedia Interface (HDMI) (registered trademark) terminal, various processing circuits, and the like.

The force sense device 960 functions as the force sense mechanism 710 described above, the display device 962 functions as the display unit 714 described above, and the audio output device 964 functions as the audio output unit 716 described above. Examples of the display device 962 include a liquid crystal display, an organic electro-luminescence (EL) display, and the like.

Note that it goes without saying that the input/output interface 958 can be connected to an external device such as an external operation input device (for example, a keyboard, a mouse, or the like), an external display device, and the like of the information processing device 900.

### (Communication interface 968)

The communication interface 968 is communication means included in the information processing device 900 functioning as the communication unit 360, and functions as a communication unit (not illustrated) for performing wireless or wired communication with an external device via the network 90 (or directly). Here, examples of the communication interface 968 include, for example, a communication antenna and a radio frequency (RF) circuit (radio communication), an IEEE 802.15.1 port and a transmission/reception circuit (radio communication), an IEEE 802.11 port and a transmission/reception circuit (radio communication), or a local area network (LAN) terminal and a transmission/reception circuit (wired communication), and the like.

An example of the hardware configuration of the information processing device 900 is described above. Note that the hardware configuration of the information processing device 900 is not limited to the configuration illustrated in FIG. 74. Specifically, each of the above-described components may be configured using general-purpose members, or may be configured by hardware specialized for the function of each component. Such a configuration can be appropriately changed according to the technical level at the time of implementation.

For example, the information processing device 900 may not include the communication interface 968 in a case of communicating with an external device or the like via a connected external communication device or in a case of a configuration of performing the process in a standalone manner. Furthermore, the communication interface 968 may have a configuration capable of communicating with one or more external devices by a plurality of communication methods.

Further, the information processing device according to the present embodiment may be applied to a system including a plurality of devices, which is premised on connection to a network (or communication between each device), such as cloud computing. That is, the information processing device according to the present embodiment described above can be realized as, for example, an information processing platform that performs processing related to the information processing method according to the present embodiment by a plurality of devices.

### <<6. Supplement>>

Note that, the present embodiment of the present disclosure described above may include, for example, a program for making a computer function as an information processing device according to the present embodiment, and a non-temporary tangible medium in which the program is recorded. Further, the program may be distributed via a communication line (including radio communication) such as the Internet.

Furthermore, each step in the processing of the embodiment of the present disclosure described above may not necessarily be processed in the described order. For example, each step may be processed in an appropriately reordered manner. Further, each step may be partially processed in parallel or individually instead of being processed in chronological order. Further, the processing method of each step does not necessarily have to be processed according to the described method, and may be processed by another method by another functional unit, for example.

The preferred embodiments of the present disclosure have been described in detail with reference to the accompanying drawings, but the technical scope of the present disclosure is not limited to such examples. It is obvious that those skilled in the art in the technical field of the present disclosure can find various revisions and modifications within the scope of a technical concept described in claims, and it should be understood that these revisions and modifications will also be naturally come under the technical scope of the present disclosure.

Furthermore, the effects described in the present specification are merely illustrative or exemplified effects, and are not limitative. That is, the technique according to the present disclosure can accomplish other effects apparent to those skilled in the art from the description of the present specification, in addition to or instead of the effects described above.

Note that the following configuration also belong to the technical scope of the present disclosure.
(1) An information processing device comprising:
   an acquisition unit that acquires subjective evaluation information from a second user about each performance performed by at least part of a body of a first user moving;
   a learning unit that performs machine learning on a relationship between the each performance and the corresponding subjective evaluation information and generates relationship information between the each performance and the corresponding subjective evaluation information; and
   a presentation unit that presents feedback information to the second user based on the relationship information.
(2) The information processing device according to (1) of the above, wherein the performance is calculated based on primary information that is information directly related to a sound.
(3) The information processing device according to (1) or (2) of the above, wherein the presentation unit presents the feedback information based on relationship information obtained by performing machine learning on a relationship between primary information that is information directly related to sound and secondary information that is physical information during a performance.
(4) The information processing device according to any one of (1) to (3) of the above, wherein the presentation unit performs presentation to a terminal device in which an application that presents the feedback information is installed based on a physical function of the first user measured in advance at a time other than at a time of a performance using an application that measures the physical function and a performance of the first user measured at the time of a performance using an application that measures the performance.
(5) The information processing device according to any one of (1) to (4) of the above, wherein the performance is represented by at least one of a motion pattern, a motion speed, motion accuracy, and an amount of motion of the motion element of the first user in the performance, and a state of a result caused by the performance.
(6) The information processing device according to (5) of the above, wherein the acquisition unit acquires the subjective evaluation information about sound data obtained from a sound collection device that senses sound generated by the performance or video data obtained from an imaging device that images the first user.
(7) The information processing device according to (6) of the above, wherein the acquisition unit acquires, as the subjective evaluation information, information about sensibility of the second user for the sound data or the video data.
(8) The information processing device according to (7) of the above, wherein the acquisition unit acquires, as the sensibility information, sensing data obtained from a biological information sensor worn by the second user.
(9) The information processing device according to (8) of the above, wherein the biological information sensor senses at least one of a heart rate, a pulse, an electroencephalogram, respiration, sweating, a myoelectric potential, a skin temperature, a skin electrical resistance, eye motion, and a pupil diameter of the second user.
(10) The information processing device according to any one of (1) to (9) of the above, further comprising:
   a selection unit that selects a performance of the first user associated with the subjective evaluation information designated by the second user based on the relationship information; and
   a comparison unit that compares the selected performance of the first user with a performance of the second user associated with the performance of the first user to extract a difference therebetween.
(11) The information processing device according to any one of (1) to (10) of the above, further including a selection unit that selects a performance of the first user associated with the subjective evaluation information designated by the second user based on the relationship information, and a comparison unit that compares a first feature amount characterizing the selected performance of the first user with a second feature amount characterizing a performance of the second user associated with the performance of the first user to extract a difference therebetween.
(12) The information processing device according to (11) of the above, wherein the comparison unit compares one or a plurality of pieces of sensing data indicating a state of a motion element in a performance of the first user with one or a plurality of pieces of sensing data indicating a state of a motion element in performance of the second user associated with the performance of the first user to extract a difference therebetween.
(13) The information processing device according to (11) of the above, further comprising:
   a calculation unit that performs a multivariate analysis on a plurality of pieces of sensing data representing a state of a motion element in a performance of the first user to extract a first feature amount characterizing the performance of the first user.
(14) The information processing device according to any one of (10) to (13) of the above, wherein the presentation unit presents the difference to the second user as the feedback information.
(15) The information processing device according to (14) of the above, further comprising:
   a storage unit that stores an association between the difference and a cause of the difference, wherein
   the presentation unit refers to the association to identify a cause associated with the difference, and presents as the feedback information.
(16) The information processing device according to (15) of the above, wherein the presentation unit further presents a solution for solving the cause.
(17) The information processing device according to any one of (1) to (16) of the above, wherein the presentation unit switches the feedback information to be presented to the second user depending on whether the second user is conducting a performance.
(18) The information processing device according to any one of (1) to (17) of the above, wherein the presentation unit presents the feedback information to the second user by at least one of causing a display device to display a predetermined image, causing a wearable device worn on a body of the second user to perform tactile stimulation on the second user, and causing an audio output device to output a predetermined sound.
(19) The information processing device according to any one of (10) to (18) of the above, wherein the presentation unit presents the feedback information to the second user by displaying in an animation manner a temporal change in information about at least one of an amount of motion, a motion speed, a motion acceleration, and motion accuracy in a performance of the second user.
(20) The information processing device according to (19) of the above, wherein the presentation unit performs an effect process on the animation display in accordance with the difference.
(21) The information processing device according to (20) of the above, wherein the presentation unit performs, as the effect process, at least one of a change in a shading process for the animation display, a change in a state of wire frame display in the animation display, or a change in a color, luminance, or transparency of the animation display.
(22) The information processing device according to any one of (1) to (21) of the above, wherein the presentation unit presents the feedback information based on sensing data obtained from a sensor provided on a musical instrument to be played by the first user.
(23) The information processing device according to any one of (1) to (22) of the above, wherein the presentation unit presents the feedback information based on sensing data obtained by measuring a physical function of the first user.
(24) The information processing device according to any one of (1) to (23) of the above, wherein the presentation unit presents the feedback information in which at least one of information about confirmation of a physical function of the first user, information about details of a performance of the first user, information about management of performance data when the first user plays an instrument, information about recommendation of a practice method to the first user, and information about a practice diary of the first user is included in a page configuration.
(25) The information processing device according to any one of (1) to (24) of the above, wherein the presentation unit presents the feedback information in which a display of each page in accordance with an operation by the first user or the second user is switchable.
(26) The information processing device according to any one of (1) to (25) of the above, wherein the presentation unit presents the feedback information in which a temporal change in a performance of the first user is indicated by a graph for each item.
(27) The information processing device according to any one of (1) to (26) of the above, wherein the presentation unit presents the feedback information in which an average of scores of the performance of each item calculated for respective fingers of the first user is displayed for each item.
(28) The information processing device according to any one of (1) to (27) of the above, wherein the presentation unit presents the feedback information which visualizes at least one of a touch and a pedal in a performance of the first user.
(29) The information processing device according to any one of (1) to (28) of the above, wherein the presentation unit presents the feedback information in which performance data predetermined as a model of a performance and performance data of the first user are displayed with the predetermined performance data superimposed on the performance data of the first user.
(30) The information processing device according to any one of (1) to (29) of the above, wherein the presentation unit presents the feedback information including a score of a performance of each item calculated based on a score based on sensing data obtained from a sensor provided on a musical instrument to be played of the first user and a score based on sensing data obtained by measuring a physical function of the first user.
(31) The information processing device according to any one of (1) to (30) of the above, wherein the presentation unit presents the feedback information in which performance data of the first user is capable of being sorted in order of selection according to an operation by the first user or the second user.
(32) The information processing device according to any one of (1) to (31) of the above, wherein the presentation unit presents the feedback information in which a display is switchable to imaging information from a predetermined viewpoint in accordance with an operation by the first user or the second user.
(33) The information processing device according to any one of (1) to (32) of the above, wherein the presentation unit presents the feedback information in which a practice method selected by the first user among a plurality of practice methods presented to the first user is added to a practice diary describing a content of a practice by the first user.
(34) The information processing device according to any one of (1) to (33) of the above, wherein the presentation unit presents, according to an operation by the second user on a practice diary displayable for each of the first users, the feedback information including information, posted by the second user, added to a practice diary of the each first user.
(35) The information processing device according to (33) or (34) of the above, wherein the presentation unit presents the feedback information in which among the contents of practices described in the practice diary in response to an operation by the first user or the second user on the practice diary, a content of a practice practiced by the first user is graphed.
(36) The information processing device according to any one of (1) to (35) of the above, wherein the presentation unit presents the feedback information including posture information of the first user estimated based on sensor information obtained from an inertial measurement unit and sensor information obtained from a depth sensor provided in the first user.
(37) The information processing device according to (36) of the above, wherein the presentation unit presents the feedback information including posture information of the first user estimated based on sensor information obtained from an inertial measurement unit provided below a pedal of the musical instrument.
(38) The information processing device according to (36) or (37) of the above, wherein the presentation unit presents the feedback information including information about a center-of-gravity movement based on a difference in load between a seated state and a non-seated state of the first user.
(39) An information processing method executed by a computer, the method comprising:
   acquiring subjective evaluation information from a second user about each performance performed by at least part of a body of a first user moving;
   performing machine learning on a relationship between the each performance and the corresponding subjective evaluation information and generating relationship information between the each performance and the corresponding subjective evaluation information; and
   presenting feedback information to the second user based on the relationship information.
(40) A program for causing a computer to implement:
   a function of acquiring subjective evaluation information from a second user about each performance performed by at least part of a body of a first user moving;
   a function of performing machine learning on a relationship between the each performance and the corresponding subjective evaluation information and generating relationship information between the each performance and the corresponding subjective evaluation information; and
   a function of presenting feedback information to the second user based on the relationship information.

### Reference Signs List

- 1: INFORMATION PROCESSING PLATFORM
- 10: SENSOR DEVICE
- 30: SERVER
- 70: PRESENTATION DEVICE
- 90: NETWORK
- 100: SENSOR UNIT
- 140, 340, 740: MAIN CONTROL UNIT
- 142, 342: DATA ACQUISITION UNIT
- 144, 344: PROCESSING UNIT
- 152, 354: OUTPUT CONTROL UNIT
- 160, 360, 760: COMMUNICATION UNIT
- 300: INPUT UNIT
- 310: OUTPUT UNIT
- 346: LEARNING UNIT
- 347: CALCULATION UNIT
- 348: SELECTION UNIT
- 350: COMPARISON UNIT
- 352: RECOMMENDATION UNIT
- 370, 770: STORAGE UNIT
- 372: DB
- 500: SENSING DATA
- 501: PERFORMANCE DATA
- 502,: 503 SUBJECTIVE EVALUATION INFORMATION
- 504: FEATURE AMOUNT
- 506: FEEDBACK INFORMATION
- 710: FORCE SENSE MECHANISM
- 714: DISPLAY UNIT
- 716: AUDIO OUTPUT UNIT
- 801: KEYBOARD DISPLAY SCREEN
- 802: PEAK OF MOVEMENT AMOUNT OF KEYBOARD
- 803: TEMPORAL CHANGE IN VERTICAL MOVEMENT OF KEYBOARD (IN THE PAST)
- 950: CPU
- 952: ROM
- 954: RAM
- 956: RECORDING MEDIUM
- 958: INPUT/OUTPUT INTERFACE
- 960: FORCE SENSE DEVICE
- 962: DISPLAY DEVICE
- 964: AUDIO OUTPUT DEVICE
- 968: COMMUNICATION INTERFACE
- 970: BUS
- 980: SENSOR

## Claims

1. An information processing device comprising:
an acquisition unit that acquires subjective evaluation information from a second user about each performance performed by at least part of a body of a first user moving;
a learning unit that performs machine learning on a relationship between the each performance and the corresponding subjective evaluation information and generates relationship information between the each performance and the corresponding subjective evaluation information; and
a presentation unit that presents feedback information to the second user based on the relationship information.

2. The information processing device according to claim 1, wherein the performance is calculated based on primary information that is information directly related to a sound.

3. The information processing device according to claim 1, wherein the presentation unit presents the feedback information based on relationship information obtained by performing machine learning on a relationship between primary information that is information directly related to sound and secondary information that is physical information during a performance.

4. The information processing device according to claim 1, wherein the presentation unit performs presentation to a terminal device in which an application that presents the feedback information is installed based on a physical function of the first user measured in advance at a time other than at a time of a performance using an application that measures the physical function and a performance of the first user measured at the time of a performance using an application that measures the performance.

5. The information processing device according to claim 1, wherein the acquisition unit acquires the subjective evaluation information about sound data obtained from a sound collection device that senses sound generated by the performance or video data obtained from an imaging device that images the first user.

6. The information processing device according to claim 5, wherein the acquisition unit acquires, as the subjective evaluation information, information about sensibility of the second user for the sound data or the video data.

7. The information processing device according to claim 6, wherein the acquisition unit acquires, as the sensibility information, sensing data obtained from a biological information sensor worn by the second user.

8. The information processing device according to claim 1, further comprising:
a selection unit that selects a performance of the first user associated with the subjective evaluation information designated by the second user based on the relationship information; and
a comparison unit that compares the selected performance of the first user with a performance of the second user associated with the performance of the first user to extract a difference therebetween.

9. The information processing device according to claim 8, wherein the comparison unit compares one or a plurality of pieces of sensing data indicating a state of a motion element in a performance of the first user with one or a plurality of pieces of sensing data indicating a state of a motion element in performance of the second user associated with the performance of the first user to extract a difference therebetween.

10. The information processing device according to claim 8, further comprising:
a calculation unit that performs a multivariate analysis on a plurality of pieces of sensing data representing a state of a motion element in a performance of the first user to extract a first feature amount characterizing the performance of the first user.

11. The information processing device according to claim 9, further comprising:
a storage unit that stores an association between the difference and a cause of the difference, wherein
the presentation unit refers to the association to identify a cause associated with the difference, and presents, as the feedback information, a solution for solving the cause.

12. The information processing device according to claim 1, wherein the presentation unit presents the feedback information to the second user by at least one of causing a display device to display a predetermined image, causing a wearable device worn on a body of the second user to perform tactile stimulation on the second user, and causing an audio output device to output a predetermined sound.

13. The information processing device according to claim 8, wherein the presentation unit presents the feedback information to the second user by displaying in an animation manner a temporal change in information about at least one of an amount of motion, a motion speed, a motion acceleration, and motion accuracy in a performance of the second user.

14. The information processing device according to claim 1, wherein the presentation unit presents the feedback information in which a temporal change in a performance of the first user is indicated by a graph for each item.

15. The information processing device according to claim 1, wherein the presentation unit visualizes at least one of a touch and a pedal in a performance of the first user, and presents feedback information in which performance data predetermined as a model of a performance and performance data of the first user are displayed with the predetermined performance data superimposed on the performance data of the first user.

16. The information processing device according to claim 1, wherein the presentation unit presents the feedback information including a score of a performance of each item calculated based on a score based on sensing data obtained from a sensor provided on a musical instrument to be played of the first user and a score based on sensing data obtained by measuring a physical function of the first user.

17. The information processing device according to claim 1, wherein the presentation unit presents the feedback information in which a practice method selected by the first user among a plurality of practice methods presented to the first user is added to a practice diary describing a content of a practice by the first user.

18. The information processing device according to claim 1, wherein the presentation unit presents, according to an operation by the second user on a practice diary displayable for each of the first users, the feedback information including information, posted by the second user, added to a practice diary of the each first user.

19. An information processing method executed by a computer, the method comprising:
acquiring subjective evaluation information from a second user about each performance performed by at least part of a body of a first user moving;
performing machine learning on a relationship between the each performance and the corresponding subjective evaluation information and generating relationship information between the each performance and the corresponding subjective evaluation information; and
presenting feedback information to the second user based on the relationship information.

20. A program for causing a computer to implement:
a function of acquiring subjective evaluation information from a second user about each performance performed by at least part of a body of a first user moving;
a function of performing machine learning on a relationship between the each performance and the corresponding subjective evaluation information and generating relationship information between the each performance and the corresponding subjective evaluation information; and
a function of presenting feedback information to the second user based on the relationship information.
